# EUROPEAN PATENT APPLICATION

(11) **EP 4 641 942 A1**
(43) Date of publication of application: **29.10.2025**
(21) Application number: 24738484.5
(22) Date of filing: 03.01.2024
(51) Int. Cl.: H04B 7/06

(54) **COMMUNICATION METHOD, APPARATUS AND SYSTEM AND COMPUTER RELATED APPARATUS**

(30) Priority: 06.01.2023 CN 202310020233; 06.04.2023 CN 202310388397
(71) Applicant: Huawei Technologies Co., Ltd., Shenzhen, Guangdong 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN)
(74) Representative: Isarpatent
(86) International application number: PCT/CN2024/070316
(87) International publication number: WO 2024/146551

(57) **Abstract**

This application discloses a communication method, apparatus, and system, and a computer-related apparatus. The method includes: receiving first indication information; determining first channel state information based on L resource packages in M resource packages indicated by the first indication information; and sending the first channel state information. L is greater than 1, the resource package is associated with one or more channel state information reference signal resources, the first channel state information includes L channel quality indicators, the L channel quality indicators correspond to L channel state information reference signal resources, and the L channel state information reference signal resources respectively belong to the L resource packages.

## Description

This application claims priorities to Chinese Patent Application No. 202310020233.7, filed with the China National Intellectual Property Administration on January 6, 2023, and entitled "COMMUNICATION METHOD, APPARATUS, SYSTEM, AND COMPUTER-RELATED APPARATUS", and to Chinese Patent Application No. 202310388397.5, filed with the China National Intellectual Property Administration on April 6, 2023, and entitled "COMMUNICATION METHOD, APPARATUS, SYSTEM, AND COMPUTER-RELATED APPARATUS", both of which are incorporated herein by reference in their entireties.

### TECHNICAL FIELD

This application relates to the field of communication technologies, and in particular, to a communication method, apparatus, and system, and a computer-related apparatus.

### BACKGROUND

With gradual evolution of communication systems, "low carbon", especially how to reduce energy consumption of network devices (for example, a base station), has attracted increasing attention in communication networks. Currently, a method for dynamically shutting down a part of transmit antennas may be used to reduce transmit power. When the antenna is dynamically shut down, a terminal device may perform channel state information (channel state information, CSI) measurements for different antenna shutdown cases, and report CSI measurement results to the network device, so that the network device performs data scheduling.

However, in each antenna shutdown case, the network device needs to indicate a corresponding CSI configuration. Due to a limitation of a capability of the terminal, a quantity of CSI reporting configurations configured by the network device for the terminal device is limited. As a result, the terminal device cannot report CSI in various antenna shutdown cases.

### SUMMARY

Embodiments of this application disclose a communication method, apparatus, and system, and a computer-related apparatus, to optimize resource configuration, and improve accuracy of CSI reporting. This facilitates a data scheduling effect on a network side.

According to a first aspect, an embodiment of this application discloses a first communication method. The method may be applied to a terminal device, or an apparatus (for example, a chip, a chip system, or a circuit) in the terminal device, or an apparatus that can be used in cooperation with the terminal device. The terminal device is used as an example below for description. The communication method includes: receiving first indication information; determining first channel state information based on L resource packages in the M resource packages indicated by the first indication information; and sending the first channel state information. L is greater than 1, the resource package is associated with one or more channel state information reference signal (channel state information reference signal, CSI-RS) resources, and the CSI-RS resource includes a time-frequency resource. The first channel state information indicates L channel quality indicators (channel quality indicators, CQIs), the L CQIs correspond to L CSI-RS resources, and the L CSI-RS resources are respectively associated with the L resource packages. In this way, resource configuration can be optimized, and the first channel state information including a plurality of CQIs can be reported, to improve accuracy of CSI reporting. This facilitates a data scheduling effect on a network side.

Optionally, the resource package may be a CSI-RS resource set (for example, a CSI Resource Set, where the CSI Resource Set may be configured by using an NZP-CSI-RS-ResourceSet), or may be a CSI-RS resource group, or may be a CSI resource configuration (for example, a CSI-ResourceConfig) or the like. This is not limited herein.

Optionally, the first indication information may be a CSI reporting configuration (for example, a CSI-ReportConfig). In this way, the terminal device may report CSI in a CSI reporting instance (for example, a CSI Reporting instance) based on a parameter indicated in the CSI reporting configuration.

Optionally, the M resource packages are respectively associated with M antenna shutdown cases. A type of the antenna shutdown case is not limited in this application, and quantities of CSI-RS ports respectively corresponding to the M resource packages may not be completely the same. Alternatively, power offsets respectively corresponding to the M resource packages may not be completely the same. Alternatively, synchronization signal power offsets respectively corresponding to the M resource packages are not completely the same. Alternatively, quantities of ports respectively corresponding to the M resource packages are the same, and indexes of the ports respectively corresponding to the M resource packages are different. The power offset may be an assumed power offset of a physical downlink shared channel (physical downlink shared channel, PDSCH) relative to the CSI-RS resource. In this way, a network device may configure CSI-RS resource sets in different antenna shutdown cases based on one or more of the quantities of CSI-RS ports, the power offsets, the synchronization signal power offsets, the quantities of ports, the indexes of the ports, and the like.

Optionally, the first channel state information includes channel state information corresponding to the L resource packages. In other words, the first channel state information includes L pieces of channel state information determined based on the L resource packages.

In some feasible examples, that the first channel state information indicates the L CQIs may include: L first CQIs. The L first CQIs are in one-to-one correspondence with the L CSI-RS resources. The first channel state information may alternatively include one second CQI and L-1 differential CQI values. The second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources. In this way, CQIs of different CSI-RS resources may be reported, and resource overheads may be reduced by reporting the differential CQI value.

In some feasible examples, the differential CQI value is a wideband differential CQI value, and an absolute value of the wideband differential CQI value is greater than or equal to 1 or the absolute value of the wideband differential CQI value is greater than or equal to 2. Optionally, the absolute value of the wideband differential CQI value is greater than 0.

Optionally, the terminal device may report the L-1 wideband differential CQI values based on an index that is of the wideband differential CQI value and that is preconfigured by the network device or predefined, to reduce the resource overheads.

Optionally, the terminal device may report L-1 sub-band differential CQI values based on an index that is of the sub-band differential CQI value and that is preconfigured by the network device or predefined, to reduce the resource overheads.

Optionally, the L first CQIs include L wideband CQIs corresponding to the L CSI-RS resources, or the L wideband CQIs and L sub-band CQIs that correspond to the L CSI-RS resources. The L sub-band CQIs include L sub-band CQIs of sub-bands corresponding to the L CSI-RS resources, or include one sub-band CQI of each of L sub-bands corresponding to the L CSI-RS resources.

Optionally, the second CQI and the L-1 differential CQI values may include one wideband CQI and L-1 wideband differential CQI values, or may include one wideband CQI, L-1 wideband differential CQI values, and one sub-band CQI and L-1 sub-band differential CQI values that correspond to the first CSI-RS resource.

In some feasible examples, the first CSI-RS resource is a CSI-RS resource with a smallest index in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of the network device.

In some feasible examples, the first channel state information further includes one first precoding matrix indicator (precoding matrix indicator, PMI) or L second PMIs. The first PMI corresponds to the L CSI-RS resources, and the L second PMIs are in one-to-one correspondence with the L CSI-RS resources.

In some feasible examples, the L first CQIs are obtained through calculation respectively based on the L second PMIs; or the second CQI and the L-1 differential CQI values are obtained through calculation respectively based on the L second PMIs; or the L first CQIs are obtained through calculation based on the first PMI; or the second CQI and the L-1 differential CQI values are obtained through calculation based on the first PMI.

In some feasible examples, the communication method further includes: determining the first PMI based on the CSI-RS resource with the smallest index in the L CSI-RS resources; or determining the first PMI based on a CSI-RS resource with highest power in the L CSI-RS resources; or determining the first PMI based on one of the L CSI-RS resources indicated by the network device.

In some feasible examples, the first channel state information further includes one first rank indicator (rank indicator, RI) or L second RIs. The first RI corresponds to the L CSI-RS resources, and the L second RIs are in one-to-one correspondence with the L CSI-RS resources.

Optionally, the L first CQIs are obtained through calculation respectively based on the L second RIs; or the second CQI and the L-1 differential CQI values are obtained through calculation respectively based on the L second RIs; or the L first CQIs are obtained through calculation based on the first RI; or the second CQI and the L-1 differential CQI values are obtained through calculation based on the first RI.

It may be understood that, in the foregoing examples, the L first CQIs are obtained through calculation based on the one or L PMIs or the one or L RIs. Alternatively, the second CQI and the L-1 differential CQI values are obtained through calculation based on the one or L PMIs or the one or L RIs. In this way, a plurality of PMIs or RIs may be reported, and the first channel state information can be obtained based on the plurality of PMIs or RIs, to improve the accuracy of CSI reporting. Further, because a difference between the PMIs in the CSI-RS resource sets and a difference between the RIs in the CSI-RS resource sets are small, one PMI or RI may be reported, and the first channel state information is reported by using a CQI or a differential CQI value obtained based on the PMI. This can further reduce reporting overheads, and reduce calculation complexity of the terminal device.

Optionally, the first channel state information further includes L indexes, and the L indexes are respectively indexes of the L CSI-RS resources.

In some feasible examples, the communication method further includes: determining X CSI-RS resource combinations. Each of the X CSI-RS resource combinations includes K CSI-RS resources, the K CSI-RS resources are respectively associated with K different resource packages, and the K resource packages include the M resource packages. In this way, CSI reporting may be performed per CSI-RS resource combination. This helps save resources. In addition, reported CSI includes CSI-RS resources in the resource packages, so that reporting efficiency can be improved.

Optionally, the communication method further includes: receiving indication information #A. The indication information #A indicates the X CSI-RS resource combinations.

Optionally, the indication information #A and the first indication information are carried in a same piece of signaling. In this way, configuration information of the M resource packages and configuration information of the X CSI-RS resource combinations may be indicated in the same piece of signaling. This helps save configuration resources.

In some feasible examples, the first channel state information further includes an index of a first CSI-RS resource combination in the X CSI-RS resource combinations or an index of one CSI-RS resource in the first CSI-RS resource combination. The first CSI-RS resource combination includes the L CSI-RS resources. The first CSI-RS resource combination may be any CSI-RS resource combination in the X CSI-RS resource combinations. This is not limited herein. To be specific, when the CSI-RS resource combination is included, the first channel state information of the CSI-RS resource combination may be reported, or the first channel state information of the CSI-RS resource in the CSI-RS resource combination may be reported.

In some feasible examples, CSI-RS resources in at least two of the M resource packages have a same time domain resource and different frequency domain resources; or CSI-RS resources in at least two of the M resource packages have a same time-frequency resource. In this way, the same time domain resource or the same time-frequency resource is configured, so that resources can be saved.

Optionally, the frequency domain resources of the CSI-RS resources that are in the at least two resource packages and that have the same time domain resource and different frequency domain resources may be set in the following two manners. In a setting manner 1, the CSI-RS resources in the at least two resource packages may be set on different REs in a same frequency domain resource block. In a setting manner 2, the frequency domain resources of the CSI-RS resources in the at least two resource packages may be set on different frequency domain resource blocks.

Optionally, the communication method further includes: receiving indication information #B. The indication information #B indicates the L resource packages. In this way, the first channel state information may be determined based on the specified L resource packages.

In some feasible examples, the communication method further includes: determining a first quantity. The first quantity is a quantity of processing units occupied by the terminal device to calculate the first channel state information on the L CSI-RS resources, and the first quantity is less than or equal to L. In this way, the terminal device may determine (calculate) the channel state information by using a spatial domain correlation between the L CSI-RS resources, to save computing resources, for example, reduce occupation of processing units (CSI processing units).

Optionally, the communication method further includes: sending indication information #C. The indication information #C indicates the first quantity. In this way, accuracy of resource allocation can be improved.

Optionally, the communication method further includes: sending indication information indicating the first quantity. For example, the terminal device indicates a value of the first quantity, or the terminal device indicates a value of a first coefficient, where the first quantity is a product of the first coefficient and L.

In some feasible examples, the L resource packages are associated with B CSI-RS resources, and the communication method further includes: determining a second quantity. The second quantity is a quantity of processing units occupied by the terminal device to calculate the first channel state information corresponding to the L resource packages, and the second quantity is a positive integer less than B. In this way, a part of the B CSI-RS resources are used for channel measurement, so that computing resources can be saved, for example, occupation of processing units (CPUs) is reduced.

Optionally, the second quantity is equal to A+L-1. A is a quantity of CSI-RS resources included in a first resource package. In this way, a CSI-RS resource that is in the B CSI-RS resources and that is other than the first resource package and the first CSI-RS resource combination occupies no CSI processing unit.

Optionally, the communication method may further include: determining the first channel state information based on the L CSI-RS resources and the A CSI-RS resources. The A CSI-RS resources belong to the first resource package in the L resource packages. The CSI-RS resource in the first resource package may be predefined, or may be preconfigured by the network device, or may be a reference resource obtained through an indication of configuration information of the network device. The first resource package is not limited in this application. It should be understood that, by performing this step, the second quantity may be less than B. For example, the second quantity is equal to A+L-1.

Optionally, determining the first channel state information based on the L CSI-RS resources and the A CSI-RS resources includes: determining a first CSI-RS resource based on the A CSI-RS resources in the first resource package; and determining the first channel state information based on a first CSI-RS combination associated with the first CSI-RS resource. In this way, measurements for all CSI-RS resources can be avoided, and measurement effectiveness can be improved.

According to a second aspect, an embodiment of this application discloses a second communication method. The method may be applied to a terminal device, or an apparatus in the terminal device, or an apparatus that can be used in cooperation with the terminal device. The terminal device is used as an example below for description. The communication method includes: receiving first indication information; determining second channel state information based on L resource packages in M resource packages indicated by the first indication information; and sending the second channel state information. L is greater than 1, the second channel state information includes one CQI, the CQI corresponds to a second CSI-RS resource, and the second CSI-RS resource is included in the L resource packages. In this way, resource configuration can be optimized, and the second channel state information including the CQI can be reported, thereby reducing reporting resource overheads.

In some feasible examples, the second channel state information further includes at least one of the following corresponding to the second CSI-RS resource: one PMI, one RI, and one index.

In some feasible examples, CSI-RS resources in at least two of the M resource packages have a same time domain resource and different frequency domain resources; or CSI-RS resources in at least two of the M resource packages have a same time-frequency resource. In this way, the same time domain resource or the same time-frequency resource is configured, so that resources can be saved.

Optionally, the frequency domain resources of the CSI-RS resources that are in the at least two resource packages and that have the same time domain resource and different frequency domain resources may be set in the following two manners. In a setting manner 1, the CSI-RS resources in the at least two resource packages may be set on different REs in a same frequency domain resource block. In a setting manner 2, the frequency domain resources of the CSI-RS resources in the at least two resource packages may be set on different frequency domain resource blocks.

Optionally, the communication method further includes: receiving indication information #B. The indication information #B indicates the L resource packages. In this way, the second channel state information may be determined based on the specified L resource packages.

In some feasible examples, the communication method further includes: determining a first quantity. The first quantity is a quantity of processing units occupied by the terminal device to calculate the second channel state information on the L CSI-RS resources, and the first quantity is a positive integer less than or equal to L. In this way, the terminal device may determine (calculate) the channel state information by using a spatial domain correlation between the L CSI-RS resources, to save computing resources, for example, reduce occupation of processing units (CSI processing units).

Optionally, the communication method further includes: sending indication information #C. The indication information #C indicates the first quantity. In this way, accuracy of resource allocation can be improved.

Optionally, the terminal device sends indication information indicating the first quantity. For example, the terminal device indicates a value of the first quantity, or the terminal device indicates a value of a first coefficient, where the first quantity is a product of the first coefficient and L.

In some feasible examples, the L resource packages are associated with B CSI-RS resources, and the communication method further includes: determining a second quantity. The second quantity is a quantity of processing units occupied by the terminal device to calculate the second channel state information corresponding to the L resource packages, and the second quantity is a positive integer less than B. In this way, a part of the B CSI-RS resources are used to perform a channel measurement, so that computing resources can be saved.

Optionally, the second quantity is equal to A+L-1. A is a quantity of CSI-RS resources included in a first resource package. In this way, a CSI-RS resource that is in the B CSI-RS resources and that is other than the first resource package and the first CSI-RS resource combination occupies no CSI processing unit.

Optionally, the communication method may further include: determining the second channel state information based on the L CSI-RS resources and the A CSI-RS resources. The A CSI-RS resources belong to the first resource package in the L resource packages. The CSI-RS resource in the first resource package may be predefined, or may be preconfigured by a network device, or may be a reference resource obtained through an indication of configuration information of the network device. The first resource package is not limited in this application. It should be understood that, by performing this step, the second quantity may be less than B. For example, the second quantity is equal to A+L-1.

Optionally, determining the second channel state information based on the L CSI-RS resources and the A CSI-RS resources includes: determining a first CSI-RS resource based on the A CSI-RS resources in the first resource package; and determining the second channel state information based on a first CSI-RS combination associated with the first CSI-RS resource. In this way, measurements for all CSI-RS resources can be avoided, and measurement effectiveness can be improved.

According to a third aspect, an embodiment of this application discloses a third communication method. The method may be applied to a terminal device, or an apparatus in the terminal device, or an apparatus that can be used in cooperation with the terminal device. The terminal device is used as an example below for description. The communication method includes: receiving second indication information; and determining a second quantity based on the second indication information. The second indication information indicates B CSI-RS resources, and the CSI-RS resource includes a time-frequency resource. The second quantity is a quantity of CSI processing units occupied for calculating channel state information, the second quantity is a positive integer less than B, and the CSI-RS resource includes the time-frequency resource. In this way, a quantity of CSI processing units occupied for channel measurement can be reduced, an unnecessary measurement is avoided, and reporting resource overheads can be reduced.

In some feasible examples, the B CSI-RS resources are CSI-RS resources included in C CSI-RS resource combinations. In this way, the channel measurement may be performed per CSI-RS resource combination. When the CSI-RS resources in the CSI-RS resource combination have a spatial domain correlation, the spatial domain correlation between the CSI-RS resources may be further used to reduce complexity of determining (calculating) channel information.

Optionally, quantities of CSI-RS resources that are in two CSI-RS resource combinations and that are in the B CSI-RS resources are equal or unequal.

Optionally, the communication method may further include: determining the C CSI-RS resource combinations associated with the B CSI-RS resources.

Optionally, the communication method may further include: receiving indication information #D. The indication information #D indicates the C CSI-RS resource combinations. The indication information #D and second indication information may be carried in a same piece of signaling. In this way, the B CSI-RS resources and the C CSI-RS resource combinations may be indicated in the same piece of indication information. This helps save configuration resources.

Optionally, the communication method may further include: receiving indication information #E. The indication information #E indicates a configuration of the CSI-RS resource combination, and may be a CSI-RS resource combination division manner, an association relationship between the CSI-RS resource and the CSI-RS resource combination, or the like. In this way, the C CSI-RS resource combinations associated with the B CSI-RS resources may be determined based on the indication information #E. The indication information #E and the second indication information may be carried in a same piece of signaling. In this way, the B CSI-RS resources and the C CSI-RS resource combinations associated with the B CSI-RS resources may be indicated in the same piece of indication information. This helps save configuration resources.

Optionally, the C CSI-RS resource combinations include a fifth CSI-RS resource combination, the fifth CSI-RS resource combination includes a fifth CSI-RS resource and a sixth CSI-RS resource, a quantity of ports of the fifth CSI-RS resource is less than a quantity of ports of the sixth CSI-RS resource, and a time-frequency resource included in the fifth CSI-RS resource is included in a time-frequency resource included in a second CSI-RS resource.

In some feasible examples, the B CSI-RS resources include C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit. In this way, channel measurements for all CSI-RS resources that are in the B CSI-RS resources and that are other than the C reference resources and the first CSI-RS resource combination can be avoided, thereby saving resources.

Alternatively, in some feasible examples, the B CSI-RS resources include C reference resources, the C reference resources respectively belong to the C CSI-RS resource combinations, and a CSI-RS resource that is in the B CSI-RS resources and that is other than the C reference resources and the first CSI-RS resource combination occupies no CSI processing unit. In other words, none of the CSI-RS resources that are in the B CSI-RS resources and that are other than the C reference resources and the first CSI-RS resource combination is used for channel measurement, so that the resources can be further saved.

In some feasible examples, the second quantity is equal to C+E-1, and each of the C CSI-RS resource combinations has a same quantity of CSI-RS resources. E is a quantity of CSI-RS resources in the first CSI-RS resource combination, or E is a quantity of CSI-RS resources in a CSI-RS resource combination with a largest quantity of CSI-RS resources in the C CSI-RS resource combinations. In this way, sufficient resources may be configured for channel measurement, to help improve a success rate of reporting.

In some feasible examples, the communication method may further include: sending the channel state information. The channel state information includes an index of the first CSI-RS resource combination, or the channel state information includes an index of one CSI-RS resource in the first CSI-RS resource combination. In this way, resource configuration can be optimized, and the channel state information including one or more CQIs can be reported, to improve accuracy of CSI reporting. This facilitates a data scheduling effect on a network side.

In some feasible examples, the channel state information includes an index of the first CSI-RS resource combination, or the channel state information includes an index of one CSI-RS resource in the first CSI-RS resource combination.

In some feasible examples, the channel state information includes at least one of the following: one or L CQIs, one or L PMIs, and one or L RIs. The L CQIs correspond to L CSI-RS resources, the L PMIs correspond to the L CSI-RS resources, and the L RIs correspond to the L CSI-RS resources. The L CSI-RS resources are CSI-RS resources included in the first CSI-RS resource combination, the first CSI-RS resource combination includes a first CSI-RS resource, the CQI corresponds to the first CSI-RS resource, the PMI corresponds to the first CSI-RS resource, and the RI corresponds to the first CSI-RS resource. In this way, by implementing the examples, the resource configuration can be optimized, and the accuracy of CSI reporting can be improved. This facilitates the data scheduling effect on the network side.

Optionally, the channel state information includes one second CQI and L-1 differential CQI values. In this way, the resource overheads can be further reduced.

In some feasible manners, the second CQI corresponds to a second CSI-RS resource, the L-1 differential CQI values correspond to L-1 third CSI-RS resources, and the second CSI-RS resource and the L-1 third CSI-RS resources are included in the B CSI-RS resources.

Optionally, a time-frequency resource of any one of the L-1 CSI-RS resources is included in a time-frequency resource of the second CSI-RS resource. Alternatively, a port included in any one of the L-1 CSI-RS resources is a subset of a port included in the second CSI-RS resource.

Optionally, the L PMIs correspond to the L CSI-RS resources, the L RIs correspond to the L CSI-RS resources, the L CSI-RS resources include the second CSI-RS resource and the L-1 third CSI-RS resources, the PMI corresponds to the second CSI-RS resource, and the RI corresponds to the second CSI-RS resource. In this way, the resource configuration can be optimized, and the accuracy of CSI reporting can be improved. This facilitates the data scheduling effect on the network side.

In some other feasible manners, the second CQI and the L-1 differential CQI values correspond to a second CSI-RS resource, and the second CQI and the L-1 differential CQI values correspond to L power control offsets (for example, powercontroloffsets) of the second CSI-RS resource.

Optionally, the L PMIs correspond to the L power control offsets of the second CSI-RS resource, the L RIs correspond to the L power control offsets of the second CSI-RS resource, the PMI corresponds to one power control offset (for example, a largest power control offset or a first power control offset) in the L power control offsets of the second CSI-RS resource, and the RI corresponds to one power control offset (for example, a largest power control offset or a first power control offset) in the L power control offsets of the second CSI-RS resource. In this way, the resource configuration can be optimized, and the accuracy of CSI reporting can be improved. This facilitates the data scheduling effect on the network side.

In some feasible examples, the at least one of the CSI-RS resources that are in the B CSI-RS resources and that are other than the C reference resources and the first CSI-RS resource combination is not an active CSI-RS resource (Active CSI-RS resource), and a CSI-RS port of the at least one of the CSI-RS resources that are in the B CSI-RS resources and that are other than the C reference resources and the first CSI-RS resource combination is not an active CSI-RS port (Active CSI-RS port). In this way, all the B CSI-RS resources can be prevented from being configured as active CSI-RS resources, and all the CSI-RS ports corresponding to the B CSI-RS resources can also be prevented from being configured as active CSI-RS ports, so that channel state information is measured and reported in sufficient time-frequency resources. This helps save the resources.

Alternatively, in some feasible examples, the CSI-RS resource that is in the B CSI-RS resources and that is other than the C reference resources and the first CSI-RS resource combination is not an active CSI-RS resource, and a CSI-RS port of the CSI-RS resource that is in the B CSI-RS resources and that is other than the C reference resources and the first CSI-RS resource combination is not an active CSI-RS port. In other words, none of the CSI-RS resources that are in the B CSI-RS resources and that are other than the C reference resources and the first CSI-RS resource combination is used as an active CSI-RS resource for channel measurement, and none of the CSI-RS ports corresponding to the CSI-RS resources that are in the B CSI-RS resources and that are other than the C reference resources and the first CSI-RS resource combination is used as an active CSI-RS port for channel measurement, so that the resources can be further saved.

According to a fourth aspect, an embodiment of this application discloses a fourth communication method. The method may be applied to a network device, or an apparatus (for example, a chip, a chip system, or a circuit) in the network device, or an apparatus that can be used in cooperation with the network device. The network device is used as an example below for description. The communication method includes: sending first indication information; and receiving first channel state information. The first indication information indicates M resource packages, the resource package is associated with one or more CSI-RS resources, and the CSI-RS resource includes a time-frequency resource. The first channel state information indicates L CQIs, the L CQIs respectively correspond to L CSI-RS resources, the L CSI-RS resources are respectively associated with L resource packages, the L resource packages belong to the M resource packages, and L is greater than 1.

In some feasible examples, that the first channel state information indicates the L CQIs specifically includes: The first channel state information includes L first CQIs. The L first CQIs are in one-to-one correspondence with the L CSI-RS resources. Alternatively, the first channel state information includes one second CQI and L-1 differential CQI values. The second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

In some feasible examples, the differential CQI value is a wideband differential CQI value, and an absolute value of the wideband differential CQI value is greater than or equal to 1 or the absolute value of the wideband differential CQI value is greater than or equal to 2.

Optionally, the network device may receive, based on an index that is of the wideband differential CQI value and that is preconfigured by the network device or predefined, the L-1 wideband differential CQI values reported by the terminal device.

Optionally, the network device may receive, based on an index that is of a sub-band differential CQI value and that is preconfigured by the network device or predefined, L-1 sub-band differential CQI values reported by the terminal device.

Optionally, the L first CQIs include L wideband CQIs corresponding to the L CSI-RS resources, or the L wideband CQIs and L sub-band CQIs that correspond to the L CSI-RS resources. The L sub-band CQIs include L sub-band CQIs of sub-bands corresponding to the L CSI-RS resources, or include one sub-band CQI of each of L sub-bands corresponding to the L CSI-RS resources.

Optionally, the second CQI and the L-1 differential CQI values may include one wideband CQI and L-1 wideband differential CQI values, or may include one wideband CQI, L-1 wideband differential CQI values, and one sub-band CQI and L-1 sub-band differential CQI values that correspond to the first CSI-RS resource.

In some feasible examples, the first CSI-RS resource is a CSI-RS resource with a smallest index in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of the network device.

In some feasible examples, the first channel state information further includes one first PMI or L second PMIs. The first PMI corresponds to the L CSI-RS resources, and the L second PMIs are in one-to-one correspondence with the L CSI-RS resources.

In some feasible examples, the L first CQIs are determined respectively based on the L second PMIs; or the second CQI and the L-1 differential CQI values are determined respectively based on the L second PMIs; or the L first CQIs are obtained through calculation based on the first PMI; or the second CQI and the L-1 differential CQI values are obtained through calculation based on the first PMI.

In some feasible examples, the first channel state information further includes one first RI or L second RIs. The first RI corresponds to the L CSI-RS resources, and the L second RIs are in one-to-one correspondence with the L CSI-RS resources.

Optionally, the first channel state information further includes L indexes, and the L indexes are respectively indexes of the L CSI-RS resources.

In some feasible examples, the first channel state information further includes an index of a first CSI-RS resource combination in X CSI-RS resource combinations or an index of one CSI-RS resource in the first CSI-RS resource combination. The first CSI-RS resource combination includes the L CSI-RS resources, each of the X CSI-RS resource combinations includes K CSI-RS resources, the K CSI-RS resources are respectively associated with K different resource packages, and the K resource packages include the M resource packages.

Optionally, the communication method further includes: sending indication information #A. The indication information #A indicates the X CSI-RS resource combinations.

Optionally, the indication information #A and the first indication information are carried in a same piece of signaling.

In some feasible examples, CSI-RS resources in at least two of the M resource packages have a same time domain resource and different frequency domain resources; or CSI-RS resources in at least two of the M resource packages have a same time-frequency resource.

Optionally, the frequency domain resources of the CSI-RS resources that are in the at least two resource packages and that have the same time domain resource and different frequency domain resources may be set in the following two manners. In a setting manner 1, the CSI-RS resources in the at least two resource packages may be set on different REs in a same frequency domain resource block. In a setting manner 2, the frequency domain resources of the CSI-RS resources in the at least two resource packages may be set on different frequency domain resource blocks.

Optionally, the communication method further includes: sending indication information #B. The indication information #B indicates the L resource packages.

Optionally, the communication method further includes: receiving indication information #C. The indication information #C indicates a first quantity. The first quantity is a quantity of processing units occupied by the terminal device to calculate the first channel state information corresponding to the L CSI-RS resources, and the first quantity is a positive integer less than or equal to L.

Optionally, the communication method further includes: receiving indication information indicating the first quantity.

In some feasible examples, the L resource packages are associated with B CSI-RS resources, and the communication method further includes: determining a second quantity. The second quantity is a quantity of processing units occupied by the terminal device to calculate the first channel state information corresponding to the L resource packages, and the second quantity is a positive integer less than B.

Optionally, the second quantity is equal to A+L-1. A is a quantity of CSI-RS resources included in a first resource package.

It should be understood that an execution body of the fourth aspect may be the network device, and specific content of the fourth aspect corresponds to content of the first aspect. For corresponding features of the fourth aspect and beneficial effects achieved by the fourth aspect, refer to the descriptions of the first aspect. To avoid repetition, detailed descriptions are properly omitted herein.

According to a fifth aspect, an embodiment of this application discloses a fifth communication method. The method may be applied to a network device, or an apparatus in the network device, or an apparatus that can be used in cooperation with the network device. The network device is used as an example below for description. The communication method includes: sending first indication information; and receiving second channel state information. The first indication information indicates M resource packages, the resource package is associated with one or more CSI-RS resources, and the CSI-RS resource includes a time-frequency resource. The second channel state information indicates L CQIs, the L CQIs respectively correspond to L CSI-RS resources, the L CSI-RS resources are respectively associated with L resource packages, the L resource packages belong to the M resource packages, and L is greater than 1.

In some feasible examples, the second channel state information further includes at least one of the following corresponding to the second CSI-RS resource: one PMI, one RI, and one index.

In some feasible examples, CSI-RS resources in at least two of the M resource packages have a same time domain resource and different frequency domain resources; or CSI-RS resources in at least two of the M resource packages have a same time-frequency resource.

Optionally, the frequency domain resources of the CSI-RS resources that are in the at least two resource packages and that have the same time domain resource and different frequency domain resources may be set in the following two manners. In a setting manner 1, the CSI-RS resources in the at least two resource packages may be set on different REs in a same frequency domain resource block. In a setting manner 2, the frequency domain resources of the CSI-RS resources in the at least two resource packages may be set on different frequency domain resource blocks.

Optionally, the communication method further includes: sending indication information #B. The indication information #B indicates the L resource packages.

Optionally, the communication method further includes: receiving indication information #C. The indication information #C indicates a first quantity. The first quantity is a quantity of processing units occupied by a terminal device to calculate the second channel state information corresponding to the L CSI-RS resources, and the first quantity is a positive integer less than or equal to L.

Optionally, the communication method further includes: receiving indication information indicating the first quantity.

In some feasible examples, the L resource packages are associated with B CSI-RS resources, and the communication method further includes: determining a second quantity. The second quantity is a quantity of processing units occupied by the terminal device to calculate the second channel state information corresponding to the L resource packages, and the second quantity is a positive integer less than B.

Optionally, the second quantity is equal to A+L-1. A is a quantity of CSI-RS resources included in a first resource package. In this way, a CSI-RS resource that is in the B CSI-RS resources and that is other than the first resource package and the first CSI-RS resource combination occupies no CSI processing unit.

It should be understood that an execution body of the fifth aspect may be the network device, and specific content of the fifth aspect corresponds to content of the second aspect. For corresponding features of the fifth aspect and beneficial effects achieved by the fifth aspect, refer to the descriptions of the second aspect. To avoid repetition, detailed descriptions are properly omitted herein.

According to a sixth aspect, an embodiment of this application discloses a sixth communication method. The method may be applied to a network device, or an apparatus in the network device, or an apparatus that can be used in cooperation with the network device. The network device is used as an example for description. The communication method includes: sending second indication information. The second indication information indicates B CSI-RS resources, and the CSI-RS resource includes a time-frequency resource.

In some feasible examples, the communication method further includes: determining a second quantity. The second quantity is a quantity of CSI processing units occupied for calculating channel state information, and the second quantity is a positive integer less than B.

In some feasible examples, the B CSI-RS resources are CSI-RS resources included in C CSI-RS resource combinations.

Optionally, quantities of CSI-RS resources that are in two CSI-RS resource combinations and that are in the B CSI-RS resources are equal or unequal.

Optionally, the communication method may further include: determining the C CSI-RS resource combinations associated with the B CSI-RS resources.

Optionally, the communication method may further include: sending indication information #D. The indication information #D indicates the C CSI-RS resource combinations.

Optionally, the communication method may further include: sending indication information #E. The indication information #E indicates a configuration of the CSI-RS resource combination, and may be a CSI-RS resource combination division manner, an association relationship between the CSI-RS resource and the CSI-RS resource combination, or the like. The indication information #E and the second indication information may be carried in a same piece of signaling.

Optionally, the C CSI-RS resource combinations include a fifth CSI-RS resource combination, the fifth CSI-RS resource combination includes a fifth CSI-RS resource and a sixth CSI-RS resource, a quantity of ports of the fifth CSI-RS resource is less than a quantity of ports of the sixth CSI-RS resource, and a time-frequency resource included in the fifth CSI-RS resource is included in a time-frequency resource included in the second CSI-RS resource.

In some feasible examples, the B CSI-RS resources include C reference resources, the C reference resources respectively belong to the C CSI-RS resource combinations, and at least one of a CSI-RS resource that is in the B CSI-RS resources and that is other than the C reference resources and the first CSI-RS resource combination occupies no CSI processing unit.

Alternatively, in some feasible examples, the B CSI-RS resources include C reference resources, the C reference resources respectively belong to the C CSI-RS resource combinations, and a CSI-RS resource that is in the B CSI-RS resources and that is other than the C reference resources and the first CSI-RS resource combination occupies no CSI processing unit.

In some feasible examples, the second quantity is equal to C+E-1, and each of the C CSI-RS resource combinations has a same quantity of CSI-RS resources. E is a quantity of CSI-RS resources in the first CSI-RS resource combination, or E is a quantity of CSI-RS resources in a CSI-RS resource combination with a largest quantity of CSI-RS resources in the C CSI-RS resource combinations.

In some feasible examples, the communication method further includes: receiving the channel state information. The channel state information includes an index of the first CSI-RS resource combination, or the channel state information includes an index of one CSI-RS resource in the first CSI-RS resource combination.

In some feasible examples, the channel state information includes at least one of the following: one or L CQIs, one or L PMIs, and one or L RIs. The L CQIs correspond to L CSI-RS resources, the L PMIs correspond to the L CSI-RS resources, and the L RIs correspond to the L CSI-RS resources. The L CSI-RS resources are CSI-RS resources included in the first CSI-RS resource combination, the CQI corresponds to one CSI-RS resource in the first CSI-RS resource combination, the PMI corresponds to the CSI-RS resource in the first CSI-RS resource combination, and the RI corresponds to the CSI-RS resource in the first CSI-RS resource combination.

Optionally, the channel state information includes one second CQI and L-1 differential CQI values.

In some feasible manners, the second CQI corresponds to a second CSI-RS resource, the L-1 differential CQI values correspond to L-1 third CSI-RS resources, and the second CSI-RS resource and the L-1 third CSI-RS resources are included in the B CSI-RS resources.

Optionally, a time-frequency resource of any one of the L-1 CSI-RS resources is included in a time-frequency resource of the second CSI-RS resource. Alternatively, a port included in any one of the L-1 CSI-RS resources is a subset of a port included in the second CSI-RS resource.

Optionally, the L PMIs correspond to the L CSI-RS resources, the L RIs correspond to the L CSI-RS resources, the L CSI-RS resources include the second CSI-RS resource and the L-1 third CSI-RS resources, the PMI corresponds to the second CSI-RS resource, and the RI corresponds to the second CSI-RS resource.

In some other feasible manners, the second CQI and the L-1 differential CQI values correspond to a second CSI-RS resource, and the second CQI and the L-1 differential CQI values correspond to L power control offsets (for example, powercontroloffsets) of the second CSI-RS resource.

Optionally, the L PMIs correspond to the L power control offsets of the second CSI-RS resource, the L RIs correspond to the L power control offsets of the second CSI-RS resource, and the PMI corresponds to one power control offset in the L power control offsets of the second CSI-RS resource.

In some feasible examples, the at least one of the CSI-RS resources that are in the B CSI-RS resources and that are other than the C reference resources and the first CSI-RS resource combination is not an active CSI-RS resource, and a CSI-RS port of the at least one of the CSI-RS resources that are in the B CSI-RS resources and that are other than the C reference resources and the first CSI-RS resource combination is not an active CSI-RS port.

Alternatively, in some feasible examples, the CSI-RS resource that is in the B CSI-RS resources and that is other than the C reference resources and the first CSI-RS resource combination is not an active CSI-RS resource, and a CSI-RS port of the CSI-RS resource that is in the B CSI-RS resources and that is other than the C reference resources and the first CSI-RS resource combination is not an active CSI-RS port.

It should be understood that an execution body of the sixth aspect may be the network device, and specific content of the sixth aspect corresponds to content of the third aspect. For corresponding features of the sixth aspect and beneficial effects achieved by the sixth aspect, refer to the descriptions of the third aspect. To avoid repetition, detailed descriptions are properly omitted herein.

According to a seventh aspect, an embodiment of this application provides a first communication apparatus. The communication apparatus may be a terminal device, or an apparatus in the terminal device, or an apparatus that can be used in cooperation with the terminal device. The communication apparatus has a function of implementing any one of the first aspect, the second aspect, the third aspect, or the feasible examples thereof. The function may be implemented by hardware, or may be implemented by hardware executing corresponding software. The hardware or the software includes one or more modules corresponding to the function.

According to an eighth aspect, an embodiment of this application provides a second communication apparatus. The communication apparatus may be a network device, or an apparatus in the network device, or an apparatus that can be used in cooperation with the network device. The communication apparatus has a function of implementing any one of the fourth aspect, the fifth aspect, the sixth aspect, or the feasible examples thereof. The function may be implemented by hardware, or may be implemented by hardware executing corresponding software. The hardware or the software includes one or more modules corresponding to the function.

According to a ninth aspect, an embodiment of this application provides a third communication apparatus, including units, modules, or means (means) for performing steps of any implementation method according to the first aspect to the sixth aspect.

According to a tenth aspect, an embodiment of this application provides a fourth communication apparatus. The communication apparatus may be a terminal device, or an apparatus in the terminal device, or an apparatus that can be used in cooperation with the terminal device. The communication apparatus may include a processor. The processor is configured to execute instructions in a memory or enable, by using a logic circuit, the communication apparatus to perform the communication method described in any one of the first aspect, the second aspect, the third aspect, or the feasible examples thereof.

According to an eleventh aspect, an embodiment of this application provides a fifth communication apparatus. The communication apparatus may be a network device, or an apparatus in the network device, or an apparatus that can be used in cooperation with the network device. The communication apparatus may include a processor. The processor is configured to execute instructions in a memory or enable, by using a logic circuit, the communication apparatus to perform the communication method described in any one of the fourth aspect, the fifth aspect, the sixth aspect, or the feasible examples thereof.

According to a twelfth aspect, an embodiment of this application provides a sixth communication apparatus. The communication apparatus may be a terminal device, or an apparatus in the terminal device, or an apparatus that can be used in cooperation with the terminal device. The communication apparatus may include a processor. The processor is configured to execute instructions in a memory or enable, by using a logic circuit, the communication apparatus to perform the communication method described in any one of the first aspect, the second aspect, the third aspect, or the feasible examples thereof.

With reference to the eleventh aspect or the twelfth aspect, in some feasible examples, the communication apparatus further includes one or more of a memory or a transceiver, and the transceiver is configured to receive and send data and/or signaling.

According to a thirteenth aspect, this application provides a communication system. The communication system includes a terminal device and a network device. When running in the communication system, the terminal device and the network device are configured to perform the communication method according to any one of the first aspect to the sixth aspect.

According to a fourteenth aspect, this application provides a computer-readable storage medium. The computer-readable storage medium stores instructions. When the instructions are run by a processor, the communication method according to any one of the first aspect to the sixth aspect is performed.

According to a fifteenth aspect, this application provides a computer program product. The computer program product includes instructions. When the instructions are run by a processor, the communication method according to any one of the first aspect to the sixth aspect is performed.

It should be understood that mutual reference may be made to the implementations and beneficial effects of the foregoing aspects of this application.

### BRIEF DESCRIPTION OF DRAWINGS

The following describes accompanying drawings used in embodiments of this application.
FIG. 1 is a diagram of an architecture of a communication system according to an embodiment of this application;
FIG. 2 is a schematic interaction diagram of a first communication method according to an embodiment of this application;
FIG. 3A, FIG. 3B, and FIG. 3C are each a diagram of a time-frequency resource relationship between two CSI-RS resources according to an embodiment of this application;
FIG. 4 is a schematic interaction diagram of a second communication method according to an embodiment of this application;
FIG. 4A and FIG. 4B are each a diagram of CSI-RS resources according to an embodiment of this application;
FIG. 4C is another diagram of CSI-RS resources according to an embodiment of this application;
FIG. 5 is a schematic interaction diagram of a third communication method according to an embodiment of this application;
FIG. 6 is a schematic interaction diagram of a fourth communication method according to an embodiment of this application;
FIG. 7 is a schematic interaction diagram of a fifth communication method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of a terminal device according to an embodiment of this application.

### DESCRIPTION OF EMBODIMENTS

Technical solutions in embodiments of this application may be applied to various communication systems, for example, a long term evolution (long term evolution, LTE) system, a new radio (new radio, NR) system, a public land mobile network (public land mobile network, PLMN) system, an advanced long term evolution (LTE advanced, LTE-A) system, a device-to-device (device-to-device, D2D) communication system, a machine-to-machine (machine-to-machine, M2M) communication system, an internet of things (internet of things, IoT) communication system, a narrowband internet of thing (narrowband internet of thing, NB-IoT) communication system, an integrated sensing and communication system, a frequency division duplex (frequency division duplex, FDD) system, a time division duplex (time division duplex, TDD) system, a non-terrestrial communication (non-terrestrial communication, NTN) system, a wireless projection communication system, and an integrated access and backhaul (integrated access and backhaul, IAB) communication system, and may be applied to a communication system (for example, a 6G communication system) evolved after 5G, or may be a non-third generation partnership project (3rd generation partnership project, 3GPP) communication system or the like. This is not limited.

A communication method provided in embodiments of this application may be applied to various communication scenarios, for example, one or more of enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communication, mMTC), enhanced machine type communication (enhanced machine type communication, eMTC), IoT, NB-IoT, a customer premises equipment (customer premises equipment, CPE), augmented reality (augmented reality, AR), virtual reality (virtual reality, VR), D2D, V2X, and the like.

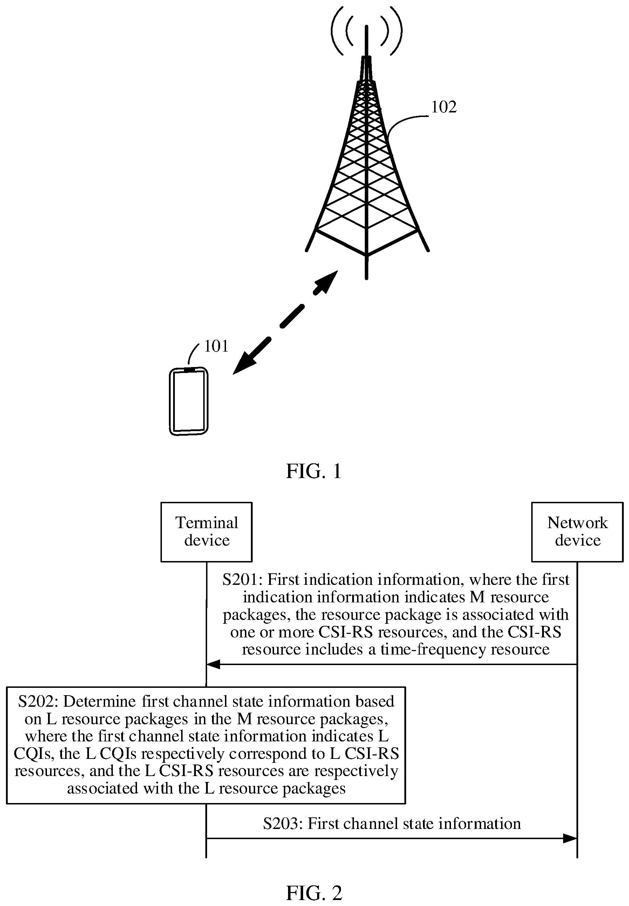

FIG. 1 is a diagram of an architecture of a communication system according to an embodiment of this application. As shown in FIG. 1, the communication system may include a terminal device 101 and a network device 102. The terminal device 101 may be connected to the network device 102 in a wireless manner. The terminal device 101 may be located at a fixed location, or may be movable. The terminal device 101 and the network device 102 may be deployed on land, for example, deployed indoors or outdoors or deployed as handheld devices or vehicle-mounted devices. Alternatively, the terminal device 101 and the network device 102 may be deployed on a water surface, or in an airplane, a balloon, a satellite, or the like in the air. This is not limited herein.

Communication between the terminal device 101 and the network device 102, between the network devices 102, and between the terminal devices 101 may be performed by using a licensed spectrum (licensed spectrum), or may be performed by using an unlicensed spectrum (unlicensed spectrum), or may be performed by using both the licensed spectrum and the unlicensed spectrum. Spectrum resources used by the terminal device 101 and the network device 102 are not limited in this application.

The terminal device 101 is a user-side entity configured to receive or transmit a signal. The terminal device 101 may be a mobile phone (mobile phone), a tablet computer (Pad), a computer having a wireless transceiver function, a VR terminal device, an AR terminal device, a CPE, an IoT terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal in integrated sensing and communication, a vehicle-mounted terminal, a vehicle having a V2X communication capability, an intelligent connected vehicle, an uncrewed aerial vehicle having an uncrewed aerial vehicle to uncrewed aerial vehicle (UAV to UAV, U2U) communication capability, a personal digital assistant (personal digital assistance, PDA), a wireless communication module/chip in various devices like a smart factory or a smart grid, and the like. This is not limited herein.

The terminal device 101 may sometimes be referred to as a user equipment (user equipment, UE), a terminal (terminal), an access terminal, a UE unit, a UE station, a mobile device, a mobile station (mobile station), a mobile terminal, a mobile client, a mobile unit (mobile unit), a remote station, a remote terminal device, a remote unit, a radio unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a PDA, a handheld device having a wireless communication function, a computing device, another processing device connected to a wireless modem, a vehicle-mounted device, a wearable device, a terminal device in a PLMN evolved after 5G, a terminal device in a non-public network (non-public network, NPN) evolved after 5G, or the like. In a 5G communication system, the terminal device 101 establishes a signal connection and a data connection to the network device 102 by using a new radio technology, to transmit a control signal and service data to a data network.

The network device 102 may be an entity configured to transmit or receive a signal, and is mainly configured to implement functions such as a radio physical control function, resource scheduling and radio resource management, radio access control, and mobility management, to provide a reliable radio transmission protocol, a reliable data encryption protocol, and the like. The network device may support wired access, and may further support wireless access, and may be referred to as an access network device below.

Optionally, the access network device may be an access network (access network, AN) device/a radio access network (radio access network, RAN) device, and includes a plurality of AN/RAN nodes. The AN/RAN node may include but is not limited to: an access point (access point, AP), an enhanced NodeB (enhanced NodeB, eNB), a home NodeB (for example, a home evolved NodeB, or a home NodeB, HNB), a baseband unit (baseband unit, BBU), a next generation base station (NR NodeB, gNB), a transmission reception point (transmission reception point, TRP), a transmission point (transmission point, TP), or another access node, for example, a wireless relay node or a wireless backhaul node. Alternatively, the AN/RAN node may be an antenna panel including one or more, or may be a network node included in the gNB or the transmission point, for example, a BBU or a distributed unit (distributed unit, DU), or may be a device that bears a base station function in a communication system like D2D, V2X, M2M, or U2U. The AN/RAN node may be a radio controller in a cloud radio access network (cloud radio access network, CRAN) scenario, or may be an open access network (open RAN, O-RAN or ORAN), or may be a base station in a communication system evolved after 5G, for example, an xNodeB in a 6G communication system, or may be an access network device or the like in a PLMN network evolved after 5G. This is not limited herein.

Main functions of the access network device include: radio resource management, internet protocol (internet protocol, IP) header compression and user data flow encryption, mobility management entity (mobility management entity, MME) selection during attachment of the user equipment, routing of user plane data to a serving gateway (service gateway, SGW), paging message organization and sending, broadcast message organization and sending, a measurement for a purpose of mobility or scheduling and a configuration of a measurement report, and the like.

Optionally, the network device may include a central unit (central unit, CU), a distributed unit (distributed unit, DU), and the like. The CU may be further divided into a CU-control plane (control plane, CP), a CU-user plane (user plane, UP), and the like. Alternatively, the network device may be an antenna unit (radio unit, RU) or the like. Alternatively, the network device may be in an ORAN architecture or the like. A specific deployment manner of the network device is not limited in embodiments of this application. For example, when the network device is in the ORAN architecture, the network device may be an access network device in the ORAN, a module in the access network device, or the like. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU.

The network device may further include a core network device, and is configured to: maintain subscription data of a mobile network, manage a network element of the mobile network, and provide functions such as session management, mobility management, policy management, and security authentication for the terminal device.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which may also be referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). The various storage media described in this specification may represent one or more devices and/or other machine-readable media for storing information. The term "machine-readable media" may include but is not limited to a radio channel and various other media that can store, contain, and/or carry instructions and/or data.

It should be noted that quantities and types of network devices and terminal devices in the network architecture shown in FIG. 1 are merely an example, and embodiments of this application are not limited thereto. For example, more or fewer terminal devices that communicate with the network device may alternatively be included. For another example, more or fewer core network devices that communicate with the network device may alternatively be included. For brevity of description, details are not described in the accompanying drawings. In addition, in the network architecture shown in FIG. 1, although the network device and the terminal device are shown, the application scenario may not be limited to including the network device and the terminal device. For example, the application scenario may further include a device configured to bear a virtualized network function. This is clear to a person skilled in the art, and details are not described herein.

For ease of understanding embodiments of this application, the following first provides definitions of technical terms that may appear in embodiments of this application. Terms used in implementations of this application are only used to explain specific embodiments of this application, but are not intended to limit this application.
(1) A radio frequency (radio frequency, RF) transmit channel may be referred to as a transmit channel (transmitter, TX) for short. One transmit channel corresponds to one physical antenna port. The transmit channel may receive a baseband signal from a baseband chip, perform radio frequency processing (such as up-conversion, amplification, and filtering) on the baseband signal to obtain a radio frequency signal, and radiate the radio frequency signal into space through an antenna. Optionally, the transmit channel may include one or more of electronic components such as an antenna switch, an antenna tuner, a power amplifier (power amplifier, PA), a frequency mixer (mixer), a local oscillator (local oscillator, LO), and a filter (filter). These electronic components may be integrated into one or more chips based on a requirement. The antenna may be considered as a part of the transmit channel sometimes. In embodiments of this application, antenna shutdown may also be referred to as transmit channel shutdown.
(2) An antenna port (port) may be referred to as a port for short. Unless otherwise specified, the antenna port in embodiments of this application refers to a logical antenna port instead of a physical antenna port. One antenna port may be associated with one or more transmit channels, and a signal on each antenna port is transmitted through one or more transmit channels associated with the antenna port. When one antenna port is associated with a plurality of transmit channels, a signal on the antenna port is weighted by using a weighting coefficient, and is transmitted through the plurality of transmit channels associated with the antenna port. It may be understood that the plurality of physical antennas form one logical antenna after being weighted by using the weighting coefficient. The weighting coefficient herein may be a complex number or a real number, and weighting coefficients on different physical antennas may be the same or different. Each antenna port corresponds to a time-frequency resource and a reference signal. Time-frequency resources corresponding to different antenna ports may be the same or different. A reference signal transmitted by the network device through an antenna port A may be used by the terminal device to estimate a feature of a radio channel from the antenna port A to the terminal device. The feature of the radio channel may be used by the terminal device to estimate a physical channel transmitted through the antenna port A, or may be used to determine information such as a modulation order and a bit rate during data transmission. One reference signal may correspond to one or more antenna ports. This may be understood that the reference signal may be transmitted through the one or more antenna ports.
(3) Channel state information is used to represent features such as signal attenuation and interference. In a process in which a radio signal arrives at a receive end from a transmit end through a radio channel, fading may occur due to scattering, reflection, and energy attenuation with a distance. In addition, the radio signal may be interfered by another signal at the receive end, affecting reception of the radio signal. Therefore, a channel feature may be represented by using the CSI. This helps improve resource configuration efficiency of the network device.

Optionally, the CSI may include at least one of a CQI, a PMI, an RI, reference signal received power (reference signal received power, RSRP), and a signal to interference plus noise ratio (signal to interference plus noise ratio, SINR). These pieces of CSI may be sent by the terminal device to the network device through a physical uplink control channel (physical uplink control channel, PUCCH) or a physical uplink shared channel (physical uplink shared channel, PUSCH).

In embodiments of this application, if there is no logical conflict, the terms "CQI" and "CQI index" may be interchanged, and the terms "report", "feed back", and "send" may be interchanged.

(4) A reference signal is a known signal provided by the transmit end for the receive end for channel estimation or channel sounding. In embodiments of this application, the reference signal may be used for channel measurement, an interference measurement, and the like, for example, a measurement for a CSI-related parameter.

(5) A reference signal resource may include at least one of resources of the reference signal, for example, a time-frequency resource, an antenna port, a power resource, and scrambling code. The transmit end may send a reference signal based on the reference signal resource, and the receive end may receive the reference signal based on the reference signal resource. In embodiments of this application, one or more antenna ports corresponding to the reference signal resource may be understood as one or more antenna ports included in the reference signal resource.

Optionally, the reference signal may be a CSI-RS. Correspondingly, the reference signal resource may be a CSI-RS resource.

(6) A time-frequency resource may include one or more of a time domain resource, a frequency domain resource, a resource element (resource element, RE), and the like. A unit of the time domain resource may include a frame (frame), a subframe (subframe), a slot (slot), a sub-slot (sub-slot), a mini-slot (mini-slot), a symbol (symbol), and the like. A unit of the frequency domain resource may include a subcarrier (subcarrier), a subcarrier spacing, bandwidth, a resource block (resource block, RB), a resource block group (RB group, RBG), a bandwidth part (bandwidth part, BWP), a component carrier (component carrier), and the like. The time-frequency resource is not limited in this application.

(7) A resource package, a CSI-RS resource set, and a CSI-RS resource combination each include one or more resources. The resources may be consecutive, or may be inconsecutive, or may be partially consecutive and partially inconsecutive. In embodiments of this application, the resource in the resource package, the CSI-RS resource set, and the CSI-RS resource combination is a CSI-RS resource, and the CSI-RS resource includes a time-frequency resource.

Optionally, the CSI-RS resource in the resource package, the CSI-RS resource set, and the CSI-RS resource combination may be predefined or obtained through network configuration.

A CSI-RS resource combination division manner is used as an example below.

For example, an identifier of each CSI-RS resource corresponds to an identifier of one CSI-RS resource combination. To be specific, CSI-RS resources corresponding to an identifier of a same CSI-RS resource combination belong to the same CSI-RS resource combination. Optionally, the network device indicates a CSI-RS resource combination to which each CSI-RS resource belongs. For example, if there are four CSI-RS resources, corresponding index identifiers are respectively 0 to 3, and identifiers that are of resource combinations and that correspond to the CSI-RS resources 0 to 3 are respectively 0, 1, 0, and 1, the CSI-RS resource 0 and the CSI-RS resource 2 may be grouped into one CSI-RS resource combination, and the CSI-RS resource 1 and the CSI-RS resource 3 may be grouped into another CSI-RS resource combination.

For another example, based on indexes of CSI-RS resources, CSI-RS resources corresponding to indexes having a numerical relationship are grouped into one CSI-RS resource combination. For example, in the CSI-RS resources, a resource whose index is an odd number belongs to a resource combination 1, and a resource whose index is an even number belongs to a resource combination 2.

For another example, based on an index sequence of CSI-RS resources, CSI-RS resources of a same quantity are grouped into one CSI-RS resource combination. For example, if two CSI-RS resources are grouped into one CSI-RS resource combination in ascending order of indexes of CSI-RS resources 0 to 3, the CSI-RS resource 0 and the CSI-RS resource 1 may be grouped into one CSI-RS resource combination, and the CSI-RS resource 2 and the CSI-RS resource 3 may be grouped into another CSI-RS resource combination.

The terminal device performs, based on a configured CSI-RS resource, a CSI measurement and calculation on each configured CSI-RS resource. Therefore, when configuring the CSI-RS resource, the network device needs to meet the following capabilities of the terminal device.

(8) CSI processing capability, quantity of CSI processing units (CSI processing units, CPUs), active CSI-RS resource capability, and active CSI-RS port capability.

The CSI processing capability is a maximum value of a number, a count, or a quantity of CSI processing units supported by the UE. In a 3GPP protocol, the CSI processing capability is used to represent an upper limit of resources that can be occupied by the terminal device to process CSI, for example, computing resources or storage resources.

The terminal device reports a maximum quantity of CSI processing units that can be supported by the terminal device. The maximum quantity of CSI processing units supported by the terminal device may also be understood as the CSI processing capability of the terminal device. CSI processing capabilities of different terminal devices are different. For example, a UE 1 notifies a base station that a maximum quantity of CSI processing units supported by the UE 1 is 10, and a UE 2 notifies the base station that a maximum quantity of CSI processing units supported by the UE 2 is 15. The maximum quantity of supported CSI processing units herein refers to a quantity of CSI measurements that are simultaneously supported, and may be a quantity of CSI measurements that are simultaneously supported in one carrier, or may be a quantity of CSI measurements that are simultaneously supported in all carriers. If the terminal device supports one CSI processing unit, it indicates that the terminal device supports a maximum of one CSI processing unit for CSI measurement at a same moment.

For example, the terminal device reports, by using simultaneousCSI-ReportsPerCC, a quantity of CSI calculations that are simultaneously supported by the terminal device in one CC, or may report a quantity of CSI processing units that are supported by the terminal device in the CC. Alternatively, the terminal device reports, by using simultaneousCSI-ReportsAllCC, a quantity of CSI calculations that are simultaneously supported by the terminal device in all CCs, or may report a quantity of CSI processing units that are supported by the terminal device in all the CCs. If the terminal device supports NCPU simultaneous CSI calculations, the terminal device has NCPU CSI processing units for CSI measurement.

Before calculating CSI of N1 CSI reports, the terminal device determines, based on a quantity that is reported by the terminal device and that is of CSI processing units supported in one CC or all CCs and a quantity of occupied CSI processing units in an OFDM symbol (a 1^{st} OFDM symbol) in which the calculation of the CSI of the N1 CSI reports starts, whether to start to calculate the CSI of the N1 CSI reports. Specifically, for a given OFDM symbol, if the terminal device determines that N2 CSI processing units have been occupied, a quantity of CSI processing units that are not occupied is NCPU-N2. If the calculation of the CSI of the N1 CSI reports in the OFDM symbol needs to start, and a quantity of CSI processing units to be occupied by the N1 CSI reports is greater than NCPU-N2, the terminal device selects, based on priorities of the N1 CSI reports, N3 CSI reports with higher priorities for calculation. N3 is a maximum value of a quantity of NCPU-N2 CSI reports, and no CSI calculation is performed for N1-N3 CSI reports with lower priorities.

The active CSI-RS resource capability is a maximum quantity of resources supported by the terminal device in one frequency band or all CCs of the frequency band, for example, maxNumberResourcesPerBand. The active CSI-RS port capability is a maximum quantity of ports supported by the terminal device in one frequency band or all CCs of the frequency band, for example, totalNumberTxPortsPerBand.

(9) A CSI reporting manner may include the following two manners: A first CSI reporting manner is common CSI reporting, and a second CSI reporting manner is enhanced CSI reporting for a non-coherent joint transmission (non-coherent joint transmission, NC-JT) scenario.

In the first CSI reporting manner, the network device may indicate, by using a radio resource control (radio resource control, RRC) parameter, for example, a CSI reporting configuration (CSI-ReportConfig), the terminal device to report CSI. At least one CSI resource configuration identifier (CSI-ResourceConfigId) used for channel measurement (CSI measurement) is configured in the CSI-ReportConfig, and the CSI-ResourceConfigId is an index of one CSI resource configuration (CSI-ResourceConfig). One or more non-zero power CSI-RS resource combinations (NZP-CSI-RS-ResourceSets) are configured in the CSI-ResourceConfig. For example, for periodic or semi-persistent CSI reporting, one NZP-CSI-RS-ResourceSet is configured in the CSI-ResourceConfig; and for aperiodic CSI reporting, one or more NZP-CSI-RS-ResourceSets are configured in the CSI-ResourceConfig. The NZP-CSI-RS-ResourceSet may include one or more non-zero power CSI-RS resources (NZP-CSI-RS-resources), and quantities of ports of the one or more NZP-CSI-RS-resources may be the same. When reporting the CSI, the terminal device reports, to the base station, a CSI-RS measurement result included in the NZP-CSI-RS-ResourceSet corresponding to the CSI-ReportConfig. Reported content may include the following content: an index (CSI-RS resource index, CRI) of one CSI-RS resource, a CQI of the CSI-RS resource, a PMI of the CSI-RS resource, an RI of the CSI-RS resource, and the like.

Optionally, the terminal device determines, based on configuration information of the network device, content of the CSI reporting. For example, if the configuration information of the base station indicates the UE to report 'cri-CQI-PMI-RI', the UE reports one CRI, one CQI, one PMI, and one RI.

In the first CSI reporting manner, a quantity of CSI processing units of a CSI report is determined based on a quantity of CSI-RS resources that are used for channel measurement and that are associated with the CSI report. For example, if one CSI report is associated with four CSI-RS resources used for channel measurement, a quantity of CSI processing units occupied by the CSI report is equal to 4. It can be learned that the quantity of CSI processing units of the CSI report is equal to the quantity of CSI-RS resources associated with the CSI report.

A difference between the second CSI reporting manner and the first CSI reporting manner lies in that one NZP-CSI-RS-ResourceSet in the second CSI reporting manner may include one or more NZP-CSI-RS-resources, and the one or more NZP-CSI-RS-resources are divided into two CSI-RS resource groups. In embodiments of this application, the CSI-RS resource group may also be referred to as a CSI-RS measurement resource group (CSI-RS measurement resource group), namely, a CMR group. Quantities of NZP-CSI-RS-resources in the two CSI-RS resource groups may be the same or different. For example, one NZP-CSI-RS-ResourceSet includes a total of five NZP-CSI-RS-resources: a CSI-RS resource 0 to a CSI-RS resource 4, a CSI-RS resource group 1 may include the CSI-RS resource 0, the CSI-RS resource 2, and the CSI-RS resource 4, and a CSI-RS resource group 2 may include the CSI-RS resource 1 and the CSI-RS resource 3.

In the second CSI reporting manner, resources in the two CSI-RS resource groups obtained by dividing the one or more NZP-CSI-RS-resources may be paired. For example, the CSI-RS resource 0 in the CSI-RS resource group 1 and the CSI-RS resource 1 in the CSI-RS resource group 2 are paired, which is referred to as a CSI-RS resource pair (pair) 1 for short, and the CSI-RS resource 2 in the CSI-RS resource group 1 and the CSI-RS resource 3 in the CSI-RS resource group 2 are paired, which is referred to as a CSI-RS resource pair 2 for short. Then, the terminal device performs a measurement based on a resource in the paired CSI-RS resource pair, and reports CSI. The reported CSI may include one CRI, one CQI, two PMIs, and two RIs. The CRI is an index of one CSI-RS resource in one CSI-RS resource combination, and the CQI is a CQI measurement result of one CSI-RS resource pair. The two PMIs are PMI measurement results of two CSI-RS resources in one CSI-RS resource pair, and the two RIs are RI measurement results of the two CSI-RS resources in the CSI-RS resource pair.

When the terminal device calculates a quantity of active CSI-RS resources and a quantity of active CSI-RS ports, if one active CSI-RS resource is referenced by or associated with one or more CSI reports for N times, calculations are performed for the active CSI-RS resource and an active CSI-RS port in the CSI-RS resource for N times.

In a multi-TRP configuration scenario, when a CSI-RS resource combination of one CSI report includes two CSI-RS resource groups, a CSI processing unit occupied by the CSI report is determined based on a quantity of times that a CSI-RS resource associated with the CSI report is used for CSI calculation. For example, one CSI report is associated with two CSI-RS resources, the two CSI-RS resources respectively belong to different CSI-RS resource groups, the two CSI-RS resources are paired for CSI calculation in a multi-TRP scenario, and the two CSI-RS resources may be separately further used for CSI calculation in a single TRP scenario. Therefore, a quantity of CSI processing units occupied by the CSI report is 3. That is, the CSI report occupies three CSI processing units. It can be learned that a quantity of CSI processing units of a CSI report in a multi-TRP configuration scenario is greater than a quantity of CSI-RS resources associated with the CSI report.

The quantity of CSI processing units of the CSI report is based on a quantity of times that a CSI-RS resource is actually measured. Therefore, in the second CSI reporting manner, complexity of calculating the CSI by the terminal device is increased.

To reduce energy consumption of the network device, a part of a transmit antenna may be dynamically shut down. When the antenna is dynamically shut down, the terminal device may perform CSI measurements for different antenna shutdown cases, and report CSI measurement results to the network device, so that the terminal device performs data scheduling. However, due to a limitation of a terminal capability, a quantity of CSI reporting configurations (for example, a periodic CSI reporting configuration, a semi-persistent CSI reporting configuration, or an aperiodic CSI reporting configuration) configured by the network device for the terminal device does not exceed 4. When the CSI is configured in the foregoing first CSI reporting manner, the network device needs to configure one CSI configuration for each antenna shutdown case. For more than four antenna shutdown cases, the terminal device cannot report CSI in various antenna shutdown cases, and reporting of CSI measurement results for other purposes such as mobility management and beam management is affected. When the CSI is configured in the foregoing second CSI reporting manner, the terminal device jointly reports information about a CSI-RS resource, for example, reports one CQI. Because transmit power and antenna gains are different in different antenna shutdown cases, CQI results obtained through measurement are greatly different. CQIs in the different antenna shutdown cases cannot be determined when one CQI is reported. As a result, an error occurs in channel feature identification.

Based on this, this application provides a communication method, to optimize resource configuration, and improve accuracy of CSI reporting. This facilitates a data scheduling effect on a network side. A terminal device in the communication method may be the terminal device in the network architecture shown in FIG. 1. A function performed by the terminal device in embodiments may be performed by an apparatus (for example, a chip, a chip system, or a circuit) in the terminal device, or may be performed by an apparatus that can be used in cooperation with the terminal device. A network device in the communication method may be the network device in the network architecture shown in FIG. 1. A function performed by the network device in embodiments may be performed by an apparatus (for example, a chip, a chip system, or a circuit) in the network device, or may be performed by an apparatus that can be used in cooperation with the network device.

FIG. 2 is a schematic interaction diagram of a first communication method according to an embodiment of this application. The communication method includes step S201 to step S203.

Step S201: A network device sends first indication information to a terminal device. Correspondingly, the terminal device receives the first indication information from the network device. The first indication information indicates M resource packages, the resource package is associated with one or more CSI-RS resources, and the CSI-RS resource includes a time-frequency resource. Optionally, the resource package may be a CSI-RS resource set (for example, a CSI Resource Set, where the CSI Resource Set may be configured by using an NZP-CSI-RS-ResourceSet), or may be a CSI-RS resource group, or may be a CSI resource configuration (for example, a CSI-ResourceConfig) or the like. This is not limited herein.

Optionally, the first indication information may be a CSI reporting configuration (for example, a CSI-ReportConfig). In this way, the terminal device may report CSI in a CSI reporting instance (for example, a CSI Reporting instance) based on a parameter indicated in the CSI reporting configuration.

In an implementation, the first indication information indicates M resource packages, the resource package may be associated with one or more CSI-RS resources, and the resource package may be a CSI-RS resource group. Specifically, the first indication information (for example, the CSI-ReportConfig) may include one piece of CSI resource configuration information (for example, a CSI-ResourceConfigId), and the CSI resource configuration information indicates one CSI resource configuration (for example, a CSI-ResourceConfig) used for channel measurement. The CSI resource configuration may include one or more pieces of CSI-RS resource set configuration information (for example, an NZP-CSI-RS-ResourceSetId), and the one or more pieces of CSI-RS resource set configuration information respectively indicate one or more CSI-RS resource set (for example, an NZP-CSI-RS-ResourceSet) configurations. One of the one or more CSI-RS resource set configurations may indicate M resource packages, the resource package is a CSI-RS resource group, and the resource package may be associated with one or more CSI-RS resources.

For example, the NZP-CSI-RS-ResourceSet includes A NZP-CSI-RS-ResourceIds, which respectively indicate corresponding CSI-RS resources. When A=8, there may be eight CSI-RS resources: a CSI-RS resource 0 to a CSI-RS resource 7. When the eight CSI-RS resources may be divided into two CSI-RS resource groups, if the NZP-CSI-RS-ResourceSet includes indication information nrofResourcesGroup1, and the nrofResourcesGroup1 indicates that a quantity B of CSI-RS resources included in a CSI-RS resource group 1 is equal to 4, the CSI-RS resource 0, the CSI-RS resource 1, the CSI-RS resource 2, and the CSI-RS resource 3 may be grouped into the CSI-RS resource group 1, and the CSI-RS resource 4, the CSI-RS resource 5, the CSI-RS resource 6, and the CSI-RS resource 7 are grouped into a CSI-RS resource group 2. In this way, two resource packages may be indicated through one CSI-RS resource set configuration, each resource package is one CSI-RS resource group, and the resource packages may be associated with a same quantity (for example, 4) of CSI-RS resources.

When the eight CSI-RS resources may be divided into three CSI-RS resource groups, if the NZP-CSI-RS-ResourceSet includes indication information nrofResourcesGroup1 and nrofResourcesGroup2, the nrofResourcesGroup1 indicates that a quantity B of CSI-RS resources included in a CSI-RS resource group 1 is equal to 3, and the nrofResourcesGroup2 indicates that a quantity C of CSI-RS resources included in a CSI-RS resource group 2 is equal to 3, the CSI-RS resource 0, the CSI-RS resource 1, and the CSI-RS resource 2 may be grouped into the CSI-RS resource group 1, the CSI-RS resource 3, the CSI-RS resource 4, and the CSI-RS resource 5 are grouped into the CSI-RS resource group 2, and the CSI-RS resource 6 and the CSI-RS resource 7 are grouped into a CSI-RS group 3. In this way, three resource packages may be indicated through one CSI-RS resource set configuration, each resource package is one CSI-RS resource group, and each resource package may be associated with a different quantity of CSI-RS resources.

It should be understood that, in this implementation, all the M resource packages may correspond to a first parameter in the CSI resource configuration, to reduce signaling overheads for configuring the first parameter for each of the M CSI-RS resource sets. For example, all the M CSI-RS resource sets may correspond to a same bandwidth part (bandwidth part, BWP), a same interference measurement resource, and a same resource type indication. In this case, the CSI resource configuration may include a parameter indicating a BWP, a parameter indicating an interference measurement resource set, and a parameter indicating a resource type, and all the M CSI-RS resource sets may correspond to the foregoing parameters.

In another implementation, the first indication information indicates M resource packages, the resource package may be associated with one or more CSI-RS resources, and the resource package may be a CSI-RS resource set (for example, a CSI Resource Set, where the CSI Resource Set may be configured by using an NZP-CSI-RS-ResourceSet). Specifically, the first indication information (for example, the CSI-ReportConfig) may include one piece of CSI resource configuration information (for example, a CSI-ResourceConfigId), and the CSI resource configuration information indicates one CSI resource configuration used for channel measurement. The CSI resource configuration may include M pieces of CSI-RS resource set configuration information (for example, NZP-CSI-RS-ResourceSetIds). The M pieces of CSI-RS resource set configuration information respectively indicate the M resource packages (for example, CSI Resource Sets, where the CSI Resource Set may be configured by using the NZP-CSI-RS-ResourceSet). The M resource packages are M CSI-RS resource sets, each CSI-RS resource set includes one or more pieces of CSI-RS resource configuration information (for example, an NZP-CSI-RS-ResourceId), and the one or more pieces of CSI-RS resource configuration information indicate one or more CSI-RS resources.

Optionally, the CSI resource configuration includes a second parameter, the second parameter indicates a first interference measurement resource set, and the M resource packages correspond to the first interference measurement resource set.

For example, M=2, there are a total of M=2 CSI-RS resource sets, and each CSI-RS resource set is associated with four CSI-RS resources. For example, four CSI-RS resources in a 1^{st} CSI-RS resource set are a CSI-RS resource 0 to a CSI-RS resource 3, and four CSI-RS resources in a 2^{nd} CSI-RS resource set are a CSI-RS resource 4 to a CSI-RS resource 7. The M=2 CSI-RS resource sets correspond to one first interference measurement resource set, the first interference measurement resource set includes four interference measurement resources, and the four interference measurement resources are an interference measurement resource 0 to an interference measurement resource 3. That the M CSI-RS resource sets correspond to the first interference measurement resource set may include the following example: The CSI-RS resource 0 and the CSI-RS resource 4 correspond to the interference measurement resource 0, the CSI-RS resource 1 and the CSI-RS resource 5 correspond to the interference measurement resource 1, the CSI-RS resource 2 and the CSI-RS resource 6 correspond to the interference measurement resource 2, and the CSI-RS resource 3 and the CSI-RS resource 7 correspond to the interference measurement resource 3.

It should be understood that, in this implementation, the M CSI-RS resource sets corresponding to the M resource packages may correspond to one second parameter, and the second parameter is included in the CSI resource configuration, so that signaling configuration overheads can be reduced. For example, the CSI resource configuration includes one parameter indicating an interference measurement resource set, and all the M CSI-RS resource sets may correspond to the interference measurement resource set.

Optionally, the CSI resource configuration information includes M second parameters, the M second parameters respectively indicate M first interference measurement resource sets, and the M resource packages respectively correspond to the M first interference measurement resource sets.

For example, M=2, there are a total of M=2 CSI-RS resource sets, each CSI-RS resource set includes four CSI-RS resources, four CSI-RS resources included in a 1^{st} CSI-RS resource set are a CSI-RS resource 0 to a CSI-RS resource 3, and four CSI-RS resources included in a 2^{nd} CSI-RS resource set are a CSI-RS resource 4 to a CSI-RS resource 7. The M=2 CSI-RS resource sets correspond to one first interference measurement resource set, and each of the M=2 first interference measurement resource sets includes four interference measurement resources. Four interference measurement resources included in a 1^{st} first interference measurement resource set may be an interference measurement resource 0 to an interference measurement resource 3, and four interference measurement resources included in a 2^{nd} first interference measurement resource set may be an interference measurement resource 4 to an interference measurement resource 7. That the M CSI-RS resource sets correspond to the M first interference measurement resource sets may include the following example: The CSI-RS resource 0 corresponds to the interference measurement resource 0, the CSI-RS resource 1 corresponds to the interference measurement resource 1, the CSI-RS resource 2 corresponds to the interference measurement resource 2, the CSI-RS resource 3 corresponds to the interference measurement resource 3, the CSI-RS resource 4 corresponds to the interference measurement resource 4, and so on.

It should be understood that, in this implementation, the M CSI-RS resource sets corresponding to the M resource packages may respectively correspond to M second parameters, and the M second parameters are included in the CSI resource configuration, so that configuration flexibility can be improved.

In still another implementation, the first indication information indicates M resource packages, the resource package may be associated with one or more CSI-RS resources, and the resource package may be a CSI resource configuration (for example, a CSI-ResourceConfig). Specifically, the first indication information (for example, the CSI-ReportConfig) includes M pieces of CSI resource configuration information (for example, CSI-ResourceConfigIds), and each piece of CSI resource configuration information indicates one resource package (for example, a CSI-ResourceConfig) used for channel measurement, and the resource package is a CSI resource configuration. The CSI resource configuration includes one piece of CSI-RS resource set configuration information (for example, an NZP-CSI-RS-ResourceSetId). The CSI-RS resource set configuration information indicates one CSI-RS resource set (for example, a CSI Resource Set, where the CSI Resource Set may be configured by using an NZP-CSI-RS-ResourceSet). The CSI-RS resource set includes one or more pieces of CSI-RS resource configuration information (for example, an NZP-CSI-RS-ResourceId), and the one or more pieces of CSI-RS resource configuration information respectively indicate one or more CSI-RS resources.

It should be understood that, in this implementation, the M resource packages are M CSI resource configurations, each CSI resource configuration corresponds to one CSI-RS resource set, and each CSI-RS resource set may be associated with one or more CSI-RS resources, so that each resource package is associated with the one or more CSI-RS resources.

Optionally, the first indication information may be carried in RRC signaling.

Optionally, a time domain behavior of any one of one or more CSI-RS resources associated with the M resource packages is periodic; or a time domain behavior of any one of one or more CSI-RS resources associated with the M resource packages is semi-persistent.

That the time domain behavior of any one of the one or more CSI-RS resources associated with the M resource packages is periodic may be understood as: The terminal device periodically receives any one of the one or more CSI-RS resources associated with the M resource packages. That the time domain behavior of any one of the one or more CSI-RS resources associated with the M resource packages is semi-persistent may be understood as: The terminal device periodically receives any one of the one or more CSI-RS resources associated with the M resource packages within a period of time.

Optionally, the one or more CSI-RS resources associated with the resource package have a same quantity of antenna ports; or the one or more CSI-RS resources associated with the resource package have a same power offset; or the one or more CSI-RS resources associated with the resource package have a same synchronization signal offset.

The power offset may be an assumed power offset of a PDSCH relative to the CSI-RS resource.

Optionally, the M resource packages are respectively associated with M antenna shutdown cases. A type of the antenna shutdown case is not limited in this application. Optionally, quantities of CSI-RS ports respectively corresponding to the M resource packages are not completely the same. Optionally, power offsets respectively corresponding to the M resource packages are not completely the same. Optionally, synchronization signal power offsets respectively corresponding to the M resource packages are not completely the same. Quantities of ports respectively corresponding to the M resource packages are the same, and indexes of the ports respectively corresponding to the M resource packages are different. In this way, the network device may configure CSI-RS resource sets in different antenna shutdown cases based on one or more of the quantities of CSI-RS ports, the power offsets, the synchronization signal power offsets, the quantities of ports, the indexes of the ports, and the like.

In some feasible examples, time-frequency resources of CSI-RS resources in at least two of the M resource packages may include the following two cases. In one case, time domain resources are the same, and frequency domain resources are different. In other words, there are O resource packages in the M resource packages, and CSI-RS resources in the O resource packages have a same time domain resource and different frequency domain resources. O is less than or equal to M, and O is greater than or equal to 2.

A resource package a and a resource package b in the O resource packages are used as an example for description. Time domain resources of P CSI-RS resources included in the resource package a are respectively the same as time domain resources of P CSI-RS resources included in the resource package b, and frequency domain resources of the P CSI-RS resources included in the resource package a are respectively different from frequency domain resources of the P CSI-RS resources included in the resource package b. P is a positive integer, and the resource package b may be any resource package other than the resource package a in the O resource packages. In this way, time domain overheads can be reduced through frequency division multiplexing of the CSI-RS resources in the M resource packages, to increase time for shutdown by the network device. This helps the network device save energy. It should be understood that, in the foregoing implementation, there are a total of P groups of CSI-RS resources, any one of the P groups of CSI-RS resources includes O CSI-RS resources, and the O CSI-RS resources have a same time domain resource and different frequency domain resources.

Optionally, M may be equal to O. In this way, the CSI-RS resources in the M resource packages may be frequency division multiplexed, to further reduce time domain resources.

Optionally, each of the O resource packages includes P CSI-RS resources. For example, M=O=2, the quantity P of CSI-RSs included in each of the two resource packages is 2, CSI-RS resources included in a 1^{st} resource package are a CSI-RS resource 0 and a CSI-RS resource 1, and CSI-RS resources included in a 2^{nd} resource package are a CSI-RS resource 2 and a CSI-RS resource 3. The CSI-RS resource 0 and the CSI-RS resource 2 have a same time domain resource and different frequency domain resources, and the CSI-RS resource 1 and the CSI-RS resource 3 have a same time domain and different frequency domain resources. In this way, the CSI-RS resources included in the O resource packages may be completely frequency division multiplexed, to further reduce the time domain resources.

Optionally, a quantity of CSI-RS resources included in each of the O resource packages may be greater than or equal to P. For example, M=O=2, a 1^{st} resource package in the two resource packages includes a total of two CSI-RS resources: a CSI-RS resource 0 and a CSI-RS resource 1, and a 2^{nd} resource package in the two resource packages includes a total of three CSI-RS resources: a CSI-RS resource 2 to a CSI-RS resource 4. P=2, the CSI-RS resource 0 and the CSI-RS resource 2 have a same time domain resource and different frequency domain resources, and the CSI-RS resource 1 and the CSI-RS resource 3 have a same time domain resource and different frequency domain resources.

Optionally, frequency domain resources of Q CSI-RS resources in the P CSI-RS resources that have a same time domain resource and different frequency domain resources may be set in the following two manners. In a setting manner 1, the Q CSI-RS resources may be set on different REs in a same frequency domain resource block. In a setting manner 2, the frequency domain resources of the Q CSI-RS resources may be set on different frequency domain resource blocks.

For the setting manner 2, frequency domain resource blocks included in a frequency domain resource of any one of the Q CSI-RS resources are inconsecutive, and the frequency domain resource blocks included in the frequency domain resource of any one of the Q CSI-RS resources are distributed at a fixed interval. Optionally, the fixed interval may be two RBs, or the fixed interval may be four RBs. In this way, frequency domain resources may be configured for each of the Q CSI-RS resources in a comb manner in a bandwidth part. In an environment with high frequency-selective fading, this is more beneficial for obtaining channel information that is more complete. For example, Q=2, the two CSI-RS resources include a CSI-RS resource 0 and a CSI-RS resource 1, and the fixed interval is two RBs. In this case, frequency domain resource blocks included in the CSI-RS resource 0 may be 0, 2, 4, and the like. Frequency domain resource blocks included in the CSI-RS resource 1 may be 1, 3, 5, and the like. The rest can be deduced by analogy.

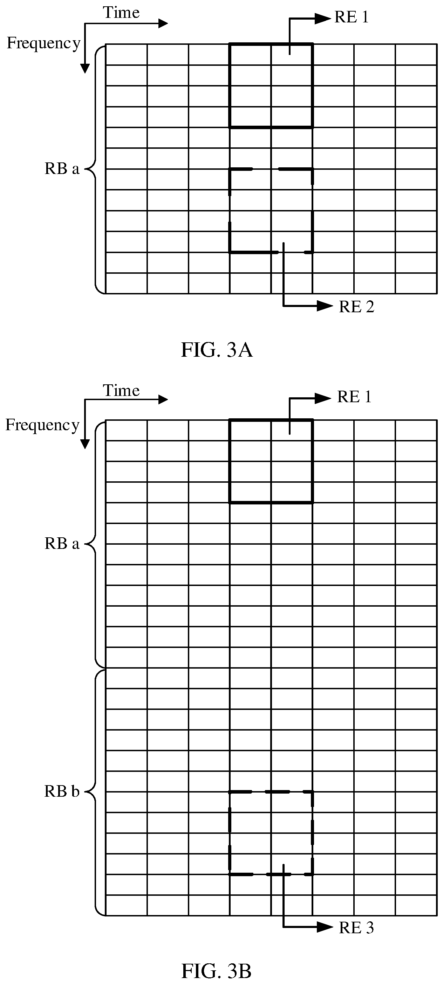

For example, M is equal to 2, O is equal to M, and the M resource packages include a resource package 1 and a resource package 2. The resource package 1 may include a CSI-RS resource 1, and the resource package 2 may include a CSI-RS resource 2. For a time-frequency resource relationship between the two CSI-RS resources in the manner 1, refer to FIG. 3A and FIG. 3B. In FIG. 3A and FIG. 3B, a horizontal axis represents time, a vertical axis represents frequency, a solid-line box corresponds to the CSI-RS resource 1, and a dashed-line box corresponds to the CSI-RS resource 2. As shown in FIG. 3A, the CSI-RS resource 1 may correspond to an RE 1 in an RB a, and the CSI-RS resource 2 may correspond to an RE 2 in the RB a. That is, the CSI-RS resource 1 and the CSI-RS resource 2 may correspond to different REs in a same frequency domain resource block. As shown in FIG. 3B, the CSI-RS resource 1 may correspond to an RE1 in an RB a, and the CSI-RS resource 2 may correspond to an RE3 in an RB b. That is, the CSI-RS resource 1 and the CSI-RS resource 2 may correspond to different REs in different frequency domain resource blocks.

Another case of time-frequency resources of CSI-RS resources in at least two of the M resource packages is: The time-frequency resources of the CSI-RS resources in the at least two of the M resource packages are partially the same. In other words, there are O resource packages in the M resource packages, and time-frequency resources of CSI-RS resources in the O resource packages are partially the same. O is less than or equal to M, and O is greater than or equal to 2.

A resource package a and a resource package b in the O resource packages are used as an example for description. Time-frequency resources of P CSI-RS resources included in the resource package a and time-frequency resources of P CSI-RS resources included in the resource package b are partially the same. P is a positive integer, and the resource package b may be any resource package other than the resource package a in the O resource packages. In this way, time domain overheads and frequency domain overheads can be reduced by configuring overlapping time-frequency resources for the CSI-RS resources in the M resource packages. The time domain overheads are reduced, so that time for shutdown by the network device can be increased. This helps the network device save energy. The frequency domain overheads are reduced, so that more frequency domain resources can be used for data transmission, to improve transmission performance. It should be understood that, in the foregoing implementation, there are a total of P groups of CSI-RS resources, any one of the P groups of CSI-RS resources includes O CSI-RS resources, and the O CSI-RS resources have a same time-frequency resource.

Optionally, M may be equal to O. In this way, the time-frequency resources of the CSI-RS resources in the M resource packages may be partially the same.

Optionally, a quantity of CSI-RS resources included in each of the O resource packages is greater than or equal to P. If each of the O resource packages includes P CSI-RS resources, overlapping time-frequency resources may be used for the CSI-RS resources included in the O resource packages, so that time-frequency resources can be saved.

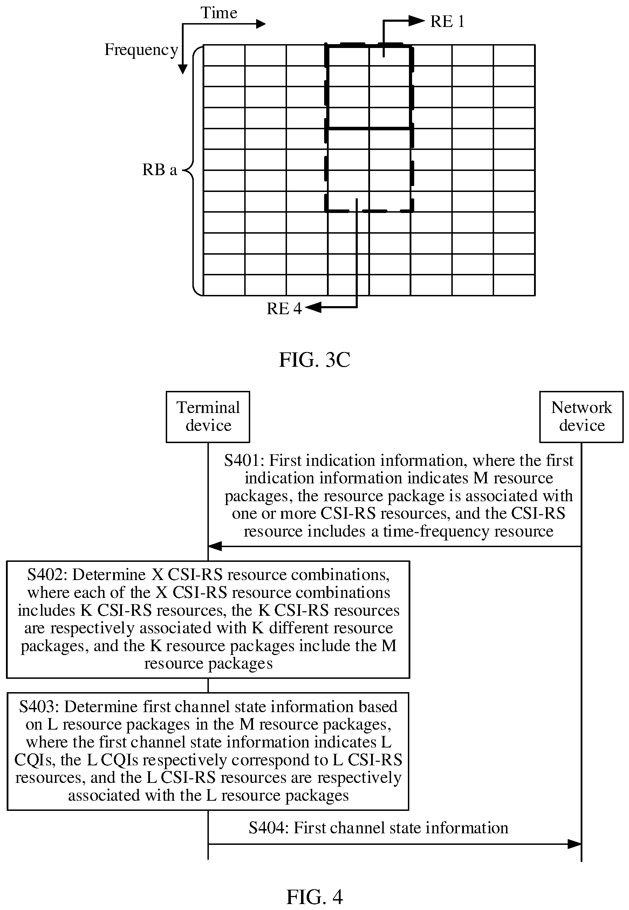

For example, M is equal to 2, O is equal to M, and the M resource packages include a resource package 1 and a resource package 2. The resource package 1 may include a CSI-RS resource 1, and the resource package 2 may include a CSI-RS resource 2. For a time-frequency resource relationship between the two CSI-RS resources in the manner 2, refer to FIG. 3C. In FIG. 3C, a horizontal axis represents time, a vertical axis represents frequency, a solid-line box corresponds to the CSI-RS resource 1, and a dashed-line box corresponds to the CSI-RS resource 2. As shown in FIG. 3C, the CSI-RS resource 1 corresponds to an RE 1 in an RB a, and the CSI-RS resource 2 corresponds to time-frequency resources corresponding to the RE 1 and an RE 4 in the RB a. That is, time-frequency resources of the CSI-RS resource 1 and time-frequency resources of the CSI-RS resource 2 may be partially the same. The CSI-RS resource 1 and the CSI-RS resource 2 may have a same time-frequency resource, and the time-frequency resource of the CSI-RS resource 1 and the CSI-RS resource 2 may be the RE 1 in the RB a in FIG. 3C.

It should be noted that the time-frequency resources of the CSI-RS resources in the at least two of the M resource packages may include but are not limited to the foregoing two cases. In some scenarios, time-frequency resources of CSI-RS resources in two of the M resource packages may be different.

Step S202: The terminal device determines first channel state information based on L resource packages in the M resource packages, where the first channel state information indicates L CQIs, the L CQIs respectively correspond to L CSI-RS resources, and the L CSI-RS resources are respectively associated with the L resource packages.

Step S203: The terminal device sends the first channel state information to the network device. Correspondingly, the network device receives the first channel state information from the terminal device.

M is greater than or equal to L, and L is greater than 1.

Optionally, the L resource packages may be L resource packages determined by the terminal device, or the L resource packages may be L resource packages in the M resource packages specified by the network device. For example, the network device indicates the L resource packages to the terminal device through one piece of indication information. In this way, by indicating the L resource packages, the network device causes the terminal device to report, based on an actual requirement, channel measurement results determined based on CSI-RS resources in different resource packages.

For example, the network device configures four resource packages, the four resource packages respectively correspond to four cases in which antennas are not shut down, 1/4 of antennas are shut down, 1/2 of antennas are shut down, and 3/4 of antennas are shut down, and indexes of the four resource packages are respectively indexes 0 to 3. If the network device determines that load within a current period of time is low and a maximum of 3/4 of the antennas can be shut down, the network device may indicate, through one piece of indication information, the terminal device to report the first channel state information determined based on the four resource packages. If the network device determines that load within another period of time is high, and a maximum of 1/4 of the antennas can be shut down, the network device may indicate, through one piece of indication information, the terminal device to report the first channel state information determined based on a resource package 0 and a resource package 1.

Optionally, the first channel state information includes channel state information corresponding to the L resource packages. In other words, the first channel state information includes L pieces of channel state information determined based on the L resource packages.

In an implementation, the first channel state information may be carried in one CSI reporting instance (for example, a CSI Reporting instance), and the CSI reporting instance corresponds to one CSI reporting configuration (for example, a CSI-ReportConfig).

The following provides two examples in which the first channel state information indicates the L CQIs.

Example 1: The first channel state information includes L first CQIs. The L first CQIs are in one-to-one correspondence with the L CSI-RS resources, the L CSI-RS resources are respectively associated with L resource packages, and the L resource packages belong to the M resource packages.

Optionally, the L first CQIs are L wideband CQIs.

Example 2: The first channel state information includes one second CQI and L-1 differential CQI values. The second CQI corresponds to one first CSI-RS resource in the L CSI-RS resources, and the L CSI-RS resources are respectively associated with the L resource packages. The differential CQI value is a difference between an index of a third CQI and an index of the second CQI, and the third CQI corresponds to a CSI-RS resource other than the first CSI-RS resource in the L CSI-RS resources. To be specific, the third CQI is any CQI corresponding to the CSI-RS resource other than the first CSI-RS resource in the L CSI-RS resources, and the second CQI and L-1 third CQIs corresponding to L-1 CQIs are respectively in one-to-one correspondence with the L CSI-RS resources. Compared with the third CQI, the differential CQI value has a smaller quantity of bits, so that space of reporting information can be compressed, and resources can be saved.

The first CSI-RS resource may be a CSI-RS resource selected from the L CSI-RS resources. A method for selecting the first CSI-RS resource is not limited in this application. In some feasible examples, the first CSI-RS resource is a CSI-RS resource with a smallest index in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of the network device.

Optionally, the differential CQI value may be equal to an offset value between the index of the third CQI and the index of the second CQI.

Optionally, the second CQI is a wideband CQI, the L-1 differential CQI values are L-1 wideband differential CQI values, and the third CQI is a wideband CQI.

In some feasible examples, an absolute value of the wideband differential CQI value is greater than or equal to 1, or the absolute value of the wideband differential CQI value is greater than or equal to 2. Optionally, the absolute value of the wideband differential CQI value is greater than 0.

Power of a CSI-RS changes regularly before and after the antenna is shut down, for example, if a base station shuts down half of the antenna, corresponding received power of the CSI-RS decreases by about 6 dB. Therefore, there is a range of differential CQI values of different CSI-RS resources. In this example, the range of the reported differential CQI value is constrained.

Optionally, the terminal device may report the L-1 wideband differential CQI values based on an index that is of the wideband differential CQI value and that is preconfigured by the network device or predefined. Optionally, symbols of the wideband differential CQI values are the same, for example, are all positive numbers or negative numbers.

For example, the wideband differential CQI value may be equal to the index of the third CQI minus the index of the second CQI. Table 1, Table 2, Table 3, and Table 4 each describe a mapping relationship between the wideband differential CQI value and the index of the wideband differential CQI value. Table 1, Table 2, Table 3, and Table 4 each correspond to a case in which the index of the third CQI is less than the index of the second CQI. If the index of the third CQI is greater than the index of the second CQI, negative values in Table 1, Table 2, Table 3, and Table 4 may all be changed to positive values. In Table 1 and Table 2, the wideband differential CQI value may be reported by using 1-bit information, and in Table 3 and Table 4, the wideband differential CQI value may be reported by using 2-bit information. It should be understood that reporting the index of the wideband CQI offset value can reduce resource overheads compared with reporting the wideband CQI.

**Table 1**

| Index of the wideband differential CQI value | Wideband differential CQI value |
|---|---|
| 0 | -1 |
| 1 | -2 |

**Table 2**

| Index of the wideband differential CQI value | Wideband differential CQI value |
|---|---|
| 0 | -2 |
| 1 | -3 |

**Table 3**

| Index of the wideband differential CQI value | Wideband differential CQI value |
|---|---|
| 0 | -1 |
| 1 | -2 |
| 2 | -3 |
| 3 | -4 |

**Table 4**

| Index of the wideband differential CQI value | Wideband differential CQI value |
|---|---|
| 0 | -2 |
| 1 | -3 |
| 2 | -4 |
| 3 | -5 |

Optionally, when the first channel state information includes the L wideband CQIs, or the wideband CQI and the L-1 wideband differential CQI values, the first channel state information may further include L sub-band CQIs corresponding to the L CSI-RS resources, or one sub-band CQI corresponding to the L CSI-RS resources, or one first sub-band CQI and L-1 differential sub-band CQIs that correspond to the L CSI-RS resources.

The L sub-band CQIs corresponding to the L CSI-RS resources may include a sub-band CQI corresponding to each of the L CSI-RS resources, and each sub-band CQI includes T sub-band offset levels (sub-band offset levels). T is a quantity of sub-bands, the T sub-band offset levels respectively correspond to the T sub-bands, and a sub-band offset level of a sub-band t is defined as a difference between an index of a CQI of the sub-band t and an index of a wideband CQI. In other words, a frequency domain resource of each of the L CSI-RS resources may be divided into T sub-bands, and the L sub-band CQIs corresponding to the L CSI-RS resources include a total of L*T sub-band offset levels.

The sub-band CQI corresponding to the L CSI-RS resources may be a sub-band CQI of the first CSI-RS resource. The sub-band CQI of the first CSI-RS resource includes T sub-band offset levels. The T sub-band offset levels are described above, and details are not described herein again. In other words, the L CSI-RS resources correspond to the same sub-band CQI, and the sub-band CQI corresponding to the L CSI-RS resources includes a total of the T sub-band offset levels.

The first sub-band CQI is a sub-band CQI of the first CSI-RS resource, and the L-1 differential sub-band CQIs respectively correspond to the L-1 CSI-RS resources other than the first CSI-RS resource in the L CSI-RS resources. The differential sub-band CQI includes T sub-band offset level offsets, and the T sub-band offset level offsets respectively correspond to T sub-bands. A sub-band offset level offset of a sub-band t of one of the L-1 CSI-RS resources is defined as a difference between a sub-band offset level of a sub-band t of the first CSI-RS resource and a sub-band offset level of a sub-band t of the CSI-RS resource. In other words, a frequency domain resource of each of the L CSI-RS resources may be divided into T sub-bands, the first sub-band CQI includes T sub-band offset levels, and the L-1 differential sub-band CQIs include T*(L-1) sub-band offset level offsets.

Optionally, the terminal device may report L-1 sub-band differential CQI values based on an index that is of the sub-band offset level offset and that is preconfigured by the network device or predefined. For example, Table 5 describes a mapping relationship between a sub-band differential CQI value and an index of the sub-band differential CQI value. It should be understood that reporting the index of the sub-band offset level offset can reduce resource overheads compared with reporting the sub-band CQI.

**Table 5**

| Index | Sub-band offset level offset |
|---|---|
| 0 | >0 |
| 1 | ≤0 |

In some feasible examples, when the first channel state information includes the L CQIs, the first channel state information may further include one first PMI or L second PMIs, and/or one first RI or L second RIs.

The first PMI corresponds to the L CSI-RS resources, and the L second PMIs are in one-to-one correspondence with the L CSI-RS resources. That the first PMI corresponds to the L CSI-RS resources may be understood as that a PMI of any one of the L CSI-RS resources is the first PMI. The first PMI may be determined based on the CSI-RS resource with the smallest index in the L CSI-RS resources, may be determined based on the CSI-RS resource with the largest synchronization signal power offset in the L CSI-RS resources, may be determined based on one of the L CSI-RS resources indicated by the network device, or the like. It may be understood that higher power indicates higher accuracy of calculating the PMI. A predefined rule (for example, a larger synchronization signal power offset indicates higher power corresponding to a CSI-RS resource) or the network device may indicate the terminal device to calculate the PMI based on a CSI-RS resource with highest power in the L CSI-RS resources. When a CSI-RS resource corresponding to one reported PMI is the CSI-RS resource with the largest synchronization signal power offset in the L CSI-RS resources, the accuracy of calculating the PMI can be improved. When one PMI is reported, reporting resources can be saved.

The first RI corresponds to the L CSI-RS resources, and the L second RIs are in one-to-one correspondence with the L CSI-RS resources. The first RI is not limited in this application. That the first RI corresponds to the L CSI-RS resources may be understood as that an RI of any one of the L CSI-RS resources is the first RI. It may be understood that when one RI is reported, reporting resources can be saved.

In some feasible examples, the L first CQIs are obtained through calculation respectively based on the L second PMIs, or the second CQI and the L-1 differential CQI values are obtained through calculation respectively based on the L second PMIs.

Alternatively, in some feasible examples, the L first CQIs are obtained through calculation based on the first PMI, or the second CQI and the L-1 differential CQI values are obtained through calculation based on the first PMI.

Alternatively, in some feasible examples, the L first CQIs are obtained through calculation respectively based on the L second RIs, or the second CQI and the L-1 differential CQI values are obtained through calculation respectively based on the L second RIs.

Alternatively, in some feasible examples, the L first CQIs are obtained through calculation based on the first RI, or the second CQI and the L-1 differential CQI values are obtained through calculation based on the first RI.

It may be understood that, in the foregoing examples, the L first CQIs are obtained through calculation based on the one or L PMIs or the one or L RIs. Alternatively, the second CQI and the L-1 differential CQI values are obtained through calculation based on the one or L PMIs or the one or L RIs. In this way, a plurality of PMIs or RIs may be reported, and the first channel state information can be obtained based on the plurality of PMIs or RIs, to improve the accuracy of CSI reporting. Further, because a difference between the PMIs in the CSI-RS resource sets and a difference between the RIs in the CSI-RS resource sets are small, one PMI or RI may be reported, and the first channel state information is reported by using a CQI or a differential CQI value obtained based on the PMI. This can further reduce reporting overheads, and reduce calculation complexity of the terminal device.

When the first indication information indicates the M CSI-RS resource sets, in some feasible examples, the first channel state information may further include L indexes, for example, CSI-RS resource indexes (CSI-RS resource indexes, CRIs). The L indexes are respectively indexes of the L CSI-RS resources. In other words, the L indexes respectively correspond to the L CSI-RS resources.

It should be noted that, a manner of calculating the CQI, the PMI, or the RI may be a common technical means in the art, for example, the PMI may be calculated through singular value decomposition (singular value decomposition, SVD). This is not limited herein.

In a first example, the first channel state information includes L indexes, L first CQIs, L second PMIs, and L second RIs. In this example, in a possible implementation, the L second RIs are calculated respectively based on L CSI-RS resources corresponding to the L indexes, the L second PMIs are calculated respectively based on the L second RIs and the L CSI-RS resources corresponding to the L indexes, and the L CQIs are calculated respectively based on the L second RIs, the L second PMIs, and the L CSI-RS resources corresponding to the L indexes.

In a second example, the first state information includes L indexes, L first CQIs, one first PMI, and one first RI. In this example, in a possible implementation, the first RI is calculated based on L CSI-RS resources corresponding to the L indexes. In other words, the L CSI-RS resources correspond to the same RI. The L second PMIs are calculated respectively based on the first RI and the L CSI-RS resources corresponding to the L indexes, and the L CQIs are calculated respectively based on the first PMI, the first RI, and the L CSI-RS resources corresponding to the L indexes.

In a third example, the first state information includes L indexes, L first CQIs, one first PMI, and L second RIs. In this example, in a possible implementation, the L second RIs are calculated respectively based on L CSI-RS resources corresponding to the L indexes, the L second RIs are in one-to-one correspondence with the L CSI-RS resources, and the first PMI is calculated based on a CSI-RS resource 1 in the L CSI-RS resources corresponding to the L indexes and a second RI corresponding to the CSI-RS resource 1. The first PMI corresponds to a first precoding matrix, and a correspondence between the first PMI and the first precoding matrix may be described in TS 38.214. L-1 CSI-RS resources other than the CSI-RS resource 1 in the L CSI-RS resources correspond to L-1 second precoding matrices, a CSI-RS resource l' is one of the L-1 CSI-RS resources, a second precoding matrix l' corresponding to the CSI-RS resource l' is obtained by extracting a column vector from the first precoding matrix, and a quantity of the extracted column vectors is a value of a second RI corresponding to the CSI-RS resource l'. A first CQI corresponding to the CSI-RS resource 1 is calculated based on a second RI corresponding to the CSI-RS resource 1, the CSI-RS resource 1, and the first PMI, and the CSI-RS resource l' is calculated based on the second RI corresponding to the CSI-RS resource l', the CSI-RS resource l', and the second precoding matrix corresponding to the CSI-RS resource l'.

In a fourth example, the first channel state information includes L indexes, one second CQI, L-1 differential CQI values, L second PMIs, and L second RIs. In this example, in a possible implementation, the L second RIs are calculated respectively based on L CSI-RS resources corresponding to the L indexes, the L second PMIs are calculated respectively based on the L second RIs and the L CSI-RS resources corresponding to the L indexes, and the second CQI and the L-1 differential CQI values (or the second CQI and L-1 third CQIs corresponding to the L-1 differential CQI value) are calculated respectively based on the L second RIs, the L second PMIs, and the L CSI-RS resources corresponding to the L indexes.

In a fifth example, the first state information includes L indexes, one second CQI, L-1 differential CQI values, one first PMI, and one first RI. In this example, in a possible implementation, the second CQI and the L-1 differential CQI values (or the second CQI and L-1 third CQIs corresponding to the L-1 differential CQI value) are calculated respectively based on the first RI, the first PMI, and L CSI-RS resources corresponding to the L indexes, and the L CSI-RS resources corresponding to the L indexes correspond to the same PMI and the same RI.

In a sixth example, the first state information includes L indexes, one second CQI, L-1 differential CQI values, one first PMI, and L second RIs. In this example, in a possible implementation, the L second RIs are calculated respectively based on L CSI-RS resources corresponding to the L indexes, the L second RIs are in one-to-one correspondence with the L CSI-RS resources, the first PMI is calculated based on a CSI-RS resource 1 in the L CSI-RS resources corresponding to the L indexes and a second RI corresponding to the CSI-RS resource 1, the first PMI corresponds to a first precoding matrix, and a correspondence between the first PMI and the first precoding matrix may be described in TS 38.214. L-1 CSI-RS resources other than the CSI-RS resource 1 in the L CSI-RS resources correspond to L-1 second precoding matrices, a CSI-RS resource l' is one of the L-1 CSI-RS resources, a second precoding matrix l' corresponding to the CSI-RS resource l' is obtained by extracting a column vector from the first precoding matrix, and a quantity of the extracted column vectors is a value of a second RI corresponding to the CSI-RS resource l'. A CQI corresponding to the CSI-RS resource 1 is calculated based on the CSI-RS resource 1, the first PMI, and the second RI corresponding to the CSI-RS resource 1, and a CQI corresponding to the CSI-RS resource l' is calculated based on the CSI-RS resource l', the second RI corresponding to the CSI-RS resource l', and the second precoding matrix corresponding to the CSI-RS resource l'. A differential CQI value corresponding to the CSI-RS resource l' is further determined based on the CQI corresponding to the CSI-RS resource l' and the CQI corresponding to the CSI-RS resource l.

In the communication method shown in FIG. 2, after the first indication information is received, the first channel state information may be determined based on the L resource packages in the M resource packages indicated by the first indication information, and the first channel state information is sent. L is greater than 1, the first channel state information indicates the L CQIs, the L CQIs respectively correspond to the L CSI-RS resources, and the L CSI-RS resources are respectively associated with the L resource packages. In this way, the first channel state information may be reported based on at least two CSI-RS resources, so that configuration resources can be saved, and the accuracy of CSI reporting can be improved. This facilitates a data scheduling effect on a network side.

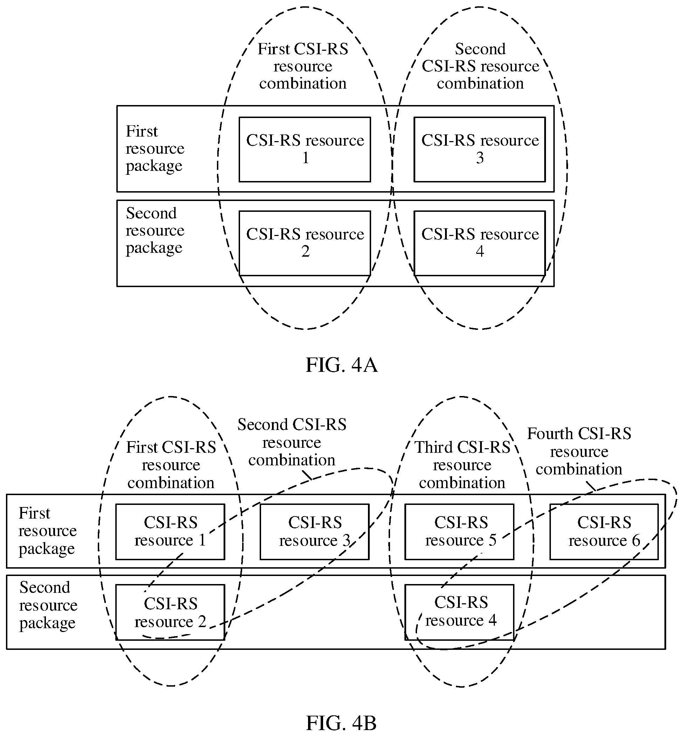

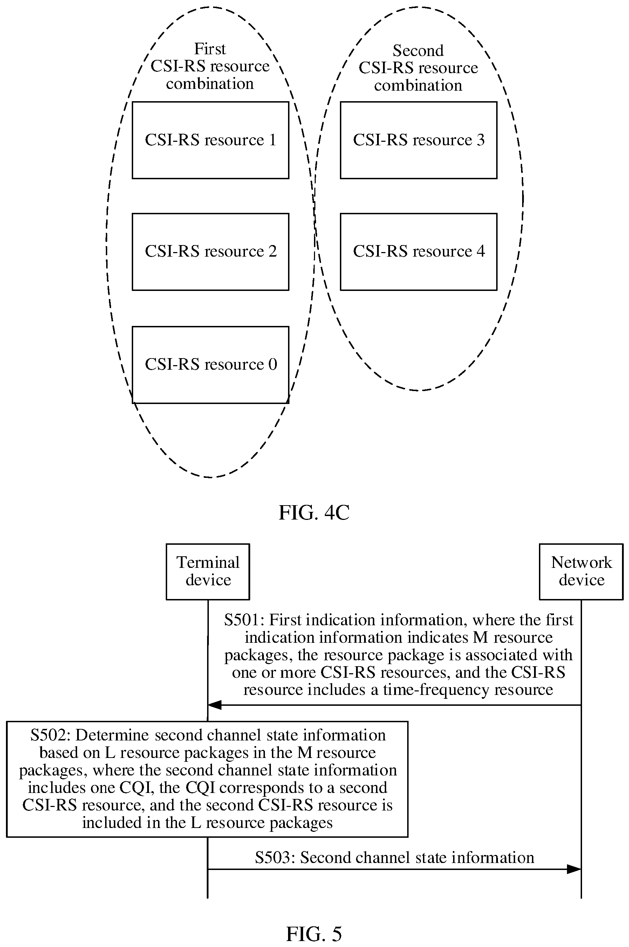

Consistent with the embodiment in FIG. 2, FIG. 4 is a schematic interaction diagram of a second communication method according to an embodiment of this application. The communication method shown in FIG. 4 may be understood as a supplement to the method in FIG. 2. For example, step S402 is added, so that a channel measurement may be performed with reference to a CSI-RS resource combination and a resource package. This can improve measurement flexibility, reduce reporting overheads of channel state information, and reduce a quantity of unnecessary CSI processing units and a quantity of measurements performed by the terminal device. Specifically, as shown in FIG. 4, the communication method includes step S401 to step S404.

Step S401: A network device sends first indication information to a terminal device. Correspondingly, the terminal device receives the first indication information from the network device. The first indication information indicates M resource packages, the resource package is associated with one or more CSI-RS resources, and the CSI-RS resource includes a time-frequency resource.

For step S401, refer to the related descriptions in step S201. Details are not described herein again.

Step S402: The terminal device determines X CSI-RS resource combinations. Each of the X CSI-RS resource combinations includes K CSI-RS resources, the K CSI-RS resources are respectively associated with K different resource packages, and the K resource packages include M resource packages.

The CSI-RS resource combination includes one or more CSI-RS resources, and the one or more CSI-RS resources included in the CSI-RS resource combination respectively belong to different resource packages. In other words, K is greater than or equal to M. One of the X CSI-RS resource combinations may include one CSI-RS resource selected from a plurality of CSI-RS resources included in each of the K resource packages. For example, K=M. Each of the X CSI-RS resource combinations includes M CSI-RS resources, and the M CSI-RS resources respectively belong to the M resource packages.

For example, K is equal to 2, and the K resource packages include a resource package 1 and a resource package 2. The resource package 1 includes a CSI-RS resource 1 and a CSI-RS resource 2, and the resource package 2 includes a CSI-RS resource 3 and a CSI-RS resource 4. X is equal to 2, the X CSI-RS resource combinations include a CSI-RS resource combination 1 and a CSI-RS resource combination 2, the CSI-RS resource combination 1 may include the CSI-RS resource 1 in the resource package 1 and the CSI-RS resource 3 in the resource package 2, and the CSI-RS resource combination 2 may include the CSI-RS resource 2 in the resource package 1 and the CSI-RS resource 4 in the resource package 2.

Optionally, before step S402, the method may further include: The network device sends indication information #A to the terminal device. Correspondingly, the terminal device receives the indication information #A from the network device. The indication information #A indicates the X CSI-RS resource combinations. The indication information #A and the first indication information may be carried in a same piece of signaling. In this way, the M resource packages and the X CSI-RS resource combinations may be indicated in the same piece of indication information. This helps save configuration resources.

Optionally, CSI-RS resources in one CSI-RS resource combination have a spatial domain correlation. The spatial domain correlation means that coverage areas of antenna ports corresponding to the CSI-RS resources are the same or overlapping, and may specifically include a same pointing direction, beam range coverage, or the like. For example, the resource combination 1 includes the CSI-RS resource 1 when an antenna is not shut down and the CSI-RS resource 2 when half of the antenna is shut down, and the CSI-RS resource 1 and the CSI-RS resource 2 have the spatial domain correlation. For another example, a point direction for the CSI-RS resource 1 when an antenna is not shut down is the same as that for the CSI-RS resource 2 when half of the antenna is shut down, or a beam of the CSI-RS resource 1 when the antenna is not shut down is covered by a beam of the CSI-RS resource 2 when the half of the antenna is shut down.

For example, refer to FIG. 4A and FIG. 4B separately. FIG. 4A and FIG. 4B are each a diagram of CSI-RS resources according to an embodiment of this application. As shown in FIG. 4A, a first CSI-RS resource combination is associated with a CSI-RS resource 1 in a first resource package and a CSI-RS resource 2 in a second resource package, and a second CSI-RS resource combination is associated with a CSI-RS resource 3 in the first resource package and a CSI-RS resource 4 in the second resource package. It can be learned that one CSI-RS resource belongs to one resource package and one CSI-RS resource combination. In other words, the resource package and the CSI-RS resource combination may be associated with different CSI-RS resources.

As shown in FIG. 4B, a first CSI-RS resource combination is associated with a CSI-RS resource 1 in a first resource package and a CSI-RS resource 2 in a second resource package, and a second CSI-RS resource combination is associated with a CSI-RS resource 3 in the first resource package and the CSI-RS resource 2 in the second resource package. A third CSI-RS resource combination is associated with a CSI-RS resource 5 in the first resource package and a CSI-RS resource 4 in the second resource package, and a fourth CSI-RS resource combination is associated with a CSI-RS resource 6 in the first resource package and the CSI-RS resource 4 in the second resource package. It can be learned that one CSI-RS resource belongs to one resource package, and the CSI-RS resource may belong to two CSI-RS resource combinations. In other words, the two CSI-RS resource combinations may be associated with the same CSI-RS resource.

It may be understood that, when the CSI-RS resources in the CSI-RS resource combination have the spatial domain correlation, in a subsequent process of determining (calculating) channel state information, the terminal device may use the spatial domain correlation of the CSI-RS resources, to reduce complexity of determining (calculating) the channel information.

Step S403: The terminal device determines first channel state information based on L resource packages in the M resource packages, where the first channel state information indicates L CQIs, the L CQIs respectively correspond to L CSI-RS resources, and the L CSI-RS resources are respectively associated with the L resource packages.

With reference to the descriptions in step S404, the L CSI-RS resources may belong to one CSI-RS resource combination. For example, the L CSI-RS resources may belong to a first CSI-RS resource group.

In some feasible examples, the communication method shown in FIG. 2 or FIG. 4 may further include: The terminal device determines a first quantity. The first quantity is a quantity of processing units occupied by the terminal device to calculate the first channel state information on the L CSI-RS resources, and the first quantity is a positive integer less than or equal to L.

In this way, the terminal device may determine or measure the channel state information by using a spatial domain correlation between the L CSI-RS resources. When the first quantity is less than L i, the quantity of processing units occupied by the terminal device to calculate the channel state information is less than a quantity of CSI-RS resources used in the calculation of the channel state information, to reduce complexity of CSI calculation, for example, reduce a quantity of CSI processing units (CSI processing units) occupied for calculating the CSI. The first quantity is the quantity of processing units occupied by the terminal device to calculate the first channel state information on the L CSI-RS resources. It may also be understood as the first quantity is a quantity of processing units occupied by the terminal device to calculate the first channel state information on only the L CSI-RS resources.

For example, the terminal device may first determine a PMI of one of the L CSI-RS resources by using the spatial domain correlation between the L CSI-RS resources when determining a PMI of each of the L CSI-RS resources, and determine a PMI of another CSI-RS resource. In this way, the terminal device may reduce, by using the spatial domain correlation, a quantity of times of traversing or calculating the PMI on the another CSI-RS resource, to reduce complexity of calculating the PMI by the terminal device, so as to reduce occupation of computing resources.

Optionally, the terminal device sends indication information indicating the first quantity. For example, the indication information indicates a value of the first quantity, or indicates a value of a first coefficient, where the first quantity is a product of the first coefficient and L.

In some feasible examples, L CSI-RS resource packages include B CSI-RS resources, and the L CSI-RS resource packages are resource packages including the L CSI-RS resources. The communication method shown in FIG. 2 or FIG. 4 may further include: The terminal device determines a second quantity. The second quantity is a quantity of processing units occupied by the terminal device to calculate first channel state information corresponding to the L CSI-RS resource packages, and the second quantity is a positive integer less than or equal to B.

In this way, a part of the B CSI-RS resources are used for channel measurement, so that computing resources can be saved, for example, occupation of processing units (CPUs) is reduced. The second quantity is the quantity of processing units occupied by the terminal device to calculate the first channel state information corresponding to the L resource packages. It may also be understood that the second quantity is a quantity of processing units occupied by the terminal device to calculate the first channel state information on the L CSI-RS resources and at least one other CSI-RS resource. The L CSI-RS resources and the at least one other CSI-RS resource (for example, one or more CSI-RS resources in one resource package) are included in the L CSI-RS resource packages.

Optionally, at least one of a CSI-RS resource that is in the B CSI-RS resources and that is other than a first resource package and the first CSI-RS resource combination occupies no CSI processing unit. The first resource package may be understood as a resource package used to determine a first CSI-RS resource. In other words, a CSI-RS resource in the first resource package may be predefined, or may be preconfigured by the network device, or may be a reference resource obtained through an indication of configuration information of the network device. The first resource package is not limited in this application.

For example, the first resource package is determined based on indexes of the L resource packages. For example, the first resource package is a resource package with a largest or smallest index in the L resource packages.

For another example, the first resource package is determined based on quantities of ports of CSI-RS resources associated with the L resource packages. For example, a CSI-RS resource in the first resource package is a CSI-RS resource with a largest or smallest quantity of ports in the L resource packages.

For another example, the first resource package is determined based on power offsets or synchronization signal power offsets of CSI-RS resources associated with the L resource packages. For example, a CSI-RS resource in the first resource package is a CSI-RS resource with a largest or smallest power offset in the L resource packages, or the CSI-RS resource in the first resource package is a CSI-RS resource with a largest or smallest synchronization signal power offset in the L resource packages.

It may be understood that, when the at least one of the CSI-RS resources that are in the B CSI-RS resources and that are other than the first resource package and the first CSI-RS resource combination occupies no CSI processing unit, the terminal may be prevented from calculating channel state information on a CSI-RS resource other than the first resource package and the first CSI-RS resource combination in the B CSI-RS resources, to save computing resources.

Optionally, the second quantity is equal to A+L-1. A is a quantity of CSI-RS resources included in the first resource package. In other words, the CSI-RS resource that is in the B CSI-RS resources and that is other than the first resource package and the first CSI-RS resource combination occupies no CSI processing unit.

In some feasible examples, the communication method shown in FIG. 2 or FIG. 4 may further include: The terminal device determines the first channel state information based on the L CSI-RS resources and the A CSI-RS resources. The A CSI-RS resources belong to the first resource package in the L resource packages. For descriptions of the first resource package, refer to the foregoing examples. Details are not described herein again. It should be understood that, by performing this step, the second quantity may be less than B. For example, the second quantity is equal to A+L-1.

Optionally, step S403 or the step in which the terminal device determines the first channel state information based on the L CSI-RS resources and the A CSI-RS resources may include: The terminal device determines the first CSI-RS resource based on the A CSI-RS resources in the first resource package. The terminal device determines the first channel state information based on a first CSI-RS combination associated with the first CSI-RS resource.

Determining the first CSI-RS resource based on the A CSI-RS resources may be understood as that the terminal device occupies A CSI processing units to calculate CSI on the A CSI-RS resources, and determines the first CSI-RS resource in the A CSI-RS resources. For example, the first CSI-RS resource is a CSI-RS resource with a largest channel quality value, a CSI-RS resource with a largest signal strength value, or the like.

The first CSI-RS resource combination includes L CSI-RS resources, the L CSI-RS resources include the first CSI-RS resource, and the CSI-RS resource included in the first resource package may be understood as a reference resource used to determine the L CSI-RS resources. In other words, the A CSI-RS resources in the first resource package are first measured, then the first CSI-RS resource is determined in the A CSI-RS resources, and a measurement is performed based on the first CSI-RS resource combination including the first CSI-RS resource, to obtain the first channel state information that includes the L reported CQIs respectively associated with the L CSI-RS resources. In this way, measurements for all CSI-RS resources can be avoided, and measurement effectiveness can be improved.

To avoid repeated measurements, when the first channel state information is determined based on the first CSI-RS resource combination, the measurement may not be performed based on the first CSI-RS resource. In other words, the terminal device calculates the CSI on L-1 CSI processing units respectively corresponding to the L-1 CSI-RS resources other than the first CSI-RS resource in the first CSI-RS resource combination. Alternatively, the terminal device calculates the CSI based on the A CSI-RS resources in the first resource package and L-1 CSI-RS resources other than the first CSI-RS resource in the first CSI-RS resource combination, to obtain the first channel state information. Herein, the second quantity of occupied CSI processing units is equal to A+L-1. In this way, an unnecessary measurement can be avoided, and an unnecessary CSI processing unit can be prevented from being occupied.

For example, refer to FIG. 4A. If the first resource package includes the CSI-RS resource 1 and the CSI-RS resource 3, two CSI processing units need to be occupied when the first resource package is measured. If it is determined, based on a measurement result of the first resource package, that the first CSI-RS resource in the first resource package is the CSI-RS resource 1, it may be determined that the first CSI-RS resource combination is a resource combination including the CSI-RS resource 1. Then, the CSI-RS resource other than the first CSI-RS resource in the first CSI-RS resource combination is measured, that is, the CSI-RS resource 2 is measured, and the first channel state information may be reported. The first channel state information may include a CQI corresponding to each of the CSI-RS resource 1 and the CSI-RS resource 2 or a CQI corresponding to one of the CSI-RS resource 1 and the CSI-RS resource 2. The first channel state information may alternatively include an RI, a PMI, i1 in PMI or the like corresponding to each of the CSI-RS resource 1 and the CSI-RS resource 2 or an RI, a PMI, or the like corresponding to one of the CSI-RS resource 1 and the CSI-RS resource 2. CSI-RS resources measured this time are the CSI-RS resource 1, the CSI-RS resource 3, and the CSI-RS resource 2, but the CSI-RS resource 4 is not measured, and the second quantity=2+2-1=3<4.

Step S404: The terminal device sends the first channel state information to the network device. Correspondingly, the network device receives the first channel state information from the terminal device.

M is greater than or equal to L, and L is greater than 1. Optionally, the L resource packages may be L resource packages determined by the terminal device, or the L resource packages may be L resource packages in the M resource packages specified by the network device. Refer to the descriptions of step S203, and details are not described herein again.

In an implementation, the first channel state information may be carried in one CSI reporting instance, and the CSI reporting instance corresponds to one CSI reporting configuration.

Optionally, the first channel state information includes an index, and the index is an index of a first CSI-RS resource combination in X CSI-RS resource combinations or may include an index of one CSI-RS resource in the first CSI-RS resource combination. The first CSI-RS resource combination may include L CSI-RS resources. In this way, when the CSI-RS resource combination is determined, the first channel state information of the CSI-RS resource combination may be reported, or the first channel state information of the CSI-RS resource in the CSI-RS resource combination may be reported. It may be understood that, after the X CSI-RS resource combinations are determined, CSI may be reported per CSI-RS resource combination. This helps save resources.

Optionally, a QCL relationship between CSI-RS resources included in one CSI-RS resource combination satisfies typeD, that is, receiving spatial filters are the same.

An example in which the first channel state information indicates the L CQIs is described in step S203. To be specific, the L CSI-RS resources are included in the first CSI-RS resource combination.

Optionally, the first channel state information further includes a first PMI or L second PMIs. An implementation of the first PMI or the L second PMIs is described in step S203. To be specific, the L CSI-RS resources are included in the first CSI-RS resource combination.

Optionally, the first channel state information further includes a first RI or L second RIs. An implementation of the first RI or the L second RIs is described in step S203. To be specific, the L CSI-RS resources are included in the first CSI-RS resource combination.

When the CSI-RS resource combination is determined, the first channel state information may include the following six examples.

In a first example, the first channel state information includes one index, L first CQIs, L second PMIs, and L second RIs. In this example, in a possible implementation, the L second RIs are calculated respectively based on L CSI-RS resources corresponding to the index, the L second PMIs are calculated respectively based on the L second RIs and the L CSI-RS resources corresponding to the index, and the L CQIs are calculated respectively based on the L second RIs, the L second PMIs, and the L CSI-RS resources corresponding to the index.

In a second example, the first state information includes one index, L first CQIs, one first PMI, and one first RI. In this example, in a possible implementation, the first RI is calculated based on L CSI-RS resources corresponding to the index. In other words, the L CSI-RS resources correspond to the same RI. The L second PMIs are calculated respectively based on the first RI and the L CSI-RS resources corresponding to the index, and the L CQIs are calculated respectively based on the first PMI, the first RI, and the L CSI-RS resources corresponding to the index.

In a third example, the first state information includes one index, L first CQIs, one first PMI, and L second RIs. In this example, in a possible implementation, the L second RIs are calculated respectively based on L CSI-RS resources corresponding to the index, the L second RIs are in one-to-one correspondence with the L CSI-RS resources, and the first PMI is calculated based on a CSI-RS resource 1 in the L CSI-RS resources corresponding to the index and a second RI corresponding to the CSI-RS resource 1. The first PMI corresponds to a first precoding matrix, and a correspondence between the first PMI and the first precoding matrix may be described in TS 38.214. L-1 CSI-RS resources other than the CSI-RS resource 1 in the L CSI-RS resources correspond to L-1 second precoding matrices, a CSI-RS resource l' is one of the L-1 CSI-RS resources, a second precoding matrix l' corresponding to the CSI-RS resource l' is obtained by extracting a column vector from the first precoding matrix, and a quantity of the extracted column vectors is a value of a second RI corresponding to the CSI-RS resource l'.A first CQI corresponding to the CSI-RS resource 1 is calculated based on a second RI corresponding to the CSI-RS resource 1, the CSI-RS resource 1, and the first PMI, and the CSI-RS resource l' is calculated based on the second RI corresponding to the CSI-RS resource l', the CSI-RS resource l', and the second precoding matrix corresponding to the CSI-RS resource l'.

In a fourth example, the first channel state information includes one index, one second CQI, L-1 differential CQI values, L second PMIs, and L second RIs. In this example, in a possible implementation, the L second RIs are calculated respectively based on L CSI-RS resources corresponding to the index, the L second PMIs are calculated respectively based on the L second RIs and the L CSI-RS resources corresponding to the index, and the second CQI and the L-1 differential CQI values (or the second CQI and L-1 third CQIs corresponding to the L-1 differential CQI value) are calculated respectively based on the L second RIs, the L second PMIs, and the L CSI-RS resources corresponding to the index.

In a fifth example, the first state information includes one index, one second CQI, L-1 differential CQI values, one first PMI, and one first RI. In this example, in a possible implementation, the second CQI and the L-1 differential CQI values (or the second CQI and L-1 third CQIs corresponding to the L-1 differential CQI value) are calculated respectively based on the first RI, the first PMI, and L CSI-RS resources corresponding to the index, and the L CSI-RS resources corresponding to the index correspond to the same PMI and the same RI.

In a sixth example, the first state information includes one index, one second CQI, L-1 differential CQI values, one first PMI, and L second RIs. In this example, in a possible implementation, the L second RIs are calculated respectively based on L CSI-RS resources corresponding to the index, the L second RIs are in one-to-one correspondence with the L CSI-RS resources, the first PMI is calculated based on a CSI-RS resource 1 in the L CSI-RS resources corresponding to the index and a second RI corresponding to the CSI-RS resource 1, the first PMI corresponds to a first precoding matrix, and a correspondence between the first PMI and the first precoding matrix may be described in TS 38.214. L-1 CSI-RS resources other than the CSI-RS resource 1 in the L CSI-RS resources correspond to L-1 second precoding matrices, a CSI-RS resource l' is one of the L-1 CSI-RS resources, a second precoding matrix l' corresponding to the CSI-RS resource l' is obtained by extracting a column vector from the first precoding matrix, and a quantity of the extracted column vectors is a value of a second RI corresponding to the CSI-RS resource l'. A CQI corresponding to the CSI-RS resource 1 is calculated based on the CSI-RS resource 1, the first PMI, and the second RI corresponding to the CSI-RS resource 1, and a CQI corresponding to the CSI-RS resource l' is calculated based on the CSI-RS resource l', the second RI corresponding to the CSI-RS resource l', and the second precoding matrix corresponding to the CSI-RS resource l'. A differential CQI value corresponding to the CSI-RS resource l' is further determined based on the CQI corresponding to the CSI-RS resource l' and the CQI corresponding to the CSI-RS resource 1.

FIG. 5 is a schematic interaction diagram of a third communication method according to an embodiment of this application. Channel state information reported in the communication method shown in FIG. 5 is different from the channel state information reported in the communication method shown in FIG. 2 or FIG. 4. For example, in FIG. 5, one CQI is reported instead of L CQIs. As shown in FIG. 5, the communication method includes step S501 to step S503.

Step S501: A network device sends first indication information to a terminal device. Correspondingly, the terminal device receives the first indication information from the network device. The first indication information indicates M resource packages, the resource package is associated with one or more CSI-RS resources, and the CSI-RS resource a time-frequency resource.

For step S501, refer to the related descriptions in step S201. Details are not described herein again.

In some feasible examples, CSI-RS resources in at least two of the M resource packages have a same time domain resource and different frequency domain resources; or CSI-RS resources in at least two of the M resource packages have a same time-frequency resource. In this way, the same time domain resource or the same time-frequency resource is configured, so that resources can be saved.

Optionally, the communication method further includes: The network device sends indication information #B to the terminal device. Correspondingly, the terminal device receives the indication information #B from the network device. The indication information #B indicates L resource packages. In this way, second channel state information may be determined based on the specified L resource packages.

Step S502: The terminal device determines the second channel state information based on the L resource packages in the M resource packages. The second channel state information includes one CQI, the CQI corresponds to a second CSI-RS resource, and the second CSI-RS resource is included in the L resource packages.

M is greater than or equal to L, and L is greater than 1. The L resource packages may include L CSI-RS resources. The second CSI-RS resource may be the same as or different from a first CSI-RS resource. This is not limited herein. Refer to the related descriptions in step S202 and step S203. Details are not described herein again.

Step S503: The terminal device sends the second channel state information to the network device. Correspondingly, the network device receives the second channel state information from the terminal device.

In some feasible examples, the second channel state information may further include at least one of the following corresponding to the second CSI-RS resource: one PMI, one RI, and one index. In other words, the second channel state information may include one CQI corresponding to the second CSI-RS resource, and may further include at least one of the PMI, the RI, and the index corresponding to the second CSI-RS resource. It may be understood that reporting of second channel state information of a CSI-RS resource in one of the L resource packages can reduce reporting resource overheads. The second CSI-RS resource may be an optimal CSI-RS resource in the CSI-RS resources included in the L resource packages. For example, the second CSI-RS resource is a CSI-RS resource with a largest channel quality value, a CSI-RS resource with a largest signal strength value, or the like in the CSI-RS resources included in the L resource packages.

In the communication method shown in FIG. 5, after the first indication information is received, the second channel state information may be determined based on the L resource packages in the M resource packages indicated by the first indication information, and the second channel state information is sent. L is greater than 1, the second channel state information includes one CQI, the CQI corresponds to the second CSI-RS resource, and the second CSI-RS resource is included in the L resource packages. In this way, resource configuration can be optimized, and the second channel state information including the CQI can be reported, thereby reducing reporting resource overheads.

In some feasible examples, the communication method shown in FIG. 5 may further include: The terminal device determines that a first quantity is a quantity of processing units occupied by the terminal device to calculate the second channel state information on the L CSI-RS resources, and the first quantity is a positive integer less than or equal to L.

In this way, the terminal device may determine (calculate) the channel state information by using a spatial domain correlation between the L CSI-RS resources, to save computing resources, for example, reduce occupation of processing units (CSI processing units). The first quantity is the quantity of processing units occupied by the terminal device to calculate the second channel state information on the L CSI-RS resources. It may also be understood as the first quantity is a quantity of processing units occupied by the terminal device to calculate the second channel state information on only the L CSI-RS resources.

In some feasible examples, the L CSI-RS resources include B CSI-RS resources, and the L CSI-RS resource packages are resource packages including the L CSI-RS resources. The communication method shown in FIG. 5 may further include: The terminal device determines a second quantity. The second quantity is a quantity of processing units occupied by the terminal device to calculate the second channel state information corresponding to the L CSI-RS resource packages, and the second quantity is a positive integer less than or equal to B.

In this way, a part of the B CSI-RS resources are used for channel measurement, so that computing resources can be saved, for example, occupation of processing units (CPUs) is reduced. The second quantity is the quantity of processing units occupied by the terminal device to calculate the second channel state information corresponding to the L resource packages. It may also be understood that the second quantity is a quantity of processing units occupied by the terminal device to calculate the second channel state information on the L CSI-RS resources and at least one other CSI-RS resource. The L CSI-RS resources and the at least one other CSI-RS resource (for example, one or more CSI-RS resources in one resource package) are included in the L CSI-RS resource packages.

Optionally, L is equal to 1.

Optionally, the communication method shown in FIG. 2, FIG. 4, or FIG. 5 may further include: The terminal device sends indication information #C to the network device. Correspondingly, the network device receives the indication information #C from the terminal device. The indication information #C indicates a quantity of CSI processing units occupied for calculating channel state information. The quantity may include at least one of the first quantity and the second quantity, so that the network device can obtain a quantity of CSI processing units occupied by the terminal device to perform a channel measurement, to improve accuracy of resource allocation.

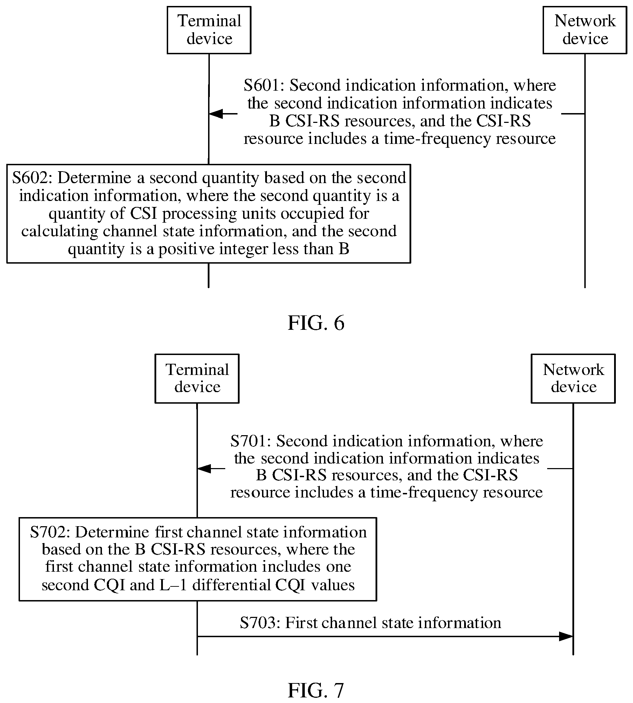

FIG. 6 is a schematic interaction diagram of a fourth communication method according to an embodiment of this application. The communication method shown in FIG. 6 may not relate to a resource package, and may be understood as another implementation of the communication method shown in FIG. 4. Specifically, as shown in FIG. 6, the communication method includes step S601 and step S602.

Step S601: A network device sends second indication information to a terminal device. Correspondingly, the terminal device receives the second indication information from the network device. The second indication information indicates B CSI-RS resources, and the CSI-RS resource includes a time-frequency resource.

In this embodiment of this application, the B CSI-RS resources may be understood as CSI-RS resources configured by the network device for channel measurement. The foregoing A CSI-RS resources belong to a first resource package, and A should be less than B. The B CSI-RS resources may be divided into different CSI-RS resource combinations. For a division method, refer to the foregoing descriptions, and details are not described herein again.

It should be noted that, in the communication method shown in FIG. 4, quantities of CSI-RS resources in the two CSI-RS resource combinations are equal, that is, are both K. In the communication method shown in FIG. 6, quantities of CSI-RS resources in two CSI-RS resource combinations may be equal or unequal. For an equal solution, refer to an example in FIG. 4A or FIG. 4B. For an unequal solution, refer to FIG. 4C. FIG. 4C is another diagram of CSI-RS resources according to an embodiment of this application. As shown in FIG. 4C, a first CSI-RS resource combination is associated with a total of three CSI-RS resources: a CSI-RS resource 0, a CSI-RS resource 1, and a CSI-RS resource 2. A second CSI-RS resource combination is associated with a total of two CSI-RS resources: a CSI-RS resource 3 and a CSI-RS resource 4.

Optionally, the second indication information may be a CSI reporting configuration (for example, a CSI-ReportConfig). In this way, the terminal device may report CSI in one CSI report based on a parameter indicated in the CSI reporting configuration. Optionally, a reporting quantity of the CSI reporting configuration includes at least one of the following: a CQI, a PMI, and an RI.

The second indication information indicates the B CSI-RS resources. In an implementation, the second indication information may include B pieces of CSI-RS resource configuration information, and the B pieces of CSI-RS resource configuration information respectively indicate the B CSI-RS resources. In another implementation, the second indication information may include configuration information of X CSI-RS resource combinations associated with the B CSI-RS resources, or may include configuration information of P resource packages associated with the B CSI-RS resources, or the like.

Optionally, the B CSI-RS resources may be included in a plurality of resource packages. For descriptions of the resource packages, refer to the foregoing descriptions. Details are not described herein again.

In some feasible examples, the B CSI-RS resources are CSI-RS resources included in C CSI-RS resource combinations.

In this embodiment of this application, X may be less than or equal to C. For content of the CSI-RS resource combination, refer to the descriptions in step S402. Details are not described herein again. In this way, a channel measurement may be performed per CSI-RS resource combination. When CSI-RS resources in the CSI-RS resource combination have a spatial domain correlation, the spatial domain correlation between the CSI-RS resources may be further used to reduce complexity of determining (calculating) channel information.

Optionally, the communication method shown in FIG. 6 may further include: determining the C CSI-RS resource combinations associated with the B CSI-RS resources.

Optionally, the communication method shown in FIG. 6 may further include: The network device sends indication information #D to the terminal device. Correspondingly, the terminal device receives the indication information #D from the network device. The indication information #D indicates the C CSI-RS resource combinations. The indication information #D and second indication information may be carried in a same piece of signaling. In this way, the B CSI-RS resources and the C CSI-RS resource combinations may be indicated in the same piece of indication information. This helps save configuration resources.

Optionally, the communication method shown in FIG. 6 may further include: The network device sends indication information #E to the terminal device. Correspondingly, the terminal device receives the indication information #E from the network device. The indication information #E indicates a configuration of the CSI-RS resource combination, and may be a CSI-RS resource combination division manner, an association relationship between the CSI-RS resource and the CSI-RS resource combination, or the like. In this way, the C CSI-RS resource combinations associated with the B CSI-RS resources may be determined based on the indication information #E. The indication information #E and the second indication information may be carried in a same piece of signaling. In this way, the B CSI-RS resources and the C CSI-RS resource combinations associated with the B CSI-RS resources may be indicated in the same piece of indication information. This helps save configuration resources.

It should be noted that the network device may directly indicate the C CSI-RS resource combinations through the indication information #D without sending the indication information #E, or may indirectly indicate, without sending the indication information #D, the C CSI-RS resource combinations through the indication information #E indicating the configuration of the CSI-RS resource combination, or may send the indication information #D and the indication information #E.

Optionally, the C CSI-RS resource combinations include at least one CSI-RS resource combination in which a resource satisfies resource nesting. For example, a fifth CSI-RS resource combination in the C CSI-RS resource combinations satisfies resource nesting, the fifth CSI-RS resource combination includes a fifth CSI-RS resource and a sixth CSI-RS resource, a quantity of ports of the fifth CSI-RS resource is less than a quantity of ports of the sixth CSI-RS resource, and a time-frequency resource included in the fifth CSI-RS resource is included in a time-frequency resource included in the sixth CSI-RS resource. The fifth CSI-RS resource combination may be any CSI-RS resource combination in the C CSI-RS resource combinations.

Step S602: The terminal device determines a second quantity based on the second indication information. The second quantity is a quantity of CSI processing units occupied for calculating channel state information, and the second quantity is a positive integer less than B.

The channel state information may include the foregoing first channel state information or second channel state information. For content of the first channel state information and the second channel state information, refer to the foregoing descriptions. Details are not described herein again.

In some feasible examples, the B CSI-RS resources include C reference resources, the C reference resources respectively belong to the C CSI-RS resource combinations, and at least one of a CSI-RS resource that is in the B CSI-RS resources and that is other than the C reference resources and the first CSI-RS resource combination occupies no CSI processing unit.

Alternatively, in some feasible examples, the B CSI-RS resources include C reference resources, the C reference resources respectively belong to the C CSI-RS resource combinations, and a CSI-RS resource other than a CSI-RS resource that is in the B CSI-RS resources and that is other than the C reference resources and the first CSI-RS resource combination occupies no CSI processing unit.

The C reference resources may be understood as the A CSI-RS resources in the foregoing first resource package, or the C reference resources may include a CSI-RS resource with a largest quantity of ports in each of the C CSI-RS resource combinations, or the C reference resources may include a CSI-RS resource with highest power in each of the C CSI-RS resource combinations, or the C reference resources may include a CSI-RS resource with a smallest index in each of the C CSI-RS resource combinations. For content of the first CSI-RS resource combination, refer to the foregoing descriptions. Details are not described herein again.

In this way, the channel measurement may be performed based on the C reference resources to obtain a first CSI-RS resource, and a CSI-RS resource combination associated with the first CSI-RS resource is determined, to perform the channel measurement based on the CSI-RS resource combination. If the first CSI-RS resource combination is a CSI-RS resource combination corresponding to a CSI-RS resource reported in the channel state information, the channel measurement is performed on the CSI-RS resource in the CSI-RS resource combination in the first CSI-RS resource combination. When the at least one of the CSI-RS resources that are in the B CSI-RS resources and that are other than the C reference resources and the first CSI-RS resource combination occupies no CSI processing unit, channel measurements are prevented from being performed for all CSI-RS resources that are in the B CSI-RS resources and that are other than the C reference resources and the first CSI-RS resource combination, to save resources. When the CSI-RS resource other than the CSI-RS resource that is in the B CSI-RS resources and that is other than the C reference resources and the first CSI-RS resource combination occupies no CSI processing unit, none of the CSI-RS resources that are in the B CSI-RS resources and that are other than the C reference resources and the first CSI-RS resource combination is used for channel measurement, to further save resources.

In some feasible examples, the at least one of the CSI-RS resources that are in the B CSI-RS resources and that are other than the C reference resources and the first CSI-RS resource combination is not an active CSI-RS resource, and a CSI-RS port of the at least one of the CSI-RS resources that are in the B CSI-RS resources and that are other than D reference resources and the first CSI-RS resource combination is not an active CSI-RS port.

In this way, all the B CSI-RS resources can be prevented from being configured as active CSI-RS resources, and all the CSI-RS ports corresponding to the B CSI-RS resources can also be prevented from being configured as active CSI-RS ports, so that channel state information is measured and reported in sufficient time-frequency resources. This helps save resources.

Alternatively, in some feasible examples, the CSI-RS resource that is in the B CSI-RS resources and that is other than the C reference resources and the first CSI-RS resource combination is not an active CSI-RS resource, and a CSI-RS port of the CSI-RS resource that is in the B CSI-RS resources and that is other than the C reference resources and the first CSI-RS resource combination is not an active CSI-RS port.

In other words, none of the CSI-RS resources that are in the B CSI-RS resources and that are other than the C reference resources and the first CSI-RS resource combination is used as an active CSI-RS resource for channel measurement, and none of the CSI-RS ports corresponding to the CSI-RS resources that are in the B CSI-RS resources and that are other than the C reference resources and the first CSI-RS resource combination is used as an active CSI-RS port for channel measurement, so that the resources can be further saved.

Before performing the channel measurement, the terminal device cannot determine a quantity of CSI processing units actually occupied for channel measurement. Therefore, the network device needs to configure a second quantity that satisfies a measurement requirement of the terminal device, so that the terminal device determines, before the channel measurement, the second quantity of configured CSI processing units occupied for channel measurement.

A method for determining the second quantity is not limited in this application, and the terminal device and the network device may perform determining based on a same method. For example, in some feasible examples, the second quantity is equal to C+E-1, and a value of E may be determined based on Manner 1 or Manner 2 mentioned below.

Manner 1: Each of the C CSI-RS resource combinations has a same quantity of CSI-RS resources, and E is a quantity of CSI-RS resources in the first CSI-RS resource combination.

For example, refer to FIG. 4A. If there are a total of two CSI-RS resource combinations: a first CSI-RS resource combination and a second CSI-RS resource combination, C=2. If the first CSI-RS resource combination is associated with two CSI-RS resources, and the second CSI-RS resource combination is also associated with two CSI-RS resources, E is 2, and the second quantity is equal to 2+2-1, namely, 3. In this way, after the C reference resources are indicated, regardless of which CSI-RS resource combination is selected from the C CSI-RS resource combinations for channel measurement, the channel state information can be determined. Because the first CSI-RS resource combination is one of the C CSI-RS resource combinations, it is determined that E is a quantity of CSI-RS resources in the first CSI-RS resource combination.

Manner 2: E is a quantity of CSI-RS resources in a CSI-RS resource combination with a largest quantity of CSI-RS resources in the C CSI-RS resource combinations.

For example, refer to FIG. 4C. If there are a total of two CSI-RS resource combinations: a first CSI-RS resource combination and a second CSI-RS resource combination, C=2. If the first CSI-RS resource combination is associated with three CSI-RS resources, and the second CSI-RS resource combination is associated with two CSI-RS resources, E is 3, and the second quantity is equal to 2+3-1, namely, 4. In this way, the second quantity is configured based on C and the largest quantity of CSI-RS resources in the C CSI-RS resource combinations, so that a case in which configured resources are insufficient can be avoided. This helps improve a success rate of reporting.

It should be noted that the foregoing two manners are merely examples. Actually, E or the second quantity may be determined in another predefined or configured manner. Manner 2 is applicable to a case in which each of the C CSI-RS resource combinations has a same or different quantity of CSI-RS resources.

In the communication method shown in FIG. 6, after the second indication information is received, the second quantity of CSI processing units occupied for calculating the channel state information may be determined based on the B CSI-RS resources in the second indication information. The second quantity is a positive integer less than B. In this way, a quantity of CSI processing units occupied for channel measurement can be reduced, an unnecessary measurement is avoided, and reporting resource overheads can be reduced.

In some feasible examples, after step S602, the communication method shown in FIG. 6 may further include a step that is not shown: The terminal device sends the channel state information to the network device. Correspondingly, the network device receives the channel state information from the terminal device.

In some feasible examples, the channel state information includes an index of the first CSI-RS resource combination in the C CSI-RS resources or an index of one CSI-RS resource in the first CSI-RS resource combination. For content of the first CSI-RS resource combination or the CSI-RS resource combination, refer to the foregoing descriptions. Details are not described herein again.

In some feasible examples, the channel state information includes at least one of the following: one or L CQIs, one or L PMIs, and one or L RIs. The L CQIs correspond to L CSI-RS resources, the L PMIs correspond to the L CSI-RS resources, and the L RIs correspond to the L CSI-RS resources. The L CSI-RS resources are CSI-RS resources included in the first CSI-RS resource combination, the first CSI-RS resource combination includes the first CSI-RS resource, the CQI corresponds to the first CSI-RS resource, the PMI corresponds to the first CSI-RS resource, and the RI corresponds to the first CSI-RS resource.

For content of the channel state information, the first CSI-RS resource combination, and the first CSI-RS resource, refer to the descriptions in FIG. 2, FIG. 4, or FIG. 5. Details are not described herein again. It may be understood that, by implementing the example, resource configuration can be optimized, and the accuracy of CSI reporting can be improved. This facilitates a data scheduling effect on a network side.

FIG. 7 is a schematic interaction diagram of a fifth communication method according to an embodiment of this application. The communication method shown in FIG. 7 may be understood as an implementation of a combination of FIG. 4 (or FIG. 5) and FIG. 6. A form of a time-frequency resource in FIG. 7 may not relate to a CSI-RS resource combination, or may not relate to a resource package. Specifically, as shown in FIG. 7, the communication method includes step S701 to step S703.

Step S701: A network device sends second indication information to a terminal device. Correspondingly, the terminal device receives the second indication information from the network device. The second indication information indicates B CSI-RS resources, and the CSI-RS resource includes a time-frequency resource.

Step S702: The terminal device determines first channel state information based on the B CSI-RS resources. The first channel state information includes one second CQI and L-1 differential CQI values.

For description of the differential CQI value, refer to the descriptions in step S203. Details are not described herein again. It may be understood that channel state information is reported by using a differential CQI value, so that resource overheads can be further reduced.

In some feasible manners, the second CQI corresponds to a second CSI-RS resource, the L-1 differential CQI values correspond to L-1 third CSI-RS resources, and the second CSI-RS resource and the L-1 third CSI-RS resources are included in the B CSI-RS resources.

Optionally, a time-frequency resource of any one of the L-1 CSI-RS resources is included in a time-frequency resource of the second CSI-RS resource. Alternatively, a port included in any one of the L-1 CSI-RS resources is a subset of a port included in the second CSI-RS resource.

Optionally, the first channel state information may further include at least one of the following: one or L PMIs and one or L RIs. The L PMIs correspond to L CSI-RS resources, the L RIs correspond to the L CSI-RS resources, the L CSI-RS resources include the second CSI-RS resource and the L-1 third CSI-RS resources, the PMI corresponds to the second CSI-RS resource, and the RI corresponds to the second CSI-RS resource. In this manner, PMIs and RIs corresponding to a plurality of CSI-RS resources are reported, thereby improving accuracy of CSI reporting. This facilitates a data scheduling effect on a network side.

In some other feasible manners, the second CQI and the L-1 differential CQI values correspond to the second CSI-RS resource, and the second CQI and the L-1 differential CQI values correspond to L power control offsets (for example, powercontroloffsets) of the second CSI-RS resource.

Optionally, the first channel state information may further include at least one of the following: one or L PMIs and one or L RIs. Optionally, the L PMIs correspond to L power control offsets of the second CSI-RS resource, the L RIs correspond to the L power control offsets of the second CSI-RS resource, the PMI corresponds to one power control offset (for example, a largest power control offset or a first power control offset) in the L power control offsets of the second CSI-RS resource, and the RI corresponds to the power control offset (for example, the largest power control offset or the first power control offset) in the L power control offsets of the second CSI-RS resource. In this way, by implementing the examples, resource configuration can be optimized, and the accuracy of CSI reporting can be improved. This facilitates the data scheduling effect on the network side.

Step S703: The terminal device sends the first channel state information. Correspondingly, the network device receives the first channel state information from the terminal device.

In the communication method shown in FIG. 7, after the second indication information is received, the first channel state information may be determined based on the B CSI-RS resources indicated by the second indication information, and the first channel state information is sent. In addition, the first channel state information may include the second CQI and the L-1 differential CQI values. In this way, the resource overheads can be further reduced.

The foregoing describes the methods in embodiments of this application in detail. The following provides apparatuses in embodiments of this application.

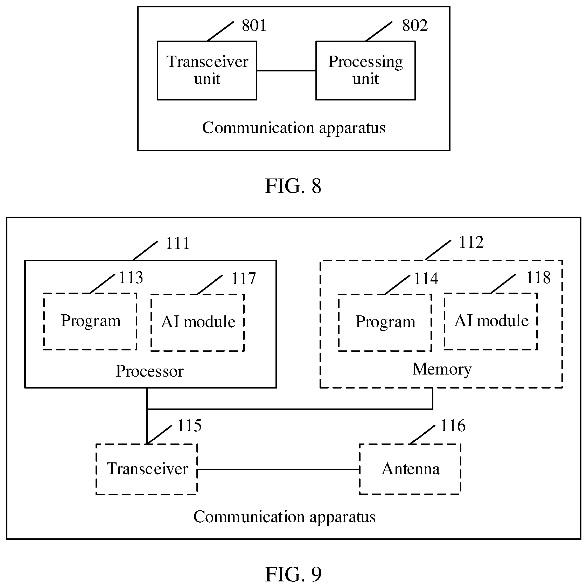

FIG. 8 is a diagram of a structure of a communication apparatus according to an embodiment of this application. The communication apparatus may include a transceiver unit 801 and a processing unit 802. The transceiver unit 801 may be an apparatus for inputting (receiving) or outputting (sending) a signal, and signal transmission is performed between the transceiver unit 801 and another network device or another component in the device.

The processing unit 802 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control the apparatus (for example, a donor node, a relay node, or a chip), execute a software program, and process data of the software program.

The communication apparatus may include a network device or a terminal device. In one aspect, when the communication apparatus is the terminal device, the transceiver unit 801 is configured to receive first indication information. The first indication information indicates M resource packages, the resource package includes one or more CSI-RS resources, and the CSI-RS resource includes a time-frequency resource.

The processing unit 802 is configured to determine first channel state information based on L resource packages in the M resource packages. The first channel state information indicates L CQIs, the L CQIs respectively correspond to L CSI-RS resources, the L CSI-RS resources respectively belong to the L resource packages, and L is greater than 1.

The transceiver unit 801 is further configured to send the first channel state information.

In some feasible examples, that the first channel state information indicates the L CQIs specifically includes: The first channel state information includes L first CQIs. The L first CQIs are in one-to-one correspondence with the L CSI-RS resources. Alternatively, the first channel state information includes one second CQI and L-1 differential CQI values. The second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

In some feasible examples, the differential CQI value is a wideband differential CQI value, and an absolute value of the wideband differential CQI value is greater than or equal to 1 or the absolute value of the wideband differential CQI value is greater than or equal to 2. Optionally, the absolute value of the wideband differential CQI value is greater than 0.

Optionally, the transceiver unit 801 is further configured to report the L-1 wideband differential CQI values based on an index value that is of the wideband differential CQI value and that is preconfigured by a network device or predefined.

Optionally, the transceiver unit 801 is further configured to report the L-1 sub-band differential CQI values based on an index value that is of the sub-band differential CQI value and that is preconfigured by a network device or predefined.

Optionally, the second CQI and the L-1 differential CQI values may include one wideband CQI and L-1 wideband differential CQI values, or may include one wideband CQI, L-1 wideband differential CQI values, and one sub-band CQI and L-1 sub-band differential CQI values that correspond to the first CSI-RS resource.

In some feasible examples, the first CSI-RS resource is a CSI-RS resource with a smallest index value in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of the network device.

In some feasible examples, the first channel state information further includes one first PMI or L second PMIs. The first PMI corresponds to the L CSI-RS resources, and the L second PMIs are in one-to-one correspondence with the L CSI-RS resources.

In some feasible examples, the L first CQIs are obtained through calculation respectively based on the L second PMIs; or the second CQI and the L-1 differential CQI values are obtained through calculation respectively based on the L second PMIs; or the L first CQIs are obtained through calculation based on the first PMI; or the second CQI and the L-1 differential CQI values are obtained through calculation based on the first PMI.

In some feasible examples, the processing unit 802 is further configured to: determine the first PMI based on the CSI-RS resource with the smallest index value in the L CSI-RS resources; or determine the first PMI based on a CSI-RS resource with highest power in the L CSI-RS resources; or determine the first PMI based on one of the L CSI-RS resources indicated by the network device.

In some feasible examples, the first channel state information further includes one first RI or L second RIs. The first RI corresponds to the L CSI-RS resources, and the L second RIs are in one-to-one correspondence with the L CSI-RS resources.

Optionally, the L first CQIs are obtained through calculation respectively based on the L second RIs; or the second CQI and the L-1 differential CQI values are obtained through calculation respectively based on the L second RIs; or the L first CQIs are obtained through calculation based on the first RI; or the second CQI and the L-1 differential CQI values are obtained through calculation based on the first RI.

Optionally, the first channel state information further includes L indexes, and the L indexes are respectively indexes of the L CSI-RS resources.

In some feasible examples, the processing unit 802 is further configured to determine X CSI-RS resource combinations. Each of the X CSI-RS resource combinations includes K CSI-RS resources, the K CSI-RS resources respectively belong to K different resource packages, and the K resource packages include the M resource packages.

Optionally, the transceiver unit 801 is further configured to receive indication information #A. The indication information #A indicates the X CSI-RS resource combinations.

Optionally, the indication information #A and the first indication information are carried in a same piece of signaling.

In some feasible examples, the first channel state information further includes an index of a first CSI-RS resource combination in the X CSI-RS resource combinations or an index of one CSI-RS resource in the first CSI-RS resource combination. The first CSI-RS resource combination includes the L CSI-RS resources.

In some feasible examples, CSI-RS resources in at least two of the M resource packages have a same time domain resource and different frequency domain resources; or CSI-RS resources in at least two of the M resource packages have a same time-frequency resource.

Optionally, the transceiver unit 801 is further configured to receive indication information #B. The indication information #B indicates the L resource packages.

In some feasible examples, the processing unit 802 is further configured to determine a first quantity. The first quantity is a quantity of processing units occupied by the terminal device to calculate the first channel state information corresponding to the L CSI-RS resources, and the first quantity is a positive integer less than or equal to L.

Optionally, the transceiver unit 801 is further configured to send indication information #C. The indication information #C indicates the first quantity.

In some feasible examples, the L resource packages include B CSI-RS resources, and the processing unit 802 is further configured to determine a second quantity. The second quantity is a quantity of processing units occupied by the terminal device to calculate the first channel state information corresponding to the L resource packages, and the second quantity is a positive integer less than B.

In addition, in this aspect, when the communication apparatus is the network device, the transceiver unit 801 is configured to send first indication information. The first indication information indicates M resource packages, the resource package includes one or more CSI-RS resources, and the CSI-RS resource includes a time-frequency resource.

The transceiver unit 801 is further configured to receive first channel state information. The first channel state information indicates L CQIs, the L CQIs respectively correspond to L CSI-RS resources, the L CSI-RS resources respectively belong to L resource packages, the L resource packages belong to the M resource packages, and L is greater than 1.

In some feasible examples, that the first channel state information indicates the L CQIs specifically includes: The first channel state information includes L first CQIs. The L first CQIs are in one-to-one correspondence with the L CSI-RS resources. Alternatively, the first channel state information includes one second CQI and L-1 differential CQI values. The second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

In some feasible examples, the differential CQI value is a wideband differential CQI value, and an absolute value of the wideband differential CQI value is greater than or equal to 1 or the absolute value of the wideband differential CQI value is greater than or equal to 2.

Optionally, the transceiver unit 801 is further configured to receive, based on an index value that is of the wideband differential CQI value and that is preconfigured by the network device or predefined, the L-1 wideband differential CQI values reported by the terminal device.

Optionally, the transceiver unit 801 is further configured to receive, based on an index value that is of the sub-band differential CQI value and that is preconfigured by the network device or predefined, the L-1 sub-band differential CQI values reported by the terminal device.

Optionally, the L first CQIs include L wideband CQIs corresponding to the L CSI-RS resources, or the L wideband CQIs and L sub-band CQIs that correspond to the L CSI-RS resources. The L sub-band CQIs include L sub-band CQIs of sub-bands corresponding to the L CSI-RS resources, or include one sub-band CQI of each of L sub-bands corresponding to the L CSI-RS resources.

Optionally, the second CQI and the L-1 differential CQI values may include one wideband CQI and L-1 wideband differential CQI values, or may include one wideband CQI, L-1 wideband differential CQI values, and one sub-band CQI and L-1 sub-band differential CQI values that correspond to the first CSI-RS resource.

In some feasible examples, the first CSI-RS resource is a CSI-RS resource with a smallest index value in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of the network device.

In some feasible examples, the first channel state information further includes one first PMI or L second PMIs. The first PMI corresponds to the L CSI-RS resources, and the L second PMIs are in one-to-one correspondence with the L CSI-RS resources.

In some feasible examples, the L first CQIs are determined respectively based on the L second PMIs; or the second CQI and the L-1 differential CQI values are determined respectively based on the L second PMIs; or the L first CQIs are obtained through calculation based on the first PMI; or the second CQI and the L-1 differential CQI values are obtained through calculation based on the first PMI.

In some feasible examples, the first channel state information further includes one first RI or L second RIs. The first RI corresponds to the L CSI-RS resources, and the L second RIs are in one-to-one correspondence with the L CSI-RS resources.

Optionally, the first channel state information further includes L indexes, and the L indexes are respectively indexes of the L CSI-RS resources.

In some feasible examples, the first channel state information further includes an index of a first CSI-RS resource combination in X CSI-RS resource combinations or an index of one CSI-RS resource in the first CSI-RS resource combination. The first CSI-RS resource combination includes the L CSI-RS resources, each of the X CSI-RS resource combinations includes K CSI-RS resources, the K CSI-RS resources respectively belong to K different resource packages, and the K resource packages include the M resource packages.

Optionally, the transceiver unit 801 is further configured to send indication information #A. The indication information #A indicates the X CSI-RS resource combinations.

Optionally, the indication information #A and the first indication information are carried in a same piece of signaling.

In some feasible examples, CSI-RS resources in at least two of the M resource packages have a same time domain resource and different frequency domain resources; or CSI-RS resources in at least two of the M resource packages have a same time-frequency resource.

Optionally, the transceiver unit 801 is further configured to send indication information #B. The indication information #B indicates the L resource packages.

Optionally, the transceiver unit 801 is further configured to receive indication information #C. The indication information #C indicates a first quantity. The first quantity is a quantity of processing units occupied by the terminal device to calculate the first channel state information corresponding to the L CSI-RS resources, and the first quantity is a positive integer less than or equal to L.

In another aspect, when the communication apparatus is the terminal device, the transceiver unit 801 is configured to receive first indication information. The first indication information indicates M resource packages, the resource package includes one or more channel state information reference signal CSI-RS resources, and the CSI-RS resource includes a time-frequency resource.

The processing unit 802 is configured to determine second channel state information based on L resource packages in the M resource packages. The second channel state information includes one CQI, the CQI corresponds to a second CSI-RS resource, the second CSI-RS resource is included in the L resource packages, and L is greater than 1.

The transceiver unit 801 is further configured to send the second channel state information.

In some feasible examples, the second channel state information further includes at least one of the following corresponding to the second CSI-RS resource: one PMI, one RI, and one index.

In some feasible examples, CSI-RS resources in at least two of the M resource packages have a same time domain resource and different frequency domain resources; or CSI-RS resources in at least two of the M resource packages have a same time-frequency resource.

Optionally, the transceiver unit 801 is further configured to receive indication information #B. The indication information #B indicates the L resource packages.

In some feasible examples, the L resource packages include B CSI-RS resources, and the processing unit 802 is further configured to determine a second quantity. The second quantity is a quantity of processing units occupied by the terminal device to calculate the second channel state information corresponding to the L CSI-RS resources, and the second quantity is a positive integer less than B.

In addition, in the another aspect, when the communication apparatus is the network device, the transceiver unit 801 is configured to send first indication information. The first indication information indicates M resource packages, the resource package includes one or more CSI-RS resources, and the CSI-RS resource includes a time-frequency resource.

The transceiver unit 801 is further configured to receive second channel state information. The second channel state information indicates L CQIs, the L CQIs respectively correspond to L CSI-RS resources, the L CSI-RS resources respectively belong to L resource packages, the L resource packages belong to the M resource packages, and L is greater than 1.

In some feasible examples, the second channel state information further includes at least one of the following corresponding to a second CSI-RS resource: one PMI, one RI, and one index.

In some feasible examples, CSI-RS resources in at least two of the M resource packages have a same time domain resource and different frequency domain resources; or CSI-RS resources in at least two of the M resource packages have a same time-frequency resource.

Optionally, the transceiver unit 801 is further configured to send indication information #B. The indication information #B indicates the L resource packages.

In still another aspect, when the communication apparatus is the terminal device, the transceiver unit 801 is configured to receive second indication information. The second indication information indicates B CSI-RS resources, and the CSI-RS resource includes a time-frequency resource.

The processing unit 802 is configured to determine a second quantity based on the second indication information. The second quantity is a quantity of CSI processing units occupied for calculating channel state information, and the second quantity is a positive integer less than B.

In some feasible examples, the B CSI-RS resources are CSI-RS resources included in C CSI-RS resource combinations.

In some feasible examples, the B CSI-RS resources include C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit.

In some feasible examples, the second quantity is equal to C+E-1.

Each of the C CSI-RS resource combinations has a same quantity of CSI-RS resources, and E is a quantity of CSI-RS resources in the first CSI-RS resource combination.

E is a quantity of CSI-RS resources in a CSI-RS resource combination with a largest quantity of CSI-RS resources in the C CSI-RS resource combinations.

In some feasible examples, the transceiver unit 801 is further configured to send channel state information. The channel state information includes an index of the first CSI-RS resource combination, or the channel state information includes an index of one CSI-RS resource in the first CSI-RS resource combination.

In some feasible examples, the channel state information includes at least one of the following: one or L CQIs, one or L PMIs, and one or L RIs.

The L CQIs correspond to L CSI-RS resources, the L PMIs correspond to the L CSI-RS resources, and the L RIs correspond to the L CSI-RS resources. The L CSI-RS resources are CSI-RS resources included in the first CSI-RS resource combination, the first CSI-RS resource combination includes a first CSI-RS resource, the CQI the first CSI-RS resource, the PMI the first CSI-RS resource, and the RI the first CSI-RS resource.

In some feasible examples, the at least one of the CSI-RS resources that are in the B CSI-RS resources and that are other than the C reference resources and the first CSI-RS resource combination is not an active CSI-RS resource, and a CSI-RS port of the at least one of the CSI-RS resources that are in the B CSI-RS resources and that are other than the C reference resources and the first CSI-RS resource combination is not an active CSI-RS port.

In addition, in the still another aspect, when the communication apparatus is the network device, the transceiver unit 801 is configured to send second indication information. The second indication information indicates B CSI-RS resources, and the CSI-RS resource includes a time-frequency resource.

In some feasible examples, the B CSI-RS resources are CSI-RS resources included in C CSI-RS resource combinations.

In some feasible examples, the processing unit 802 is further configured to determine a second quantity. The second quantity is a quantity of CSI processing units occupied for calculating channel state information, and the second quantity is a positive integer less than B.

In some feasible examples, the B CSI-RS resources include C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit.

In some feasible examples, the second quantity is equal to C+E-1.

Each of the C CSI-RS resource combinations has a same quantity of CSI-RS resources, and E is a quantity of CSI-RS resources in the first CSI-RS resource combination.

E is a quantity of CSI-RS resources in a CSI-RS resource combination with a largest quantity of CSI-RS resources in the C CSI-RS resource combinations.

In some feasible examples, the transceiver unit 801 is further configured to receive channel state information. The channel state information includes an index of the first CSI-RS resource combination, or the channel state information includes an index of one CSI-RS resource in the first CSI-RS resource combination.

In some feasible examples, the channel state information includes at least one of the following: one or L CQIs, one or L PMIs, and one or L RIs.

The L CQIs correspond to L CSI-RS resources, the L PMIs correspond to the L CSI-RS resources, and the L RIs correspond to the L CSI-RS resources. The L CSI-RS resources are CSI-RS resources included in the first CSI-RS resource combination, the first CSI-RS resource combination includes a first CSI-RS resource, the CQI the first CSI-RS resource, the PMI the first CSI-RS resource, and the RI the first CSI-RS resource.

In some feasible examples, the at least one of the CSI-RS resources that are in the B CSI-RS resources and that are other than the C reference resources and the first CSI-RS resource combination is not an active CSI-RS resource, and a CSI-RS port of the at least one of the CSI-RS resources that are in the B CSI-RS resources and that are other than the C reference resources and the first CSI-RS resource combination is not an active CSI-RS port.

For implementations of the transceiver unit 801 and the processing unit 802, refer to the related descriptions of the method embodiment shown in FIG. 2, FIG. 4, FIG. 5, FIG. 6, or FIG. 7. Details are not described herein again.

FIG. 9 is a diagram of a structure of another communication apparatus according to an embodiment of this application. It may be understood that the communication apparatus includes a form like a module, a unit, an element, a circuit, or an interface, to be properly configured together to perform the present solution. The communication apparatus may be a RAN node, a terminal, a core network device, or another network device, or may be a part (for example, a chip) in these devices, and is configured to implement the method described in the method embodiments.

As shown in FIG. 9, the communication apparatus may include one or more processors 111. The processor 111 may also be referred to as a processing unit, and may implement a specific control function. The processor 111 may be a general-purpose processor, a dedicated processor, or the like. For example, the processor 111 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

In an optional design, the processor 111 may include a program 113 (which may also be referred to as code or instructions sometimes), and the program 113 may be run on the processor 111, so that the communication apparatus performs the method described in the method embodiments.

In another optional design, the processor 111 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus may include a circuit, and the circuit may implement the sending, receiving, or communication function in the foregoing method embodiments.

Optionally, the communication apparatus may include one or more memories 112, and the memory 112 stores a program 114 (which may also be referred to as code or instructions sometimes). The program 114 may be run on the processor 111, so that the communication apparatus performs the method described in the foregoing method embodiments.

Optionally, the processor 111 may include an AI module 117, and/or the memory 112 may include an AI module 118. The AI module is configured to implement an AI-related function. The AI module may be implemented by using software, hardware, or a combination of the software and the hardware. For example, the AI module may include an RIC module. For another example, the AI module may be a near-real-time RIC or a non-real-time RIC.

Optionally, the processor 111 and/or the memory 112 may further store data. The processor and the memory may be separately disposed, or may be integrated. For example, the correspondence described in the foregoing method embodiments may be stored in the memory or stored in the processor.

Optionally, the communication apparatus may further include a transceiver 115 and/or an antenna 116. The processor 111 may also be sometimes referred to as a processing unit, and controls a communication apparatus (for example, a RAN node or a terminal). The transceiver 115 may also be referred to as a transceiver unit, a transceiver machine, a transceiver circuit, a transceiver, or the like, and is configured to implement the receiving and sending functions of the communication apparatus through the antenna 116.

Optionally, the communication apparatus may be configured to perform any method described in FIG. 2, FIG. 4, FIG. 5, FIG. 6, or FIG. 7 in embodiments of this application.

In an embodiment, the communication apparatus may be a terminal device, or may be an apparatus in the terminal device, or may be an apparatus that can be used together with the terminal device. When computer program instructions stored in the memory 112 are executed, the processor 111 is configured to perform an operation performed by the processing unit 802 in the foregoing embodiments. The transceiver 115 is configured to perform an operation performed by the transceiver unit 801 in the foregoing embodiments. The transceiver 115 is further configured to send information to another communication apparatus other than the communication apparatus. The terminal device or the apparatus in the terminal device may be further configured to perform any method performed by the terminal device in the method embodiment in FIG. 2, FIG. 4, FIG. 5, FIG. 6, or FIG. 7. Details are not described herein again.

In an embodiment, the communication apparatus may be a network device, or may be an apparatus in the network device, or may be an apparatus that can be used together with the network device. When computer program instructions stored in the memory 112 are executed, the processor 111 is configured to control the transceiver 115 to perform an operation performed by the transceiver unit 801 in the foregoing embodiments. The transceiver 115 is further configured to receive information from another communication apparatus other than the communication apparatus. The network device or the apparatus in the network device may be further configured to perform any method performed by the network device in the method embodiment in FIG. 2, FIG. 4, FIG. 5, FIG. 6, or FIG. 7. Details are not described herein again.

The processor and the transceiver described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, and the like. The processor and the transceiver may be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiment may be a network device or a terminal device. However, a scope of the apparatus described in this application is not limited thereto, and the structure of the communication apparatus may not be limited by FIG. 9. The apparatus may be an independent device, or may be a part of a larger device. For example, the communication apparatus may be:
(1) an independent integrated circuit IC, a chip, or a chip system or subsystem;
(2) a set of one or more ICs, where optionally, the IC set may include a storage part configured to store data and/or instructions;
(3) an ASIC, for example, a modem (MSM);
(4) a module that can be embedded in another device; or
(5) the foregoing terminal device or network device.

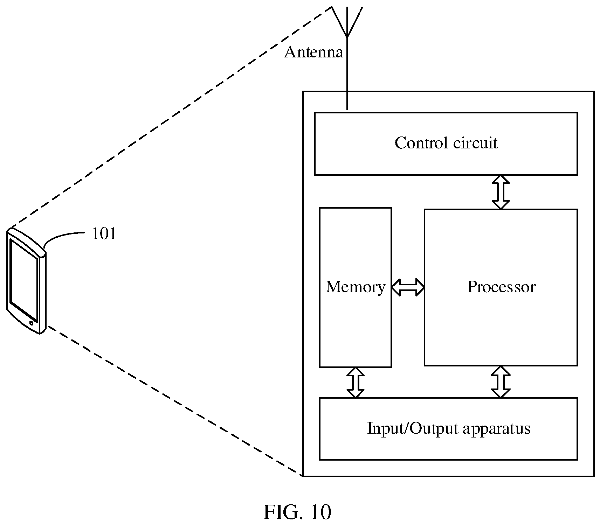

FIG. 10 is a diagram of a structure of a terminal device according to an embodiment of this application. For ease of description, FIG. 10 shows only main parts of the terminal device. As shown in FIG. 10, the terminal device 101 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to receive and send a radio frequency signal in an electromagnetic wave form. The input/output apparatus, for example, a touchscreen, a display, or a keyboard, is mainly configured to: receive data entered by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal device, the radio frequency circuit receives a radio frequency signal through the antenna. The radio frequency signal is further converted into a baseband signal, and the baseband signal is output to the processor. The processor converts the baseband signal into data, and processes the data.

For ease of description, only one memory and one processor are shown in FIG. 10. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 10 integrates functions of the baseband processor and the central processing unit. A person skilled in the art may understand that the baseband processor and the central processing unit may be processors independent of each other, and are connected to each other by using a technology like a bus. A person skilled in the art may understand that the terminal device may include a plurality of baseband processors to adapt to different network standards, the terminal device may include a plurality of central processing units to enhance a processing capability of the terminal device, and parts of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit of the terminal device 101, and the processor having a processing function may be considered as a processing unit of the terminal device 101. The transceiver unit may also be referred to as a transceiver, a transceiver machine, a transceiver apparatus, or the like. Optionally, a component that is in the transceiver unit and that is configured to implement the receiving function may be considered as a receiving unit, and a component that is in the transceiver unit and that is configured to implement the sending function may be considered as a sending unit. That is, the transceiver unit includes the receiving unit and the sending unit. For example, the receiving unit may also be referred to as a receiver machine, a receiver, a receiving circuit, or the like, and the sending unit may also be referred to as a transmitter machine, a transmitter, a transmitting circuit, or the like. Optionally, the receiving unit and the sending unit may be one integrated unit, or may be a plurality of independent units. The receiving unit and the sending unit may be at one geographical location, or may be distributed at a plurality of geographical locations.

In an embodiment, the transceiver unit is configured to perform an operation performed by the transceiver unit 801 in the foregoing embodiments. The processing unit is configured to perform an operation performed by the processing unit 802 in the foregoing embodiments. The terminal device 101 may be further configured to perform any method performed by the terminal device or the network device in the method embodiment in FIG. 2, FIG. 4, FIG. 5, FIG. 6, or FIG. 7. Details are not described herein again.

An embodiment of this application further provides a computer-readable storage medium, and the computer-readable storage medium stores a computer program. When the program is executed by a processor, a procedure related to the terminal device in the communication method provided in the foregoing method embodiments may be implemented.

An embodiment of this application further provides a computer-readable storage medium, and the computer-readable storage medium stores a computer program. When the program is executed by a processor, a procedure related to the network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When component modules of the foregoing device are implemented in a form of a software functional unit and sold or used as an independent product, the component modules may be stored in a computer-readable storage medium.

An embodiment of this application further provides a chip system, including at least one processor and a communication interface. The communication interface and the at least one processor are interconnected through a line. The at least one processor is configured to run a computer program or instructions, to perform some or all of the steps recorded in any one of the method embodiments in FIG. 2, FIG. 4, FIG. 5, FIG. 6, or FIG. 7. The chip system may include a chip, or may include the chip and another discrete component.

An embodiment of this application further provides a communication system. The system includes a terminal device and a network device. For specific descriptions, refer to any communication method shown in FIG. 2, FIG. 4, FIG. 5, FIG. 6, or FIG. 7.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, the unit division is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one location, or may be distributed on a plurality of network units. Some or all of the units may be selected based on an actual requirement to achieve the objectives of the solutions of the embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of this application essentially, or the part contributing to the technologies, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

A sequence of the steps of the method in embodiments of this application may be adjusted, combined, or removed based on an actual requirement. Steps in each embodiment may be partially performed (for example, the terminal device may not perform a step performed by the terminal device in the foregoing embodiments). An execution sequence of different steps may be changed. The embodiments described in this specification may be combined with other embodiments, different embodiments may be combined with each other, and different steps of different embodiments in this specification may be combined.

The modules/units in the apparatuses in embodiments of this application may be combined, divided, and deleted based on an actual requirement.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or alternative embodiment exclusive from another embodiment.

Terms "first", "second", "third", "fourth", and the like (if any) in embodiments of this application are used to distinguish between similar objects, but not necessarily describe a specific order or sequence.

In embodiments of this application, "include" may be an inclusion relationship, or may be an equal relationship. For example, if A includes B, A may include other content in addition to B, or A and B are the same content.

In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate three cases: Only A exists, both A and B exist, or only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In conclusion, the foregoing embodiments are merely intended to describe the technical solutions of this application, but not to limit this application. Although this application is described in detail with reference to the foregoing embodiments, a person of ordinary skill in the art should understand that the technical solutions described in the foregoing embodiments may still be modified, or some technical features in the technical solutions may be equivalently replaced. These modifications or replacements do not make the essence of the corresponding technical solutions fall outside the scope of the technical solutions of embodiments of this application.

## Claims

1. A communication method, comprising:
receiving a channel state information CSI reporting configuration, wherein the CSI reporting configuration indicates M resource packages, the resource package indicates one or more channel state information reference signal CSI-RS resources, CSI-RS resources in the M resource packages are comprised in a CSI-RS resource set, and the CSI-RS resource comprises a time-frequency resource;
determining first channel state information based on L resource packages in the M resource packages, wherein the first channel state information indicates L channel quality indicators CQIs, the L CQIs respectively correspond to L CSI-RS resources, the L CSI-RS resources respectively belong to the L resource packages, and L is greater than 1; and
sending the first channel state information.

2. The communication method according to claim 1, wherein that the first channel state information indicates the L CQIs specifically comprises:
the first channel state information comprises L first CQIs, wherein the L first CQIs are in one-to-one correspondence with the L CSI-RS resources; or
the first channel state information comprises one second CQI and L-1 differential CQI values, wherein the second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

3. The communication method according to claim 2, wherein the differential CQI value is a wideband differential CQI value, and an absolute value of the wideband differential CQI value is greater than or equal to 1 or the absolute value of the wideband differential CQI value is greater than or equal to 2.

4. The communication method according to claim 2, wherein the first CSI-RS resource is a CSI-RS resource with a smallest index in the L CSI-RS resources; or the first CSI-RS resource is a CSI-RS resource with a largest quantity of ports in the L CSI-RS resources; or the first CSI-RS resource is a CSI-RS resource with a largest power offset in the L CSI-RS resources; or the first CSI-RS resource is a CSI-RS resource with a largest synchronization signal power offset in the L CSI-RS resources; or the first CSI-RS resource is indicated through configuration information of a network device.

5. The communication method according to any one of claims 1 to 4, wherein the first channel state information further comprises one first precoding matrix indicator PMI or L second PMIs, the first PMI corresponds to the L CSI-RS resources, and the L second PMIs are in one-to-one correspondence with the L CSI-RS resources.

6. The communication method according to claim 5, wherein the L first CQIs are determined respectively based on the L second PMIs; or the second CQI and the L-1 differential CQI values are determined respectively based on the L second PMIs; or the L first CQIs are obtained through calculation based on the first PMI; or the second CQI and the L-1 differential CQI values are obtained through calculation based on the first PMI.

7. The communication method according to claim 5, wherein the method further comprises:
determining the first PMI based on the CSI-RS resource with the smallest index in the L CSI-RS resources; or
determining the first PMI based on the CSI-RS resource with the largest synchronization signal power offset in the L CSI-RS resources; or
determining the first PMI based on one of the L CSI-RS resources indicated by the network device.

8. The communication method according to any one of claims 1 to 7, wherein the first channel state information further comprises one first rank indicator RI or L second RIs, the first RI corresponds to the L CSI-RS resources, and the L second RIs are in one-to-one correspondence with the L CSI-RS resources.

9. The communication method according to any one of claims 1 to 8, wherein the method further comprises:
determining X CSI-RS resource combinations, wherein each of the X CSI-RS resource combinations comprises K CSI-RS resources, the K CSI-RS resources are respectively associated with K different resource packages, and the K resource packages comprise the M resource packages.

10. The communication method according to claim 9, wherein the first channel state information further comprises an index of a first CSI-RS resource combination in the X CSI-RS resource combinations or an index of one CSI-RS resource in the first CSI-RS resource combination, and the first CSI-RS resource combination comprises the L CSI-RS resources.

11. The communication method according to any one of claims 1 to 10, wherein
CSI-RS resources in at least two of the M resource packages have a same time domain resource and different frequency domain resources; or
CSI-RS resources in at least two of the M resource packages have a same time-frequency resource.

12. The communication method according to any one of claims 1 to 11, wherein the method further comprises:
determining a first quantity, wherein the first quantity is a quantity of processing units occupied for calculating the first channel state information on the L CSI-RS resources, and the first quantity is a positive integer less than or equal to L.

13. The communication method according to any one of claims 1 to 11, wherein the L resource packages comprise B CSI-RS resources, and the method further comprises:
determining a second quantity, wherein the second quantity is a quantity of processing units occupied for calculating the first channel state information corresponding to the L resource packages, and the second quantity is a positive integer less than B.

14. A communication method, comprising:
receiving first indication information, wherein the first indication information indicates M resource packages, the resource package is associated with one or more channel state information reference signal CSI-RS resources, and the CSI-RS resource comprises a time-frequency resource;
determining second channel state information based on L resource packages in the M resource packages, wherein the second channel state information comprises one channel quality indicator CQI, the CQI corresponds to a second CSI-RS resource, the second CSI-RS resource is comprised in the L resource packages, and L is greater than 1; and
sending the second channel state information.

15. The communication method according to claim 14, wherein the second channel state information further comprises at least one of the following corresponding to the second CSI-RS resource: one precoding matrix indicator PMI, one rank indicator RI, or one index.

16. The communication method according to claim 14 or 15, wherein
CSI-RS resources in at least two of the M resource packages have a same time domain resource and different frequency domain resources; or
CSI-RS resources in at least two of the M resource packages have a same time-frequency resource.

17. The communication method according to any one of claims 14 to 16, wherein the L resource packages are associated with B CSI-RS resources, and the method further comprises:
determining a second quantity, wherein the second quantity is a quantity of processing units occupied by a terminal device to calculate the second channel state information corresponding to the L resource packages, and the second quantity is a positive integer less than B.

18. A communication method, comprising:
receiving second indication information, wherein the second indication information indicates B channel state information reference signal CSI-RS resources, and the CSI-RS resource comprises a time-frequency resource; and
determining a second quantity based on the second indication information, wherein the second quantity is a quantity of CSI processing units occupied for calculating channel state information, and the second quantity is a positive integer less than B.

19. The communication method according to claim 18, wherein the B CSI-RS resources are CSI-RS resources comprised in C CSI-RS resource combinations.

20. The communication method according to claim 19, wherein the B CSI-RS resources comprise C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit.

21. The communication method according to claim 20, wherein the second quantity is equal to C+E-1; and
each of the C CSI-RS resource combinations has a same quantity of CSI-RS resources, wherein E is a quantity of CSI-RS resources in the first CSI-RS resource combination; or
E is a quantity of CSI-RS resources in a CSI-RS resource combination that comprises a largest quantity of CSI-RS resources in the C CSI-RS resource combinations.

22. The communication method according to claim 20 or 21, wherein the method further comprises:
sending the channel state information, wherein the channel state information comprises an index of the first CSI-RS resource combination, or the channel state information comprises an index of one CSI-RS resource in the first CSI-RS resource combination.

23. The communication method according to claim 20, wherein
the channel state information comprises at least one of the following: one or L channel quality indicators CQIs, one or L precoding matrix indicators PMIs, and one or L rank indicators RIs, wherein
the L CQIs correspond to L CSI-RS resources, the L PMIs correspond to the L CSI-RS resources, and the L RIs correspond to the L CSI-RS resources, wherein the L CSI-RS resources are CSI-RS resources comprised in the first CSI-RS resource combination, the first CSI-RS resource combination comprises a first CSI-RS resource, the CQI corresponds to the first CSI-RS resource, the PMI corresponds to the first CSI-RS resource, and the RI corresponds to the first CSI-RS resource.

24. The communication method according to any one of claims 20 to 23, wherein the at least one of the CSI-RS resources that are in the B CSI-RS resources and that are other than the C reference resources and the first CSI-RS resource combination is not an active CSI-RS resource; and/or
a CSI-RS port of the at least one of the CSI-RS resources that is are the B CSI-RS resources and that are other than the C reference resources and the first CSI-RS resource combination is not an active CSI-RS port.

25. A communication method, comprising:
sending a CSI reporting configuration, wherein the CSI reporting configuration indicates M resource packages, the resource package indicates one or more channel state information reference signal CSI-RS resources, CSI-RS resources in the M resource packages are comprised in a CSI-RS resource set, and the CSI-RS resource comprises a time-frequency resource; and
receiving first channel state information, wherein the first channel state information indicates L channel quality indicators CQIs, the L CQIs respectively correspond to L CSI-RS resources, the L CSI-RS resources respectively belong to L resource packages, the L resource packages belong to the M resource packages, and L is greater than 1.

26. The communication method according to claim 25, wherein that the first channel state information indicates the L CQIs specifically comprises:
the first channel state information comprises L first CQIs, wherein the L first CQIs are in one-to-one correspondence with the L CSI-RS resources; or
the first channel state information comprises one second CQI and L-1 differential CQI values, wherein the second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

27. The communication method according to claim 26, wherein the differential CQI value is a wideband differential CQI value, and an absolute value of the wideband differential CQI value is greater than or equal to 1 or the absolute value of the wideband differential CQI value is greater than or equal to 2.

28. The communication method according to claim 26, wherein the first CSI-RS resource is a CSI-RS resource with a smallest index in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of a network device.

29. The communication method according to any one of claims 25 to 28, wherein the first channel state information further comprises one first precoding matrix indicator PMI or L second PMIs, the first PMI corresponds to the L CSI-RS resources, and the L second PMIs are in one-to-one correspondence with the L CSI-RS resources.

30. The communication method according to claim 29, wherein the L first CQIs are determined respectively based on the L second PMIs; or the second CQI and the L-1 differential CQI values are determined respectively based on the L second PMIs; or the L first CQIs are obtained through calculation based on the first PMI; or the second CQI and the L-1 differential CQI values are obtained through calculation based on the first PMI.

31. The communication method according to any one of claims 25 to 30, wherein the first channel state information further comprises one first rank indicator RI or L second RIs, the first RI corresponds to the L CSI-RS resources, and the L second RIs are in one-to-one correspondence with the L CSI-RS resources.

32. The communication method according to any one of claims 25 to 31, wherein the first channel state information further comprises an index of a first CSI-RS resource combination in X CSI-RS resource combinations or an index of one CSI-RS resource in the first CSI-RS resource combination, the first CSI-RS resource combination comprises the L CSI-RS resources, each of the X CSI-RS resource combinations comprises K CSI-RS resources, the K CSI-RS resources are respectively associated with K different resource packages, and the K resource packages comprise the M resource packages.

33. The communication method according to any one of claims 25 to 32, wherein
CSI-RS resources in at least two of the M resource packages have a same time domain resource and different frequency domain resources; or
CSI-RS resources in at least two of the M resource packages have a same time-frequency resource.

34. A communication method, comprising:
sending first indication information, wherein the first indication information indicates M resource packages, the resource package is associated with one or more channel state information reference signal CSI-RS resources, and the CSI-RS resource comprises a time-frequency resource; and
receiving second channel state information, wherein the first channel state information indicates L channel quality indicators CQIs, the L CQIs respectively correspond to L CSI-RS resources, the L CSI-RS resources are respectively associated with L resource packages, the L resource packages belong to the M resource packages, and L is greater than 1.

35. The communication method according to claim 34, wherein the second channel state information further comprises at least one of the following corresponding to the second CSI-RS resource: one precoding matrix indicator PMI, one rank indicator RI, or one index.

36. The communication method according to claim 34 or 35, wherein CSI-RS resources in at least two of the M resource packages have a same time domain resource and different frequency domain resources; or
CSI-RS resources in at least two of the M resource packages have a same time-frequency resource.

37. A communication method, comprising:
sending second indication information, wherein the second indication information indicates B channel state information reference signal CSI-RS resources, and the CSI-RS resource comprises a time-frequency resource.

38. The communication method according to claim 37, wherein the method further comprises:
determining a second quantity, wherein the second quantity is a quantity of CSI processing units occupied for calculating channel state information, and the second quantity is a positive integer less than B.

39. The communication method according to claim 37, wherein the B CSI-RS resources are CSI-RS resources comprised in C CSI-RS resource combinations.

40. The communication method according to claim 39, wherein the B CSI-RS resources comprise C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit.

41. The communication method according to claim 40, wherein the second quantity is equal to C+E-1; and
each of the C CSI-RS resource combinations has a same quantity of CSI-RS resources, wherein E is a quantity of CSI-RS resources in the first CSI-RS resource combination; or
E is a quantity of CSI-RS resources in a CSI-RS resource combination with a largest quantity of CSI-RS resources in the C CSI-RS resource combinations.

42. The communication method according to claim 40 or 41, wherein the method further comprises:
receiving the channel state information, wherein the channel state information comprises an index of the first CSI-RS resource combination, or the channel state information comprises an index of one CSI-RS resource in the first CSI-RS resource combination.

43. The communication method according to claim 42, wherein
the channel state information comprises at least one of the following: one or L channel quality indicators CQIs, one or L precoding matrix indicators PMIs, and one or L rank indicators RIs, wherein
the L CQIs correspond to L CSI-RS resources, the L PMIs correspond to the L CSI-RS resources, and the L RIs correspond to the L CSI-RS resources, wherein the L CSI-RS resources are CSI-RS resources comprised in the first CSI-RS resource combination, the first CSI-RS resource combination comprises a first CSI-RS resource, the CQI corresponds to the first CSI-RS resource, the PMI corresponds to the first CSI-RS resource, and the RI corresponds to the first CSI-RS resource.

44. The communication method according to any one of claims 40 to 43, wherein the at least one of the CSI-RS resources that are in the B CSI-RS resources and that are other than the C reference resources and the first CSI-RS resource combination is not an active CSI-RS resource, and a CSI-RS port of the at least one of the CSI-RS resources that are in the B CSI-RS resources and that are other than the C reference resources and the first CSI-RS resource combination is not an active CSI-RS port.

45. A communication apparatus, comprising:
a transceiver unit, configured to receive a CSI reporting configuration, wherein the CSI reporting configuration indicates M resource packages, the resource package indicates one or more channel state information reference signal CSI-RS resources, and the CSI-RS resource comprises a time-frequency resource; and
a processing unit, configured to determine first channel state information based on L resource packages in the M resource packages, wherein the first channel state information indicates L channel quality indicators CQIs, the L CQIs respectively correspond to L CSI-RS resources, the L CSI-RS resources respectively belong to the L resource packages, and L is greater than 1; and
the transceiver unit is further configured to send the first channel state information.

46. The apparatus according to claim 45, wherein that the first channel state information indicates the L CQIs specifically comprises:
the first channel state information comprises L first CQIs, wherein the L first CQIs are in one-to-one correspondence with the L CSI-RS resources; or
the first channel state information comprises one second CQI and L-1 differential CQI values, wherein the second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

47. The apparatus according to claim 46, wherein the differential CQI value is a wideband differential CQI value, and an absolute value of the wideband differential CQI value is greater than or equal to 1 or the absolute value of the wideband differential CQI value is greater than or equal to 2.

48. The apparatus according to claim 46, wherein the first CSI-RS resource is a CSI-RS resource with a smallest index in the L CSI-RS resources; or the first CSI-RS resource is a CSI-RS resource with a largest quantity of ports in the L CSI-RS resources; or the first CSI-RS resource is a CSI-RS resource with a largest power offset in the L CSI-RS resources; or the first CSI-RS resource is a CSI-RS resource with a largest synchronization signal power offset in the L CSI-RS resources; or the first CSI-RS resource is indicated through configuration information of a network device.

49. The apparatus according to any one of claims 45 to 48, wherein the first channel state information further comprises one first precoding matrix indicator PMI or L second PMIs, the first PMI corresponds to the L CSI-RS resources, and the L second PMIs are in one-to-one correspondence with the L CSI-RS resources.

50. The apparatus according to claim 49, wherein the L first CQIs are determined respectively based on the L second PMIs; or the second CQI and the L-1 differential CQI values are determined respectively based on the L second PMIs; or the L first CQIs are obtained through calculation based on the first PMI; or the second CQI and the L-1 differential CQI values are obtained through calculation based on the first PMI.

51. The apparatus according to claim 49, wherein the processing unit is further configured to: determine the first PMI based on the CSI-RS resource with the smallest index in the L CSI-RS resources; or
determine the first PMI based on the CSI-RS resource with the largest synchronization signal power offset in the L CSI-RS resources; or
determine the first PMI based on one of the L CSI-RS resources indicated by the network device.

52. The apparatus according to any one of claims 45 to 51, wherein the first channel state information further comprises one first rank indicator RI or L second RIs, the first RI corresponds to the L CSI-RS resources, and the L second RIs are in one-to-one correspondence with the L CSI-RS resources.

53. The apparatus according to any one of claims 45 to 52, wherein the processing unit is further configured to determine X CSI-RS resource combinations, wherein each of the X CSI-RS resource combinations comprises K CSI-RS resources, the K CSI-RS resources are respectively associated with K different resource packages, and the K resource packages comprise the M resource packages.

54. The apparatus according to claim 53, wherein the first channel state information further comprises an index of a first CSI-RS resource combination in the X CSI-RS resource combinations or an index of one CSI-RS resource in the first CSI-RS resource combination, and the first CSI-RS resource combination comprises the L CSI-RS resources.

55. The apparatus according to any one of claims 45 to 54, wherein
CSI-RS resources in at least two of the M resource packages have a same time domain resource and different frequency domain resources; or
CSI-RS resources in at least two of the M resource packages have a same time-frequency resource.

56. The apparatus according to any one of claims 45 to 55, wherein the processing unit is further configured to determine a first quantity, the first quantity is a quantity of processing units occupied for calculating the first channel state information on the L CSI-RS resources, and the first quantity is a positive integer less than or equal to L.

57. The apparatus according to any one of claims 45 to 56, wherein the L resource packages comprise B CSI-RS resources, and the processing unit is further configured to determine a second quantity, wherein the second quantity is a quantity of processing units occupied for calculating the first channel state information corresponding to the L resource packages, and the second quantity is a positive integer less than B.

58. A communication apparatus, comprising:
a transceiver unit, configured to receive first indication information, wherein the first indication information indicates M resource packages, the resource package is associated with one or more channel state information reference signal CSI-RS resources, and the CSI-RS resource comprises a time-frequency resource; and
a processing unit, configured to determine second channel state information based on L resource packages in the M resource packages, wherein the second channel state information comprises one channel quality indicator CQI, the CQI corresponds to a second CSI-RS resource, the second CSI-RS resource is comprised in the L resource packages, and L is greater than 1; and
the transceiver unit is further configured to send the second channel state information.

59. The apparatus according to claim 58, wherein the second channel state information further comprises at least one of the following corresponding to the second CSI-RS resource: one precoding matrix indicator PMI, one rank indicator RI, or one index.

60. The apparatus according to claim 58 or 59, wherein
CSI-RS resources in at least two of the M resource packages have a same time domain resource and different frequency domain resources; or
CSI-RS resources in at least two of the M resource packages have a same time-frequency resource.

61. The apparatus according to any one of claims 58 to 60, wherein the L resource packages are associated with B CSI-RS resources, and the processing unit is further configured to determine a second quantity, wherein the second quantity is a quantity of processing units occupied by a terminal device to calculate the second channel state information corresponding to the L resource packages, and the second quantity is a positive integer less than B.

62. A communication apparatus, comprising:
a transceiver unit, configured to receive second indication information, wherein the second indication information indicates B channel state information reference signal CSI-RS resources, and the CSI-RS resource comprises a time-frequency resource; and
a processing unit, configured to determine a second quantity based on the second indication information, wherein the second quantity is a quantity of CSI processing units occupied for calculating channel state information, and the second quantity is a positive integer less than B.

63. The apparatus according to claim 62, wherein the B CSI-RS resources are CSI-RS resources comprised in C CSI-RS resource combinations.

64. The apparatus according to claim 63, wherein the B CSI-RS resources comprise C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit.

65. The apparatus according to claim 64, wherein the second quantity is equal to C+E-1; and
each of the C CSI-RS resource combinations has a same quantity of CSI-RS resources, wherein E is a quantity of CSI-RS resources in the first CSI-RS resource combination; or
E is a quantity of CSI-RS resources in a CSI-RS resource combination that comprises a largest quantity of CSI-RS resources in the C CSI-RS resource combinations.

66. The apparatus according to claim 64 or 65, wherein the transceiver unit is further configured to send the channel state information, wherein the channel state information comprises an index of the first CSI-RS resource combination, or the channel state information comprises an index of one CSI-RS resource in the first CSI-RS resource combination.

67. The apparatus according to claim 64, wherein
the channel state information comprises at least one of the following: one or L channel quality indicators CQIs, one or L precoding matrix indicators PMIs, and one or L rank indicators RIs, wherein
the L CQIs correspond to L CSI-RS resources, the L PMIs correspond to the L CSI-RS resources, and the L RIs correspond to the L CSI-RS resources, wherein the L CSI-RS resources are CSI-RS resources comprised in the first CSI-RS resource combination, the first CSI-RS resource combination comprises a first CSI-RS resource, the CQI corresponds to the first CSI-RS resource, the PMI corresponds to the first CSI-RS resource, and the RI corresponds to the first CSI-RS resource.

68. The apparatus according to any one of claims 64 to 67, wherein the at least one of the CSI-RS resources that are in the B CSI-RS resources and that are other than the C reference resources and the first CSI-RS resource combination is not an active CSI-RS resource; and/or
a CSI-RS port of the at least one of the CSI-RS resources that are in the B CSI-RS resources and that are other than the C reference resources and the first CSI-RS resource combination is not an active CSI-RS port.

69. A communication apparatus, comprising:
a transceiver unit, configured to send a CSI reporting configuration, wherein the CSI reporting configuration indicates M resource packages, the resource package is associated with one or more channel state information reference signal CSI-RS resources, and the CSI-RS resource comprises a time-frequency resource; and
the transceiver unit is further configured to receive first channel state information, wherein the first channel state information indicates L channel quality indicators CQIs, the L CQIs respectively correspond to L CSI-RS resources, the L CSI-RS resources respectively belong to L resource packages, the L resource packages belong to the M resource packages, and L is greater than 1.

70. The apparatus according to claim 69, wherein that the first channel state information indicates the L CQIs specifically comprises:
the first channel state information comprises L first CQIs, wherein the L first CQIs are in one-to-one correspondence with the L CSI-RS resources; or
the first channel state information comprises one second CQI and L-1 differential CQI values, wherein the second CQI corresponds to one first CSI-RS resource in the L CSI-RS resources, the differential CQI value is a difference between a third CQI and the second CQI, and the third CQI corresponds to a CSI-RS resource other than the first CSI-RS resource in the L CSI-RS resources.

71. The apparatus according to claim 70, wherein the differential CQI value is a wideband differential CQI value, and an absolute value of the wideband differential CQI value is greater than or equal to 1 or the absolute value of the wideband differential CQI value is greater than or equal to 2.

72. The apparatus according to claim 70, wherein the first CSI-RS resource is a CSI-RS resource with a smallest index in the L CSI-RS resources, or a CSI-RS resource with a largest quantity of ports in the L CSI-RS resources, or a CSI-RS resource with a largest power offset in the L CSI-RS resources, or a CSI-RS resource with a largest synchronization signal power offset in the L CSI-RS resources, or a CSI-RS resource determined based on configuration information of a network device.

73. The apparatus according to any one of claims 69 to 72, wherein the first channel state information further comprises one first precoding matrix indicator PMI or L second PMIs, the first PMI corresponds to the L CSI-RS resources, and the L second PMIs are in one-to-one correspondence with the L CSI-RS resources.

74. The apparatus according to claim 73, wherein the L first CQIs are determined respectively based on the L second PMIs; or the second CQI and the L-1 differential CQI values are determined respectively based on the L second PMIs; or the L first CQIs are obtained through calculation based on the first PMI; or the second CQI and the L-1 differential CQI values are obtained through calculation based on the first PMI.

75. The apparatus according to any one of claims 69 to 74, wherein the first channel state information further comprises one first rank indicator RI or L second RIs, the first RI corresponds to the L CSI-RS resources, and the L second RIs are in one-to-one correspondence with the L CSI-RS resources.

76. The apparatus according to any one of claims 69 to 75, wherein the first channel state information further comprises an index of a first CSI-RS resource combination in X CSI-RS resource combinations or an index of one CSI-RS resource in the first CSI-RS resource combination, the first CSI-RS resource combination comprises the L CSI-RS resources, each of the X CSI-RS resource combinations comprises K CSI-RS resources, the K CSI-RS resources are respectively associated with K different resource packages, and the K resource packages comprise the M resource packages.

77. The apparatus according to any one of claims 69 to 76, wherein
CSI-RS resources in at least two of the M resource packages have a same time domain resource and different frequency domain resources; or
CSI-RS resources in at least two of the M resource packages have a same time-frequency resource.

78. A communication apparatus, comprising:
a transceiver unit, configured to send first indication information, wherein the first indication information indicates M resource packages, the resource package is associated with one or more channel state information reference signal CSI-RS resources, and the CSI-RS resource comprises a time-frequency resource; and
the transceiver unit is further configured to receive second channel state information, wherein the first channel state information indicates L channel quality indicators CQIs, the L CQIs respectively correspond to L CSI-RS resources, the L CSI-RS resources are respectively associated with L resource packages, the L resource packages belong to the M resource packages, and L is greater than 1.

79. The apparatus according to claim 78, wherein the second channel state information further comprises at least one of the following corresponding to the second CSI-RS resource: one precoding matrix indicator PMI, one rank indicator RI, or one index.

80. The apparatus according to claim 78 or 79, wherein CSI-RS resources in at least two of the M resource packages have a same time domain resource and different frequency domain resources; or
CSI-RS resources in at least two of the M resource packages have a same time-frequency resource.

81. A communication apparatus, comprising:
a transceiver unit, configured to send second indication information, wherein the second indication information indicates B channel state information reference signal CSI-RS resources, and the CSI-RS resource comprises a time-frequency resource.

82. The apparatus according to claim 81, wherein the apparatus further comprises:
a processing unit, configured to determine a second quantity, wherein the second quantity is a quantity of CSI processing units occupied for calculating channel state information, and the second quantity is a positive integer less than B.

83. The apparatus according to claim 81, wherein the B CSI-RS resources are CSI-RS resources comprised in C CSI-RS resource combinations.

84. The apparatus according to claim 83, wherein the B CSI-RS resources comprise C reference resources, the C reference resources respectively belong to the C CSI-RS resource combinations, and at least one of a CSI-RS resource that is in the B CSI-RS resources and that is other than the C reference resources and a first CSI-RS resource combination occupies no CSI processing unit.

85. The apparatus according to claim 84, wherein the second quantity is equal to C+E-1; and
each of the C CSI-RS resource combinations has a same quantity of CSI-RS resources, wherein E is a quantity of CSI-RS resources in the first CSI-RS resource combination; or
E is a quantity of CSI-RS resources in a CSI-RS resource combination with a largest quantity of CSI-RS resources in the C CSI-RS resource combinations.

86. The apparatus according to claim 84 or 85, wherein the transceiver unit is further configured to receive the channel state information, wherein the channel state information comprises an index of the first CSI-RS resource combination, or the channel state information comprises an index of one CSI-RS resource in the first CSI-RS resource combination.

87. The apparatus according to claim 86, wherein
the channel state information comprises at least one of the following: one or L channel quality indicators CQIs, one or L precoding matrix indicators PMIs, and one or L rank indicators RIs, wherein
the L CQIs correspond to L CSI-RS resources, the L PMIs correspond to the L CSI-RS resources, and the L RIs correspond to the L CSI-RS resources, wherein the L CSI-RS resources are CSI-RS resources comprised in the first CSI-RS resource combination, the first CSI-RS resource combination comprises a first CSI-RS resource, the CQI corresponds to the first CSI-RS resource, the PMI corresponds to the first CSI-RS resource, and the RI corresponds to the first CSI-RS resource.

88. The apparatus according to any one of claims 84 to 87, wherein the at least one of the CSI-RS resources that are in the B CSI-RS resources and that are other than the C reference resources and the first CSI-RS resource combination is not an active CSI-RS resource, and a CSI-RS port of the at least one of the CSI-RS resources that are in the B CSI-RS resources and that are other than the C reference resources and the first CSI-RS resource combination is not an active CSI-RS port.

89. A communication apparatus, comprising a processor and a storage medium, wherein the storage medium stores instructions, and when the instructions are run by the processor, the communication method according to any one of claims 1 to 44 is implemented.

90. A computer-readable storage medium, wherein the computer-readable storage medium comprises instructions, and when the instructions are run by a processor, the communication method according to any one of claims 1 to 44 is implemented.

91. A communication method, wherein the communication method comprises the communication method according to any one of claims 1 to 44.

92. A communication system, wherein the communication system comprises a terminal device and a network device, the terminal device is configured to perform the communication method according to any one of claims 1 to 24, and the network device is configured to perform the communication method according to any one of claims 25 to 44.
